(19) Europäisches Patentamt
European Patent Office
Office européen des brevets

(11) EP 1 962 441 A1

(12) EUROPEAN PATENT APPLICATION

(43) Date of publication:
27.08.2008 Bulletin 2008/35

(51) Int Cl.:
H04B 7/06 (2006.01) H01Q 3/26 (2006.01)

(21) Application number: 08101949.9

(22) Date of filing: 25.02.2008

(84) Designated Contracting States:
AT BE BG CH CY CZ DE DK EE ES FI FR GB GR HR HU IE IS IT LI LT LU LV MC MT NL NO PL PT RO SE SI SK TR
Designated Extension States:
AL BA MK RS

(30) Priority: 26.02.2007 JP 2007045516

(71) Applicant: Fujitsu Ltd.
Kawasaki-shi, Kanagawa 211-8588 (JP)

(72) Inventors:
- SATO,, Tomonori
c/o Fujitsu Limited
Kawasaki-shi, Kanagawa 211-8588 (JP)
- TSUTSUI,, Masafumi
c/o Fujitsu Limited
Kawasaki-shi, Kanagawa 211-8588 (JP)

(74) Representative: Stebbing, Timothy Charles
Haseltine Lake
5th Floor Lincoln House
300 High Holborn
London, WC1V 7JH (GB)

# (54) A method of controlling beam weight detection and receiver

(57) A receiver (2) in a MIMO wireless communication system including a transmitter (100) that multiplies a plurality of transmission signals with a plurality of beam weights to transmit the transmission signal through a plurality of antennas. The receiver receives the transmission signals, detects a specific beam weight of which reception state is a specific state among a plurality of to-be-detected beam weights, and notifies the transmitter of the detection of the specific beam weight. The receiver preferably includes a monitoring unit (27) that monitors a state of variation in the beam weight by performing a statistics process on history of previously-detected beam weights. Also included is a control unit (28) that controls the number of the-to-be-detected beam weights or a detection timing of the specific beam weight according to a monitoring result.

FIG. 1

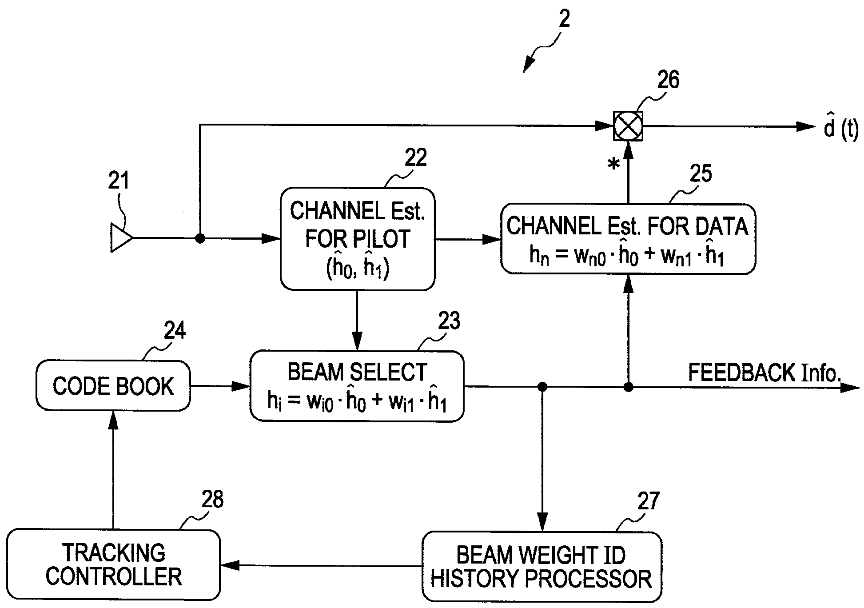


EP 1 962 441 A1

## Description

This application is related to and claims priority of Japanese Patent Application No. JP 2007-045516, filed on February 26, 2007.

The invention relates to a beam weight detection control method and a receiver, and more particularly, to a technique suitable for a mobile communication scheme for performing transmission using precoding such as a MIMO (Multi Input Multi Output) communication scheme for performing multi-beam selection.

In a MIMO communication scheme, a plurality of antennas is used for both the transmission and reception sides. That is, a transmitter is provided with a plurality of transmission antennas, and a receiver is provided with a plurality of reception antennas. The transmitter transmits independent data streams through the plurality of transmission antennas. The receiver receives a signal through each reception antenna. The receiver extracts a plurality of transmitted signals (data streams) mixed on a channel from the received signal by using a channel estimation value. As a result, in the MIMO technology, a transmission rate can be improved without frequency spectrum spreading, so that a communication distance can be increased. In a S3G (Super 3rd Generation) wireless communication technology, high speed transmission using the MIMO scheme is important.

There is a limitation on distance (or area) where MIMO can be implemented. Therefore, a downlink transmission scheme, a modulation scheme such as QPSK (Quadrature Phase Shift Keying) and 16QAM (Quadrature Amplitude Modulation), or a coding scheme needs to be adaptively switched according to a distance from a base station. Since such switching control frequently occurs, multiple transceiver circuits need to be individually provided in each of the base and mobile stations.

In a MIMO precoding scheme in which multiple beam selection is performed, data streams are transmitted in units of a directional beam, and a multiplicity of MIMO is controlled through beam selection (beam weight control) using feedback information. Therefore, in the MIMO precoding scheme, the aforementioned multiple transceiver circuits need not be individually provided. One example of a technology for the MIMO precoding is disclosed in Japanese Laid-Open Patent Publication No. 2005-522086.

Embodiments of the invention may reduce power consumption of a receiver, for example, a mobile station (MS) by reducing a beam weight detection processing time.

Also, embodiments may effectively use wireless resources by reducing a beam weight information amount that is sent to a transmitter, for example, a base station (BS).

The invention is not intended to be limited to the aforementioned effects. Accordingly, other aspects of the present invention are operable to obtain functions and effects from constructions according the later-described preferred embodiments that cannot be obtained from conventional technologies.

According to one aspect of the invention, a receiver in a wireless communication system, which system includes a transmitter that multiplies a plurality of transmission signals with a plurality of beam weights to transmit the transmission signal through a plurality of antennas, receives the transmission signals, detects a specific beam weight that has a reception state that is a specific state among a plurality of to-be-detected beam weights, and notifies the transmitter of the detection of the specific beam weight. The receiver also includes a monitoring unit that monitors a state of variation in the beam weight by performing a statistics process on history of previously-detected beam weights. Also included is a control unit that controls the number of the-to-be-detected beam weights or a detection timing of the specific beam weight according to a monitoring result.

Reference is made, by way of example only, to the accompanying drawings in which:

FIG. 1 is a block diagram illustrating a main configuration of a mobile station applied to a MIMO communication system according to a first embodiment of the system;
FIG. 2 is a flowchart that explains an operation of an exemplary mobile station illustrated in FIG. 1, for example, a beam weight detection process;
FIG. 3 is a block diagram illustrating a main configuration of a mobile station applied to a MIMO communication system according to a second embodiment of the system;
FIG. 4 is a flowchart that explains an exemplary operation of the mobile station illustrated in FIG. 3, for example, a beam weight detection process;
FIG. 5 is a block diagram illustrating a main configuration of a mobile station applied to a MIMO communication system according to a third embodiment of the system;
FIG. 6 is an exemplary view that explains a determination condition used for the mobile station illustrated in FIG. 5;
FIG. 7 is a flowchart that explains an exemplary operation of the mobile station illustrated in FIG. 5, for example, a beam weight detection process;
FIG. 8 is a flowchart that explains an exemplary operation of a mobile station according to a fourth embodiment of the system, for example, a beam weight detection process;
FIG. 9 is a view that explains an exemplary determination condition used for the beam weight detection process illustrated in FIG. 8;

FIG. 10 is a view that explains an exemplary determination condition used for the beam weight detection process illustrated in FIG. 8;

FIG. 11 is a block diagram illustrating a main configuration of a mobile station applied to a MIMO communication system according to a fifth embodiment of the system;

FIG. 12 is a view that explains an exemplary determination condition used for the mobile station illustrated in FIG. 11;

FIG. 13 is a flowchart that explains an exemplary operation of the mobile station illustrated in FIG. 11, for example, a beam weight detection process;

FIG. 14 is a block diagram illustrating a main configuration of a mobile station applied to a MIMO communication system according to a sixth embodiment of the system;

FIG. 15 is a view that explains an exemplary determination condition used for the beam weight detection process illustrated in FIG. 14;

FIG. 16 is a view that explains an exemplary determination condition used for the beam weight detection process illustrated in FIG. 14;

FIG. 17 is a block diagram illustrating a main configuration of a mobile station applied to a MIMO communication system according to a seventh embodiment of the system;

FIG. 18 is a view that explains an exemplary determination condition used for the mobile station illustrated in FIG. 17;

FIG. 19 is a flowchart that explains an exemplary operation of the mobile station illustrated in FIG. 17, for example, a beam weight detection process;

FIG. 20 is a block diagram illustrating a main configuration of a mobile station applied to a MIMO communication system according to an eighth embodiment of the system;

FIG. 21 is a view that explains an exemplary determination condition used for the mobile station illustrated in FIG. 20;

FIG. 22 is a flowchart that explains an exemplary operation of the mobile station illustrated in FIG. 20, for example, a beam weight detection process;

FIG. 23 is a block diagram illustrating a main configuration of a mobile station applied to a MIMO communication system according to a ninth embodiment of the system;

FIG. 24 is a flowchart that explains an exemplary operation of the mobile station illustrated in FIG. 23, for example, a beam weight detection process;

FIG. 25 is a block diagram illustrating a main configuration of a mobile station applied to a MIMO communication system according to a tenth embodiment of the system;

FIG. 26 is a flowchart that explains an exemplary operation of the mobile station illustrated in FIG. 25, for example, a beam weight detection process;

FIG. 27 is a block diagram illustrating a main configuration of a mobile station applied to a MIMO communication system according to an eleventh embodiment of the system;

FIG. 28 is a flowchart that explains an exemplary operation of the mobile station illustrated in FIG. 27, for example, a beam weight detection process;

FIG. 29 is a block diagram illustrating a main configuration of a mobile station applied to a MIMO communication system according to a twelfth embodiment of the system;

FIG. 30 is a flowchart that explains an exemplary operation of the mobile station illustrated in FIG. 29, for example, a beam weight detection process;

FIG. 31 is a block diagram illustrating a main configuration of a mobile station applied to a MIMO communication system according to a thirteenth embodiment of the system;

FIG. 32 is a flowchart that explains an exemplary operation of the mobile station illustrated in FIG. 31, for example, a beam weight detection process;

FIG. 33 is a block diagram illustrating a main configuration of a mobile station applied to a MIMO communication system according to a fourteenth embodiment of the system;

FIG. 34 is a flowchart that explains an exemplary operation of the mobile station illustrated in FIG. 33, for example, a beam weight detection process;

FIG. 35 is a block diagram illustrating a main configuration of a mobile station applied to a MIMO communication system according to a fifteenth embodiment of the system;

FIG. 36 is a flowchart that explains an exemplary operation of the mobile station illustrated in FIG. 35, for example, a beam weight detection process;

FIG. 37 is a view that explains an exemplary relationship between a coefficient S and a standard deviation in determination conditions illustrated in FIGS. 7, 24, 28, 32, 34, and 36; and

FIG. 38 is a view illustrating an exemplary concept of beam selection of a MIMO communication system for performing multi-beam selection.

Hereinafter, embodiments of the system will be described with reference to the accompanying drawings. However, the system is not limited to the embodiments described below, and various modifications can be implemented.

As shown in FIG. 38, in a MIMO communication system for performing multi-beam selection, code books 101 and 204 for storing beam weights, that is, weight coefficients for forming beams for a transmitter (for example, BS: base station) 100 and a receiver (for example, MS: mobile station) 200 are stored in a memory or the like.

The transmitter 100 transmits pilot signals P1 and P2 that are not multiplied with the beam weights from antennas 104 through an adder 103.

In this example, the receiver 200 includes a channel estimator 202 that performs channel estimation using the pilot signals P0 and P1 transmitted from the transmitter 100. A beam selector 203 calculates SINR (Signal-to-Interference and Noise power Ratio), SIR (Signal-to-Interference Ratio), or the like by multiplying a channel estimation result with beam weights of the code book 204 by using the later-described Equation 1. The beam selector 203 detects the beam weight having a maximum hi (here, i = 0, 1, 2,···, n) and notifies the transmitter 100 of a beam weight ID by using uplink signal control bits, for example, a uplink control channel.

[Equation 1]

$$h_i = w_{i0} \cdot \hat{h}_0 + w_{i1} \cdot \hat{h}_1 \quad \cdots (1)$$

A channel compensator 205 calculates a channel compensation amount of received data of a downlink data channel based on the detected beam weight and the channel estimation result obtained by the channel estimator 202. In a complex multiplier 206, the channel compensation amount is multiplied with the received data, so that channel compensation for the data channel is performed.

In the transmitter 100, a beam weight specified by a signal fed back from the receiver 200, for example, the control bits may be obtained from the code book 101, and the beam weight is multiplied with the transmitting signal by the multiplier 102 to be output. As a result, the SINR etc. of the subsequent transmission data is maximized in the receiver 200, so that reception quality can be improved.

In this case, the receiver 200 can detect the optimal beam weight by multiplying the pilot signals P1 and P2 with all the beam weights registered in the code book 204 every TTI (Transmission Time Interval).

For this reason, the receiver 200 has the following problems (1) and (2) to be solved.

(1) Even in a case where the change of beam weight is unnecessary, for example, in a case where a radio-wave reception environment is not almost changed due to no movement of the receiver 200, the receiver 200 detects the beam weights. Therefore, due to unnecessary calculation processes, there is unnecessary power consumption in the receiver 200.

(2) Even where the beam weight is not changed, the receiver 200 feeds the beam weight ID back to the transmitter 100. Since information may be unnecessarily transmitted, the throughput of the transmission signal from the receiver 200 to the transmitter 100 is deteriorated.

## First Embodiment

According to a first embodiment, a wireless terminal MS2 shown in FIG. 1 can be adapted to, for example, a MIMO communication system shown in FIG. 38. The MS2 can wirelessly communicate with the transmitter 100 shown in FIG. 38.

In this embodiment, with regard to the reception function, the MS2 shown in FIG. 1 includes, for example, an antenna 21, a pilot channel estimator 22, a beam selector 23, a code book memory 24, a data channel estimator 25 (hereinafter, sometimes referred to as a data channel compensator) 25, a complex multiplier 26, a beam weight ID history processor 27, and a tracking controller 28.

The antenna 21 receives a signal transmitted from the transmitter 100. The pilot channel estimator 22 obtains a channel estimation value of a pilot channel by multiplying a pilot signal in the signal received by the antenna 21 with a pilot replica previously stored in a memory or the like. A channel extraction function, that is, a pilot signal extraction function is not shown in the figure, though it may be included as desired.

The beam selector 23 performs the aforementioned calculation of Equation 1 using the channel estimation value and the beam weight (to-be-detected beam weight) registered in the code book stored in the code book memory 24. The beam selector 23 detects and selects the beam weight of which the calculation result hi is at maximum or in the vicinity thereof, that is, the beam weight of which reception state is an optimal state or a state in the vicinity thereof. The detected beam weight is input to the data channel compensator 25 and the beam weight ID history processor 27. The beam weight ID may be fed back (notified) to the transmitter 100 through the uplink control channel.

The code book memory 24 stores a code book (that is, a plurality of beam weights) having the same contents as those of the code book stored in the transmitter 100. The data channel estimator 25 obtains the channel estimation value (hereinafter, referred to as a channel compensation amount) for the received data channel based on the channel estimation value obtained by the pilot channel estimator 22 and the beam weight selected by the beam selector 23. The complex multiplier 26 performs the channel compensation for the data channel by multiplying the channel compensation amount obtained by the data channel estimator 25 with the signal of the data channel received by the antenna 21.

It is desirable for the beam weight ID history processor 27 to perform a statistics process on a history of the beam weight IDs selected by the beam selector 23 to obtain a degree of variation (a variance value or a standard deviation of beam weight IDs or an average value thereof). The beam weight ID history processor 27 functions as a monitoring unit that monitor a state of variation of the beam weights by performing the statistics process on the history of the previously detected beam weights. The number of the beam weight IDs that are subject to the statistics process may be fixed or variable.

The tracking controller 28 determines and controls the range of the code book used for calculation in the beam selector 23 based on the standard deviation σ of the beam weight ID obtained by the beam weight ID history processor 27, in which the range of the code book becomes a to-be-detected number of beam weights (hereinafter, referred to as a tracking range). The standard deviation σ may be an average standard deviation, and the control may be optimization control. For example, the tracking controller 28 determines and controls the tracking range under the following conditions. In addition, two or more types of the tracking ranges may exist in the code book.

(1) For example, when the "reference standard deviation a < standard deviation σ": the beam weight detection process is not performed.

(2) When the "reference standard deviation b < standard deviation σ ≤ reference standard deviation a": the vicinity of the transmitted (detected) beam weight, for example, the beam weight ±X (X is an integer indicating the beam weight ID or the number thereof) is calculated.

(3) When the "reference standard deviation b ≤ standard deviation σ": the entire beam weights are calculated.

The tracking controller 28 controls the tracking range according to a monitoring result for the state of variation of the beam weight ID performed by the beam weight ID history processor 27. For example, the tracking controller 28 functions as a control unit that controls the number of to-be-detected beam weights to be reduced so that the monitoring result represents a smaller variation.

In the MS2 having the aforementioned construction, the pilot channel estimator 22 obtains a channel estimation value based on the pilot signal received through the antenna 21. Based on the channel estimation value and the beam weight in the code book, the beam selector 23 detects the beam weight in which the result of Equation 1 becomes a minimum value.

The data channel estimator 25 obtains the channel compensation amount for the data channel based on the detected beam weight and the channel estimation value obtained by the pilot channel estimator 22. The complex multiplier 26 multiplies the channel compensation amount with the signals received through the antenna 21, for example, the signals of the data channel, so that the channel compensation for the data channel is performed.

In this embodiment, the number of beam weights used for the calculation of the beam selector 23 is controlled and optimized by the tracking controller 28 based on the variance value or the standard deviation obtained by the beam weight ID history processor 27. Hereinafter, the control operations thereof will be described with reference to a flowchart shown in FIG. 2.

In the MS2, the beam weight ID history processor 27 stores a plurality of the histories of the beam weight ID detected by the beam selector 23 and calculate the statistics thereof, so that the standard deviation of the beam weight ID is obtained (Step S1). The tracking controller 28 compares the obtained standard deviation σ with reference standard deviations (a and b; a < b) and controls the calculation of the beam selector 23 based on the result of comparison. Here, a and b are positive real numbers, for example, a = σ and b = 2σ.

More specifically, among the beam weights in the code book, a range of the beam weights used for the calculation of the beam selector 23, for example, the tracking range is controlled.

According to this feature of the embodiment, the tracking controller 28 compares the standard deviation σ obtained by the beam weight ID history processor 27 with the reference standard deviation a to check whether or not the reference standard deviation a is larger (Step S2). If the standard deviation σ is smaller, it is determined that there is substantially no change in the reception environment. Therefore, the tracking controller 28 controls the beam selector 23 to stop the detection process for the beam weight IDs and stores the beam weight ID detected at this time as the result of detection (from route "yes" of Step S2 to Step S3).

If the standard deviation σ is equal to or larger than the reference standard deviation a, the tracking controller 28 compares the standard deviation σ with the reference standard deviation b to check whether or not the standard deviation σ satisfies the relationship a ≤ σ < b (from route "no" of Step S2 to Step S4).

As the result of comparison, if the standard deviation σ satisfies the relationship a ≤ σ < b, the tracking controller 28 determines the beam weight in the vicinity (±X) of the beam weight ID detected at this time as the beam weight used for the calculation of the beam selector 23 and transmits the beam weight to the beam selector 23 (from route "yes" of Step S4 to Step S5).

If the standard deviation σ is equal to or larger than the reference standard deviation b (σ ≥ b), it may be determined that there is a large change in the reception environment reception environment. Therefore, the tracking controller 28 controls the tracking range to be widened. Preferably, the tracking range is widened up to the entire range of the code book (from route "no" of Step S4 to Step S6).

In the first embodiment, in the MS2, the statistics process is performed on history information of the beam weight ID by using the beam weight ID used as an efficiency index of the beam weight detection process; the standard deviation of the beam weight ID is compared with the reference standard deviation (or a variance value and a reference variance value); and the range of beam weight detection in the code book, for example, the tracking range is determined based on the result of comparison. The determination may be an optimization control. According to the embodiment, the beam weight detection process (the beam select process) can be optimized according to the change in the reception environment of the MS2.

According to the embodiment, a beam weight detection processing time and a calculation amount of the beam weight detection process can be reduced, so that power consumption of the MS2 can be reduced. According to the embodiment, a feedback information amount of the beam weight ID in the BS100 can also be reduced, so that a decrease in throughput of the uplink can be prevented. According to the embodiment, usage efficiency of wireless resources of the uplink and, moreover, usage efficiency of wireless resources of the entire system can be improved.

## Second Embodiment

In comparison with the MS2 shown in FIG. 1, the MS2 shown in FIG. 3 includes a detection process timing controller 34 instead of the tracking controller 28. Hereinafter, components denoted by the same reference numerals are the same as described previously unless otherwise stated.

In this second embodiment, the detection process timing controller 34 controls a beam weight detection timing (a time interval of the beam weight detection process) of the beam selector 23 based on the variance value or the standard deviation σ of the beam weight Id obtained by the beam weight ID history processor 27. The standard deviation may be an average standard deviation. For example, the detection process timing controller 34 controls the timing under the following conditions.

(1) When the "reference standard deviation a < standard deviation σ": sleep mode, (the beam weight detection process is not performed).
(2) When the "reference standard deviation b < standard deviation σ ≤ reference standard deviation a": the beam weight detection process is intermittently performed.
(3) When the "reference standard deviation b ≤ standard deviation σ": the beam detection process is performed in a time interval shorter than that of case (2), preferably, every TTI.

The detection process timing controller 34 controls the beam weight detection timing according to a monitoring result for the state of variation of the beam weight ID by the beam weight ID history processor 27. For example, the detection process timing controller 34 functions as a control unit that controls the beam weight detection interval to be increased so as for the monitoring result to represent smaller variation.

Hereinafter, the operation of the MS2 having the aforementioned construction, particularly, the operation of controlling the beam weight detection process timing will be described in detail with reference to a flowchart shown in FIG. 4.

In the MS2, the beam weight ID history processor 27 stores a plurality of the histories of the beam weight IDs detected by the beam selector 23 and performs a statistics process to obtain, for example, a standard deviation of the beam weight IDs (Step S1). The detection process timing controller 34 compares the obtained standard deviation σ with reference standard deviations (a and b; a < b) and controls the calculation timing of the beam selector 23 based on the result of the comparison. In the embodiment, a and b may also be, for example, a = σ and b = 2σ.

The detection process timing controller 34 compares the standard deviation σ obtained by the beam weight ID history processor 27 with the reference standard deviation a to check whether or not the reference standard deviation a is larger (Step S2). If the standard deviation σ is smaller, it may be determined that there is substantially no change in the reception environment. Therefore, the detection process timing controller 34 controls the detection process for the beam weight IDs performed by the beam selector 23 to be in a sleep mode and stores the beam weight IDs detected at this time as a result of the detection (from route "yes" of Step S2 to Step S3).

If the standard deviation σ is equal to or larger than the reference standard deviation a, the detection process timing controller 34 compares the standard deviation σ with the reference standard deviation b to check whether or not the standard deviation σ satisfies the relationship a ≤ σ < b (from route "no" of Step S2 to Step S4).

As a result of the comparison, if the standard deviation σ satisfies the relationship a ≤ σ < b, the detection process timing controller 34 controls the calculation timing of the beam selector 23 so that the beam weight detection process is performed every Y*TTI (Y > 1) (from route "yes" of Step S4 to Step S7).

If the standard deviation σ is equal to or larger than the reference standard deviation b (σ≥ b), it may be determined that there is a large change in the reception environment. Therefore, in order to track the change, the detection process timing controller 34 controls the calculation timing of the beam selector 23 so that the beam weight detection process is performed in a shorter process interval, preferably, every TTI (from route "no" of Step S4 to Step S8).

In the second embodiment, in the MS2, the statistics process is performed on history information of the beam weight ID by using the beam weight ID used as an efficiency index of the beam weight detection process; the standard deviation of the beam weight ID is compared with the reference standard deviation (or a variance value and a reference variance value); and the interval (timing) of performing the beam weight detection process (sometimes, referred to as a beam select process) is determined based on the result of comparison. In order to determine the detection interval, an optimization control may be performed. According to the embodiment, the beam weight detection process (the beam select process) can be optimized according to the change in the reception environment of the MS2.

According to the embodiment, a beam weight detection processing time and a calculation amount of the beam weight detection process can be reduced, so that power consumption of the MS2 can be reduced. According to the embodiment, a feedback information amount and the number of feedback operations of the beam weight ID in the BS100 can also be reduced, so that a decrease in throughput of the uplink can be prevented. According to the embodiment, usage efficiency of wireless resources of the uplink and, moreover, usage efficiency of wireless resources of the entire system can be improved.

## Third Embodiment

In comparison with the MS2 shown in FIG. 1, the MS2 shown in FIG. 5 includes an SINR statistics processor 29 and a tracking controller 28A instead of the beam weight ID history processor 27 and the tracking controller 28.

According to this third embodiment, the SINR statistics processor 29 calculates information on reception quality, for example, an SINR of a pilot signal based on a channel estimation value of the pilot signal and a beam weight used for the calculation of the beam selector 23 and performs a statistics process on the result of calculation to obtain the average value (an average SINR) of the SINR of the pilot signal. The SINR statistics processor 29 functions as a monitoring unit that monitors a state of variation of the reception quality by performing the statistics process on the history of the information on the reception quality. The SINR statistics processor 29 may obtain an SIR instead of the SINR as the information on the reception quality. This is employed in the following description, and the information is collectively referred to as "SINR etc."

The tracking controller 28A determines and controls the tracking range based on the average SINR obtained by the SINR statistics processor 29 and a reference SINR. The control may be an optimization control. For example, the tracking controller 28A determines and controls the tracking range under the following conditions. In the embodiment, two or more types of the tracking ranges may exist. Under the following conditions, a coefficient S may be a constant. For example, as described with reference to FIG. 37, the S value may be obtained as a time-varying value of a variance value or a standard deviation σ of the SINR (hereinafter, this is the same).

(1) When the "reference SINR + S (dB) < average SINR": the beam weight detection process is not performed.
(2) When the "reference SINR - S < average SINR < reference SINR + S": the vicinity of the transmitted (detected) beam weight (that is, the beam weight ±X) is calculated.
(3) When the "reference SINR - S > average SINR": the entire beam weights are calculated.

The tracking controller 28A controls the tracking range according to a monitoring result of the SINR statistics processor 29 as a monitoring unit. For example, tracking controller 28A functions as a control unit that controls the number of to-be-detected beam weights to be reduced so as for the SINR as a monitoring result to represent smaller variation.

In FIG. 6, results of the process according to the conditions are illustrated with the SINR (dB) in the horizontal axis and the average throughput (Mbps) in the vertical axis. The range of SINR including the reference SINR defined by the S value is preferably set to about ±1dB.

Hereinafter, the operations of the MS2 having the aforementioned construction, particularly, the control operations for the tracking range will be described in detail with reference to a flowchart shown in FIG. 7.

In the MS2, the SINR statistics processor 29 obtains the average SINR of the pilot signal (Step S11). The tracking controller 28A compares the obtained average SINR with the reference SINR ± S and controls the calculation of the beam selector 23 based on the result of comparison. More specifically, the tracking controller 28A controls a range of the beam weight (the tracking range) used for the calculation of the beam selector 23 among the beam weights in the code book.

The tracking controller 28A compares the average SINR obtained by the SINR statistics processor 29 with the reference SINR + S to check whether or not the average SINR is larger (Step S12). If the average SINR is larger, it may be determined that the reception environment at this time is good. Therefore, the tracking controller 28A controls the beam selectors 23 to stop the detection process for the beam weight IDs and stores the beam weight ID detected at this time as the result of detection (from route "yes" of Step S12 to Step S13).

If the average SINR is smaller than the reference SINR + S, the tracking controller 28A compares the average SINR with the reference SINR - S to check whether or not the average SINR satisfies the relationship "reference SINR - S < average SINR < reference SINR + S" (from route "no" of Step S12 to Step S14).

As a result of the comparison, if the average SINR satisfies the relationship, the tracking controller 28A determines the beam weight in the vicinity ($\pm$X) of the beam weight ID detected at this time as the beam weight used for the calculation of the beam selector 23 and transmits the beam weight to the beam selector 23 (from route "yes" of Step S14 to Step S15).

If the average SINR is equal to or smaller than the reference SINR - S, it may be determined that the reception environment is not good. Therefore, the tracking controller 28A controls the tracking range to be widened (preferably, the entire range of the code book) (from route "no" of Step S14 to Step S16).

In the third embodiment, in the MS2, the tracking range is determined (optimization control) based on the result of comparison of the average value of the SINR with the reference SINR by using the beam weight ID as an efficiency index of the beam weight detection process; and the optimal beam weight is detected in the range. As a result, the beam weight detection processing time can be reduced, so that the power consumption of the MS2 can be reduced. According to the embodiment, a feedback information amount of the beam weight ID can be also reduced, so that a decrease in throughput of the uplink can be prevented. According to the embodiment, usage efficiency of wireless resources of the uplink and, moreover, usage efficiency of wireless resources of the entire system can be improved.

## Fourth Embodiment

The aforementioned tracking controller 28A according to the third embodiment may determine and control the tracking range under the following conditions using a coefficient k (dB) instead of the aforementioned conditions.

(1) When the "reference SINR + k < average SINR": the beam weight detection process is not performed.
(2) When the "reference SINR - k < average SINR ≤ reference SINR + k": the vicinity of the transmitted (detected) beam weight is calculated.
(3) When the "reference SINR ≥ average SINR - k": the entire beam weights are calculated.

In FIG. 9, results of the process according to the conditions are illustrated with the SINR (dB) in the horizontal axis and the average throughput (Mbps) in the vertical axis. The coefficient k (dB) may be calculated based on the standard deviation $\sigma$ of the SINR. For example, the coefficient k may be calculated by using a linear equation $k = f(\sigma) - a*\sigma+b$ as shown in (1) of FIG. 10 or by using a quadratic equation $k = f(\sigma) - a*\sigma^2+b$ as shown in (2) of FIG. 10. Here, a and b are positive real numbers (the same applies in the following embodiments).

In this fourth embodiment, the MS2 operates according to a flowchart shown in, for example, FIG. 8. The flowchart shown in FIG. 8 corresponds to a flowchart obtained by replacing the determination condition in Step S12 with the condition (1) and replacing the determination condition in Step S14 with the condition (2) in the flowchart shown in FIG. 7.

The construction of the MS2 is the same as that of FIG. 5. In the MS2, the SINR statistics processor 29 obtains the average SINR of the pilot signal (Step S21). The tracking controller 28A compares the obtained average SINR with the reference SINR + k and controls the calculation of the beam selector 23 based on the result of comparison. More specifically, the tracking controller 28A controls a range of the beam weight (the tracking range) used for the calculation of the beam selector 23 among the beam weights in the code book.

The tracking controller 28A compares the average SINR obtained by the SINR statistics processor 29 with the reference SINR + k to check whether or not the average SINR is larger (Step S22). If the average SINR is larger, it may be determined that the reception environment at this time is good. Therefore, the tracking controller 28A controls the beam selectors 23 to stop the detection process for the beam weight IDs and stores the beam weight ID detected at this time as the result of detection (from route "yes" of Step S22 to Step S23).

If the average SINR is equal to or smaller than the reference SINR + k, the tracking controller 28A compares the average SINR with the reference SINR - k to check whether or not the average SINR is larger than the reference SINR - k (that is, satisfies the relationship "reference SINR - k < average SINR ≤ reference SIR + k") (from route "no" of Step S22 to Step S24).

As a result of the comparison, if the average SINR satisfies the relationship, the tracking controller 28A determines the beam weight in the vicinity (±X) of the beam weight ID detected at this time as the beam weight used for the calculation of the beam selector 23 and transmits the beam weight to the beam selector 23 (from route "yes" of Step S24 to Step S25). Here, the value X (the tracking range) is a weight coefficient of the σ, which may be obtained from, for example, int(X*p).

If the average SINR is equal to or smaller than the reference SINR - k, it may be determined that the reception environment is not good. Therefore, the tracking controller 28A controls the tracking range to be widened (preferably, the entire range of the code book) (from route "no" of Step S24 to Step S26).

In the fourth embodiment, since the tracking range is determined and controlled under the conditions using the coefficient k calculated based on the standard deviation σ of the SINR (or SIR), an accuracy of determination can be improved in comparison with the third embodiment, so that it is possible to improve an accuracy of the determination and control of the tracking range. According to the embodiment, it is possible to implement low power consumption of a new MS2 and to obtain a high usage efficiency of wireless resources.

## Fifth Embodiment

In comparison with the aforementioned MS2 shown in FIG. 1, an MS2 shown in FIG. 11 is provided with a demodulator 31 at an output side of the complex multiplier 26. In comparison with the aforementioned MS2 shown in FIG. 1, the mobile station MS2 shown in FIG. 11 includes a tracking controller 28B and a quality statistics processor 30 instead of the tracking controller 28 and the beam weight ID history processor 27. The demodulator 31 is omitted in the illustration of FIGS. 1, 3, and 5.

In this fifth embodiment, the demodulator 31 demodulates the received signal that is multiplied with a channel compensation amount in the complex multiplier 26 and subject to the channel compensation, according to a demodulation scheme corresponding to a modulation scheme (QPSK, 16QAM, 64QAM, etc.) of the transmitter side.

The quality statistics processor 30 performs a statistics process on reception throughput (TP) (information on the reception quality) of the data channel based on a result of the demodulation of the demodulator 31 to obtain a deviation (standard deviation σ) from an average value (average TP) thereof. The quality statistics processor 30 functions as a monitoring unit performing a statistic process on history of the information on the reception quality and monitoring a state of variation thereof.

The tracking controller 28B controls the tracking range based on the average TP obtained by the quality statistics processor 30. For example, the tracking controller 28B determines and controls under the following conditions.

(1) When the "reference TP < average TP": sleep mode (beam weight detection process is not performed).
(2) When the "reference TP ≥ average TP > minimum TP": the vicinity of the transmitted (detected) beam weight is calculated.
(3) When the "reference TP ≥ average TP": the entire beam weights are calculated.

The tracking controller 28B controls the tracking range according to a monitoring result of the quality statistics processor 30 as a monitoring unit. For example, the tracking controller 28B functions as a control unit that controls the number of to-be-detected beam weights to be reduced so as for the monitoring result to represent smaller variation.

In FIG. 12, results of the process according to the conditions are illustrated with the SINR (dB) in the horizontal axis and the average throughput (Mbps) in the vertical axis.

Hereinafter, the operations of the MS2 having the aforementioned construction, particularly, the control operations for the tracking range will be described in detail with reference to a flowchart shown in FIG. 13.

In the MS2, the quality statistics processor 30 obtains the average TP of the received signal based on the result of demodulation of the demodulator 31 (Step S31). The tracking controller 28B compares the obtained average TP with a reference TP (for example, 90% of a maximum TP) and controls the calculation of the beam selector 23 based on the result of comparison. More specifically, the tracking controller 28B controls a range of the beam weight (the tracking range) used for the calculation of the beam selector 23 among the beam weights in the code book.

The tracking controller 28B compares the average TP obtained by the quality statistics processor 30 with the reference TP to check whether or not the average TP is larger (Step S32). If the average TP is larger, it may be determined that the reception environment at this time is good. Therefore, the tracking controller 28B controls the detection process for the beam weight IDs performed by the beam selector 23 to be in a sleep mode and stores the beam weight IDs detected at this time as a result of detection (from route "yes" of Step S32 to Step S33).

If the average TP is smaller than the reference TP, the tracking controller 28B compares the average TP with the reference TP to check whether or not the average TP is larger than a minimum TP (for example, 70% of the maximum TP) and smaller than the reference TP (that is, satisfies the relationship "minimum TP < average TP ≤reference TP") (from route "no" of Step S32 to Step S34).

As a result of the comparison, if the average TP satisfies the relationship, the tracking controller 28B determines the beam weight in the vicinity ($\pm X$) of the beam weight ID detected at this time as the beam weight used for the calculation of the beam selector 23 and transmits the beam weight to the beam selector 23 (from route "yes" of Step S34 to Step S35).

If the average TP is equal to or smaller than the minimum TP, it may be determined that the reception environment is not good. Therefore, the tracking controller 28B controls the tracking range to be widened (preferably, the entire range of the code book) (from route "no" of Step S34 to Step S36).

In the fifth embodiment, the reception quality (TP) of the received signal is used as an efficiency index of the beam weight detection process, and the tracking range is determined based on a result of the statistics process. The determination may be an optimization control.

According to the embodiment, the beam weight detection process (beam select process) is performed in the range, so that an optimal beam weight can be detected. Therefore, the beam weight detection processing time can be reduced, so that the power consumption of the MS2 can be reduced. According to the embodiment, a feedback information amount of the beam weight ID can be also reduced, so that a decrease in throughput of the uplink can be prevented. According to the embodiment, usage efficiency of wireless resources of the uplink and, moreover, usage efficiency of wireless resources of the entire system can be improved.

## Sixth Embodiment

Similar to the fourth embodiment, in an MS2 according to a sixth embodiment, the tracking controller 28B may determine and control the tracking range according to the following conditions using a coefficient m (Msps: mega samples per second) instead of the aforementioned conditions. As shown in FIG. 16, the coefficient m can be calculated as a function of the standard deviation $\sigma$ with respect to the average TP obtained by the quality statistics processor 30. As shown in (1) of FIG. 16, the coefficient m may be calculated by using a linear equation $m = f(\sigma) = a*\sigma+b$ or by using a quadratic equation $m = f(\sigma) - a*\sigma^2+b$.

(1) When the "average TP > reference TP + m": the beam weight detection process is not performed.

(2) When the "reference TP - m < average TP ≤ reference TP + m": the vicinity of the transmitted (detected) beam weight is calculated.

(3) When the "reference TP - m ≥ average TP": the entire beam weights are calculated (if it is larger than a maximum TP, the maximum TP is treated as a reference TP).

In FIG. 15, results of the process according to the conditions are illustrated with the SINR (dB) in the horizontal axis and the average throughput (Mbps) in the vertical axis. The MS2 operates according to a flowchart shown in, for example, FIG. 14. The flowchart shown in FIG. 14 corresponds to a flowchart obtained by replacing the determination condition in Step S32 with the condition (1) and replacing the determination condition in Step S34 with the condition (2) in the flowchart shown in FIG. 13.

In the MS2 according to the sixth embodiment, the quality statistics processor 30 obtains the average TP of the received signal based on a result of the demodulation of the demodulator 31 (Step S41). The tracking controller 28B controls the calculation of the beam selector 23 based on the obtained average TP. More specifically, the tacking controller 28B controls the number of beam weights (the tracking range) used for the calculation of the beam selector 23 among the beam weights in the code book.

The tracking controller 28B compares the average TP obtained by the quality statistics processor 30 with the reference TP + m to check whether or not the average TP is larger (Step S42). If the average TP is larger, it may be determined that the reception environment at this time is good. Therefore, the tracking controller 28B controls the detection process for the beam weight IDs performed by the beam selectors 23 to be in a sleep mode and stores the beam weight IDs detected at this time as a result of detection (from route "yes" of Step S42 to Step S43).

If the average TP is equal to or smaller than the reference TP + m, the tracking controller 28B compares the average TP with the reference TP - m to check whether or not the average TP is larger than the reference TP - k (that is, satisfies the relationship "reference TP - m < average TP ≤ reference TP + m") (from route "no" of Step S42 to Step S44).

As a result of the comparison, if the average TP satisfies the relationship, the tracking controller 28B determines the beam weight in the vicinity ($\pm X$) of the beam weight ID detected at this time as the beam weight used for the calculation of the beam selector 23 and transmits the beam weight to the beam selector 23 (from route "yes" of Step S44 to Step S45). The X (the tracking range) may be obtained from, for example, $int(X*p\sigma)$, where p is a weight coefficient determined based on the $\sigma$.

If the average TP is equal to or smaller than the reference TP - m, it may be determined that the reception environment is not good. Therefore, the tracking controller 28B controls the tracking range to be widened (the entire range of the code book) (from route "no" of Step S44 to Step S46).

In the sixth embodiment, since the tracking range is determined and controlled under the conditions using the coefficient m (Msps) obtained as a function of the standard deviation σ with respect to the TP, an accuracy of the determination can be improved in comparison with the fifth embodiment, so that it is possible to improve an accuracy of the determination and control of the tracking range. According to the embodiment, it is possible to implement low power consumption of a new MS2 and to obtain a high usage efficiency of wireless resources.

## Seventh Embodiment

In comparison with the aforementioned MS2 shown in FIG. 1, an MS2 shown in FIG. 17 includes an SINR statistics processor 29 having the same function as that of FIG. 5 and a detection process timing controller 34A having the same function as that of FIG. 3 instead of the beam weight ID history processor 27 and the tracking controller 28.

According to this seventh embodiment, the SINR statistics processor 29 calculates the SINR of a pilot signal based on the channel estimation value and the beam weight of the pilot signal used for the calculation of the beam selector 23. The SINR statistics processor 29 performs a statistics process on a result of the calculation to obtain the average value (average SINR) of the SINR of the pilot signal. The detection process timing controller 34A controls the beam weight detection timing (beam weight detection process interval) of the beam selector 23 based on the average SINR obtained by the SINR statistics processor 29. For example, the detection process timing controller 34A performs the timing control under the following conditions.

(1) When the "reference SINR ≤ average SINR": sleep mode (beam weight detection process is not performed).

(2) When the "reference SINR - k < average SINR ≤ reference SINR + k": the beam weight detection process is intermittently performed.

(3) When the "average SINR ≤ reference SINR - k": the beam detection process is performed in a time interval shorter than that of case (2), preferably, every TTI.

The detection process timing controller 34A controls the beam weight detection timing according to a monitoring result of the SINR statistics processor 29 as a monitoring unit. For example, the detection process timing controller 34A functions as a control unit that controls the beam weight detection interval to be increased so as for the monitoring result to represent smaller variation.

In FIG. 18, results of the process according to the conditions are illustrated with the SINR (dB) in the horizontal axis and the average throughput (Mbps) in the vertical axis. Similarly to FIG. 10, in one embodiment, the coefficient k can be calculated as a function of the standard deviation σ with respect to the SINR obtained by the SINR statistics processor 29. That is, the coefficient k may be calculated by using a linear equation $k = f(\sigma) = a*\sigma+b$ or by using a quadratic equation $k = f(\sigma) = a*\sigma^2+b$. Instead of the coefficient k, the aforementioned coefficient S may be used.

Hereinafter, the operation of the MS2 having the aforementioned construction, particularly, the operation of controlling the beam weight detection process timing will be described in detail with reference to a flowchart shown in FIG. 19.

In the MS2, the SINR statistics processor 29 calculates the average SINR of a pilot signal based on the channel estimation value and the beam weight of the pilot signal used for the calculation of the beam selector 23. The SINR statistics processor 29 performs a statistics process on a result of the calculation to obtain the average value (average SINR) and the variance value (standard deviation σ) of the SINR of the pilot signal (Step S51). The detection process timing controller 34A controls the calculation timing of the beam selector 23 based on the obtained average SINR and standard deviation σ.

The detection process timing controller 34A compares the average SINR obtained by the SINR statistics processor 29 with the reference SINR + k to check whether or not the average SINR is larger (Step S52). If the average SINR is larger, it may be determined that the reception environment is good. Therefore detection process timing controller 34A controls the detection process for the beam weight IDs performed by the beam selector 23 to be in a sleep mode and stores the beam weight IDs detected at this time as a result of the detection (from route "yes" of Step S52 to Step S53).

If the average SINR is equal to or smaller than the reference SINR + k, the detection process timing controller 34A compares the average SINR with the reference SINR - k to check whether or not the average SINR satisfies the relationship "reference SINR - k < average SINR ≤ reference SINR + k" (from route "no" of Step S52 to Step S54).

As a result of the comparison, if the relationship is satisfied, the detection process timing controller 34A controls the calculation timing of the beam selector 23 so that the beam weight detection process is performed every Y*TTI (Y > 1) (from route "yes" of Step S54 to Step S55).

If the average SINR is equal to or smaller than the reference SINR - k, it may be determined that the reception environment is not good. Therefore, in order to track the change, the detection process timing controller 34A controls the calculation timing of the beam selector 23 so that the beam weight detection process is performed in a shorter process interval (preferably, every TTI) (from route "no" of Step S54 to Step S56).

In the seventh embodiment, the SINR etc. of the received signal is used as an efficiency index of the beam weight detection process, and the timing (interval) of the beam weight detection process (the beam select process) is determined (optimized) according to a result of the comparison of the average value of the SINR with the reference SINR etc. According to the embodiment, the beam weight detection processing time can be reduced, so that the power consumption of the MS2 can be reduced. A feedback information amount of the beam weight ID can be also reduced, so that a decrease in throughput of the uplink can be prevented. Moreover, usage efficiency of wireless resources of the uplink and, moreover, usage efficiency of wireless resources of the entire system can be improved.

## Eighth Embodiment

In comparison with the aforementioned MS2 shown in FIG. 1, an MS2 shown in FIG. 20 is provided with the demodulator 31 shown in FIG. 11 at an output side of the complex multiplier 26. In comparison with the MS2 shown in FIG. 1, the MS2 shown in FIG. 20 includes a quality statistics processor 30 having the same function as that of FIG. 11 and a detection process timing controller 34B having the same function as that of FIG. 3 instead of the beam weight ID history processor 27 and the tracking controller 28.

In an eighth embodiment, the quality statistics processor 30 performs a statistics process on the throughput (TP) of the data channel based on a result of the demodulating of the demodulator 31 to obtain a deviation (standard deviation $\sigma$) from the average value (average TP) thereof. The detection process timing controller 34B controls the beam weight detection process timing (the beam weight detection process interval) of the beam selector 23 based on the average TP obtained by the quality statistics processor 30. For example, the detection process timing controller 34B determines and controls the tracking range under the following conditions.

(1) When the "reference TP < average TP": sleep mode (beam weight detection process is not performed).
(2) When the "reference TP + m ≥ average TP > reference TP - m": the beam weight detection process is intermittently performed.
(3) When the "reference TP - m ≥ average TP": the beam detection process is performed in a time interval shorter than that of case (2), preferably, every TTI.

The detection process timing controller 34B preferably controls the timing according to a monitoring result of the quality statistics processor 30 as a monitoring unit. For example, the detection process timing controller 34B functions as a control unit that controls the number of to-be-detected beam weights to be reduced so as for the monitoring result to represent smaller variation.

In FIG. 21, results of the process according to the conditions are illustrated with the SINR (dB) in the horizontal axis and the average throughput (Mbps) in the vertical axis. As shown in FIG. 16, in the embodiment, the coefficient m may also be calculated as a function of the standard deviation $\sigma$ with respect to the average TP obtained by the quality statistics processor 30. That is, the coefficient m may be calculated by using a linear equation $m = f(\sigma) - a*\sigma+b$ or by using a quadratic equation $m = f(\sigma) = a*\sigma^2+b$.

Hereinafter, the operation of the MS2 having the aforementioned construction, particularly, the operation of controlling the beam weight detection process timing will be described in detail with reference to a flowchart shown in FIG. 22.

In the MS2, the quality statistics processor 30 calculates the throughput (TP) of the data channel based on a result of the demodulation of the demodulator 31. The quality statistics processor 30 performs a statistics process on a result of the calculation to obtain an average TP and a deviation (standard deviation $\sigma$) thereof (Step S61). The detection process timing controller 34B controls the calculation timing of the beam selectors 23 based on the obtained average TP and standard deviation $\sigma$.

The detection process timing controller 34B compares the average TP obtained by the quality statistics processor 30 with the reference TP + m to check whether or not the average TP is lager (Step S62). If the average TP is larger, it may be determined that the reception environment is good. Therefore, the detection process timing controller 34B controls the detection process for the beam weight IDs performed by the beam selector 23 to be in a sleep mode and stores the beam weight IDs detected at this time as a result of the detection (from route "yes" of Step S62 to Step S63).

If the average TP is equal to or smaller than the reference TP + m, the detection process timing controller 34B compares the average TP with the reference TP - m to check whether or not the average TP is larger than the reference TP - m (that is, satisfies the relationship "reference TP - m < average TP ≤ reference TP + m") (from route "no" of Step S62 to Step S64).

As a result of the comparison, if the relationship is satisfied, the detection process timing controller 34B controls the calculation timing of the beam selector 23 so that the beam detection process is performed every Y*TTI (Y > 1) (from route "yes" of Step S64 to Step S65).

If the average TP is equal to or smaller than the reference TP - m, it may be determined that the reception environment is not good. Therefore, in order to track the change, the detection process timing controller 34B controls the calculation timing of the beam selector 23 so that the beam weight detection process is performed in a shorter process interval (preferably, every TTI) (from route "no" of Step S64 to Step S66).

In the eighth embodiment, the tracking range is determined (optimized) based on a result of the statistics process and a result of the comparison with the reception quality by using the reception quality (for example, TP) of the received signal as an efficiency index of the beam weight detection process; and the beam weight detection process (beam select process) is performed in the range, so that an optimal beam weight can be detected. As a result, according to the embodiment, the beam weight detection processing time can be reduced, so that the power consumption of the MS2 can be reduced. According to the embodiment, a feedback information amount of the beam weight ID can be also reduced, so that a decrease in throughput of the uplink can be prevented. According to the embodiment, usage efficiency of wireless resources of the uplink and, moreover, usage efficiency of wireless resources of the entire system can be improved.

## Ninth Embodiment

In comparison with the aforementioned MS2 shown in FIG. 1, an MS2 shown in FIG. 23 is augmented with an SINR statistics processor 29 having the same function as that of FIG. 5 and provided with a tracking controller 28C instead of the tracking controller 28.

According to this ninth embodiment, the SINR statistics processor 29 calculates the SINR of a pilot signal based on the channel estimation value and the beam weight of the pilot signal used for the calculation of the beam selector 23. The SINR statistics processor 29 performs a statistic process on a result of the calculation to obtain the average value of the SINR of the pilot signal.

The tracking controller (control unit) 28C determines and controls the tracking range of the beam weight based on the variance value (or the standard deviation) of the beam weight ID obtained by the beam weight ID history processor (monitoring unit) 27 and the average SINR obtained by the SINR statistics processor (monitoring unit) 29. The tracking controller 28C according to the embodiment determines and controls the tracking range of the beam weight by using a combination of the operations (determination condition) shown in FIG. 2 and the operations (determination condition) shown in FIG. 7.

In the embodiment, the MS2 operates according to a flowchart shown in, for example, FIG. 24.

In the MS2, the beam weight ID history processor 27 stores a plurality of the histories of the beam weight ID detected by the beam selector 23 and calculates the statistics thereof, so that the (average) variance value of the beam weight ID is obtained. The SINR statistics processor 29 calculates the SINR of the pilot signal and performs a statistics process on a result of the calculation to obtain the average value (average SINR) of the SINR of the pilot signal (Step S71).

The tracking controller 28C compares the obtained variance value $\sigma$ with the reference variance value "a" to check whether or not the reference variance value "a" is larger (Step S72). If the variance value $\sigma$ is smaller, the tracking controller 28C compares the average SINR obtained by the SINR statistics processor 29 with the reference SINR + S to check whether or not the average SINR is larger (from route "yes" of Step S72 to Step S73).

As a result of the comparison, if the average SINR is larger, the tracking controller 28C controls the detection process for the beam weight IDs performed by the beam selector 23 to be in a sleep mode and stores the beam weight IDs detected at this time as a result of the detection (from route "yes" of Step S73 to Step S74).

If the variance value $\sigma$ is equal to or larger than the reference variance value "a," the tracking controller 28C compares the variance value $\sigma$ with the reference variance value b (b > a) to check whether or not the variance value $\sigma$ satisfies the relationship "$a \leq \sigma < b$" (from route "no" of Step S72 to Step S75). If the variance value $\sigma$ satisfies the relationship, the tracking controller 28C compares the average SINR with the reference SINR - S to check whether or not the average SINR satisfies the relationship "reference SINR - S < average SINR ≤ reference SIR + S" (from route "yes" of Step S75 to Step S76).

If the average SINR is equal to or smaller than the reference SIR + S, the tracking controller 28C compares the average SINR with the reference SINR ±S to check whether or not the average SINR satisfies the relationship "reference SINR - S < average SINR ≤ reference SIR + S" (from route "no" of Step S73 to Step S76).

As a result of the comparison, if the average SINR satisfies the relationship, the tracking controller 28C determines the beam weight in the vicinity (±X) of the beam weight ID transmitted (detected) at this time as the beam weight used for the calculation of the beam selector 23 and transmits the beam weight to the beam selector 23 (from route "yes" of Step S76 to Step S77).

If the variance value $\sigma$ is equal to or larger than the reference variance value b ("no" of Step S75) or if the average SINR is equal to or smaller than the reference SINR- S ("no" of Step S76), the tracking controller 28C controls the tracking range to be widened (preferably, the entire range of the code book) (Step S78). In the ninth embodiment, the beam weight ID that is the efficiency index in the first embodiment and the SINR etc. of the received signal that is the efficiency index in the third embodiment are used as an efficiency index of the beam weight detection process; the tracking range is determined (optimized) based on a result of the statistics process on the two indices; and the beam weight detection process (beam select process) is performed in the range, so that an optimal beam weight can be detected. As a result, according to the embodiment, in comparison with the first and third embodiments, the beam weight detection processing time can be further reduced, so that the power consumption of the MS2 can be further reduced. In addition, a feedback information amount of the beam weight ID can be also reduced, so that a decrease in throughput of the uplink can be prevented. Finally, usage efficiency of wireless resources of the uplink and, moreover, usage efficiency of wireless resources of the entire system can be further improved.

## Tenth Embodiment

In comparison with the aforementioned MS2 shown in FIG. 1, an MS2 shown in FIG. 25 is augmented with a quality statistics processor 30 and a demodulator 31 having the same functions as those of FIG. 11 and provided with a tracking controller 28D instead of the tracking controller 28.

In this tenth embodiment, the quality statistics processor 30 can obtain an average TP of the data channel and a deviation (standard deviation σ) thereof based on a result of the demodulation of the demodulator 31. The tracking controller (control unit) 28D determines and controls the tracking range of the beam weight based on the variance value (standard deviation) obtained by the quality statistics processor (monitoring unit) 30 and the variance value (or standard deviation) of the beam weight ID obtained by the beam weight ID history processor (monitoring unit) 27. The tracking controller 28D according to the embodiment determines and controls the tracking range of the beam weight by using a combination of the operations (determination condition) shown in FIG. 2 and the operations (determination condition) shown in FIG. 14 (or FIG. 13).

In the embodiment, the MS2 operates according to a flowchart shown in, for example, FIG. 26.

In the MS2, the beam weight ID history processor 27 stores a plurality of the histories of the beam weight ID detected by the beam selector 23 and calculates the statistics thereof, so that the (average) variance value of the beam weight ID is obtained. The quality statistics processor 30 obtains the average TP and the deviation (standard deviation σ) thereof (Step S81).

The tracking controller 28D compares the obtained variance value σ with the reference variance value "a" to check whether or not the reference variance value "a" is larger (Step S82). If the variance value σ is smaller, the tracking controller 28D compares the average TP obtained by the quality statistics processor 29 with the reference TP + m to check whether or not the average TP is larger (from route "yes" of Step S82 to Step S83).

As a result of the comparison, if the average TP is larger, the tracking controller 28D controls the detection process for the beam weight IDs performed by the beam selector 23 to be in a sleep mode and stores the beam weight IDs detected at this time as a result of the detection (from route "yes" of Step S83 to Step S84).

If the variance value σ is equal to or larger than the reference variance value "a," the tracking controller 28D compares the variance value σ with the reference variance value b (b > a) to check whether or not the variance value σ satisfies the relationship "a ≤ σ < b" (from route "no" of Step S82 to Step S85). If the variance value σ satisfies the relationship, the tracking controller 28D compares the average TP with the reference TP - m to check whether or not the average TP satisfies the relationship "reference TP - m < average TP ≤ reference TP + m" (from route "yes" of Step S85 to Step S86).

If the average TP is equal to or smaller than the reference TP + m, the tracking controller 28D compares the average TP with the reference TP - m to check whether or not the average TP satisfies the relationship "reference TP - m < average TP ≤ reference TP + m" (from route "no" of Step S83 to Step S86).

As a result of the comparison, if the average TP satisfies the relationship, the tracking controller 28D determines the beam weight in the vicinity (±X) of the beam weight ID transmitted (detected) at this time as the beam weight used for the calculation of the beam selector 23 and transmits the beam weight to the beam selector 23 (from route "yes" of Step S86 to Step S87).

If the variance value σ is equal to or larger than the reference variance value b ("no" of Step S85) or if the average TP is equal to or smaller than the reference TP - m ("no" of Step S86), the tracking controller 28D controls the tracking range to be widened (preferably, the entire range of the code book) (Step S88).

In the tenth embodiment, the beam weight ID that is the efficiency index in the first embodiment and the reception quality (TP) of the received signal that is the efficiency index in the fifth embodiment are used as an efficiency index of the beam weight detection process; the tracking range is determined (optimized) based on a result of the statistics process on the two indices; and the beam weight detection process (beam select process) is performed in the range, so that an optimal beam weight can be detected. As a result, according to this embodiment, in comparison with the first and fifth embodiments, the beam weight detection processing time can be further reduced, so that the power consumption of the MS2 can be further reduced. Moreover, a feedback information amount of the beam weight ID can be also reduced, so that a decrease in throughput of the uplink can be prevented. Further, usage efficiency of wireless resources of the uplink and, moreover, usage efficiency of wireless resources of the entire system can be further improved.

## Eleventh Embodiment

In comparison with the aforementioned MS2 shown in FIG. 3, an MS2 shown in FIG. 27 is added with an SINR statistics processor 29 having the same function as that of FIG. 5 and provided with a detection process timing controller 34C instead of the detection process timing controller 34.

In this eleventh embodiment, the SINR statistics processor 29 calculates the SINR of a pilot signal based on the channel estimation value and the beam weight of the pilot signal used for the calculation of the beam selector 23. The SINR statistics processor 29 performs a statistics process on a result of the calculation to obtain the average value (average SINR) of the SINR of the pilot signal.

The detection process timing controller (control unit) 34C controls the beam weight detection process timing (the beam weight detection process interval) of the beam selector 23 based on the variance value (or the standard deviation) of the beam weight ID obtained by the beam weight ID history processor (monitoring unit) 27 and the average SINR obtained by the SINR statistics processor (monitoring unit) 29. The detection process timing controller 34C according to the embodiment controls the beam weight detection process timing (interval) by using a combination of the operations (determination condition) shown in FIG. 4 and the operations (determination condition) shown in FIG. 7 or 8.

In the embodiment, the MS2 operates according to a flowchart shown in, for example, FIG. 28.

In the MS2, the beam weight ID history processor 27 stores a plurality of the histories of the beam weight ID detected by the beam selector 23 and calculates the statistics thereof, so that the (average) variance value of the beam weight ID is obtained. The SINR statistics processor 29 obtains the average SINR (Step S91).

The detection process timing controller 34C compares the obtained variance value σ with the reference variance value "a" to check whether or not the reference variance value "a" is larger (Step S92). If the variance value $_6$ is smaller, the detection process timing controller 34C compares the average SINR obtained by the SINR statistics processor 29 with the reference SINR + S to check whether or not the average SINR is larger(from route "yes" of Step S92 to Step S93).

As a result of the comparison, if the average SINR is larger, the detection process timing controller 34C controls the detection process for the beam weight IDs performed by the beam selector 23 to be in a sleep mode and stores the beam weight IDs detected at this time as a result of the detection (from route "yes" of Step S93 to Step S94).

If the variance value σ is equal to or larger than the reference variance value "a," the detection process timing controller 34C compares the variance value σ with the reference variance value b (b > a) to check whether or not the variance value σ satisfies the relationship "a ≤ σ < b" (from route "no" of Step S92 to Step S95). If the variance value σ satisfies the relationship, the detection process timing controller 34C compares the average SINR with the reference SINR - S to check whether or not the average SINR satisfies the relationship "reference SINR - S < average SINR ≤ reference SINR + S" (from route "yes" of Step S95 to Step S96).

If the average SINR is equal to or smaller than the reference SINR + S, the detection process timing controller 34C compares the average SINR with the reference SINR - S to check whether or not the average SINR satisfies the relationship "reference SINR - S < average SINR ≤ reference SINR + S" (from route "no" of Step S93 to Step S96).

As a result of the comparison, if the average SINR satisfies the relationship, the detection process timing controller 34C controls the calculation timing of the beam selector 23 so that the beam weight detection process is performed every Y*TTI (Y > 1) (from route "yes" of Step S96 to Step S97).

If the variance value σ is equal to or larger than the reference variance value b ("no" of Step S95) or if the average SINR is equal to or smaller than the reference SINR - S ("no" of Step S96), the detection process timing controller 34C controls the calculation timing of the beam selector 23 so that the beam weight detection process is performed in a shorter process interval (preferably, every TTI) (Step S98).

According to this embodiment, the beam weight ID that is the efficiency index in the first embodiment and the SINR etc. of the received signal that is the efficiency index in the third embodiment are used as an efficiency index of the beam weight detection process; and the interval (timing) of the beam weight detection process (beam select process) is determined (optimized) based on a result of the statistics process on the two indices, so that an optimal beam weight can be detected. As a result, according to the embodiment, in comparison with the first and third embodiments, the beam weight detection processing time can be further reduced, so that the power consumption of the MS2 can be further reduced. According to the embodiment, a feedback information amount (the number of feedback operations) of the beam weight ID can also be reduced, so that a decrease in throughput of the uplink can be prevented. According to the embodiment, usage efficiency of wireless resources of the uplink and, moreover, usage efficiency of wireless resources of the entire system can be further improved.

## Twelfth Embodiment

In comparison with the aforementioned MS2 shown in FIG. 3, an MS2 shown in FIG. 29 is added with a quality statistics processor 30 and a demodulator 31 having the same functions as those of FIG. 11 and provided with a detection process timing controller 34D instead of the detection process timing controller 34.

According to this embodiment, the quality statistics processor 30 can obtain the average TP of the data channel based on a result of the demodulation of the demodulator 31. The detection process timing controller (control unit) 34D controls the beam weight detection process timing (the beam weight detection process interval) of the beam selector 23 based on the variance value (or the standard deviation) of the beam weight ID obtained by the beam weight ID history processor (monitoring unit) 27 and the average TP obtained by the quality statistics processor (monitoring unit) 30.

The detection process timing controller 34D according to the embodiment controls the beam weight detection process timing (interval) by using a combination of the operations (determination condition) shown in FIG. 4 and the operations (determination condition) shown in FIG. 22.

In the embodiment, the MS2 operates according to a flowchart shown in, for example, FIG. 30.

In the MS2, the beam weight ID history processor 27 stores a plurality of the histories of the beam weight ID detected by the beam selector 23 and calculates the statistics thereof, so that the (average) variance value of the beam weight ID is obtained. The quality statistics processor 30 obtains the average TP (Step S101).

The detection process timing controller 34D compares the obtained variance value σ with the reference variance value "a" to check whether or not the reference variance value "a" is larger (Step S102). If the variance value σ is smaller, the detection process timing controller 34D compares the average TP obtained by the quality statistics processor 30 with the reference TP + m to check whether or not the average TP is larger (from route "yes" of Step S102 to Step S103).

As a result of the comparison, if the average TP is larger, the detection process timing controller 34D controls the detection process for the beam weight IDs performed by the beam selector 23 to be in a sleep mode and stores the beam weight IDs detected at this time as a result of the detection (from route "yes" of Step S103 to Step S104).

If the variance value σ is equal to or larger than the reference variance value "a," the detection process timing controller 34D compares the variance value σ with the reference variance value b (b > a) to check whether or not the variance value σ satisfies the relationship "a ≤ σ < b" (from route "no" of Step S102 to Step S105). If the variance value σ satisfies the relationship, the detection process timing controller 34D compares the average TP with the reference TP - m to check whether or not the average TP satisfies the relationship "reference TP - m < average TP≤ reference TP + m" (from route "yes" of Step S105 to Step S106).

If the average TP is equal to or smaller than the reference TP + m, the detection process timing controller 34D compares the average TP with the reference TP - m to check whether or not the average TP satisfies the relationship "reference TP - m < average TP ≤ reference TP + m" (from route "no" of Step S103 to Step S106).

As a result of the comparison, if the average TP satisfies the relationship, the detection process timing controller 34D controls the calculation timing of the beam selector 23 so that the beam weight detection process is performed every Y*TTI (Y > 1) (from route "yes" of Step S106 to Step S107).

If the variance value σ is equal to or larger than the reference variance value b ("no" of Step S105) or if the average TP is equal to or smaller than the reference TP- m ("no" of Step S106), the detection process timing controller 34D controls the calculation timing of the beam selector 23 so that the beam weight detection process is performed in a shorter process interval (preferably, every TTI) (Step S108).

In the twelfth embodiment, the beam weight ID that is the efficiency index in the first embodiment and the reception quality (TP) of the received signal that is the efficiency index in the fifth embodiment are used as an efficiency index of the beam weight detection process; and the interval (timing) of the beam weight detection process (beam select process) is determined (optimized) based on a result of the statistics process on the two indices, so that an optimal beam weight can be detected. As a result, according to the embodiment, in comparison with the first and fifth embodiments, the beam weight detection processing time can be further reduced, so that the power consumption of the MS2 can be further reduced. According to the embodiment, a feedback information amount (the number of feedback operations) of the beam weight ID can be also reduced, so that a decrease in throughput of the uplink can be prevented. According to the embodiment, usage efficiency of wireless resources of the uplink and, moreover, usage efficiency of wireless resources of the entire system can be further improved.

## Thirteenth Embodiment

In comparison with the aforementioned MS2 shown in FIG. 1, an MS2 shown in FIG. 31 is provided with a demodulator 31 having the same function as that of FIG. 11 at an output side of the complex multiplier 26. In comparison with the aforementioned MS2 shown in FIG. 1, an MS2 shown in FIG. 31 includes an SINR statistics processor 29 having the same function as that of FIG. 5 and a quality statistics processor 30 and a tracking controller 28E having the same functions as those of FIG. 11 instead of the beam weight ID history processor 27 and the tracking controller 28.

In this embodiment, the SINR statistics processor 29 calculates the SINR of a pilot signal based on the channel estimation value and the beam weight of the pilot signal used for the calculation of the beam selector 23. The SINR statistics processor 29 performs a statistics process on a result of the calculation to obtain the average value (average SINR) of the SINR of the pilot signal. The quality statistics processor 30 can obtain the average TP of the data channel based on a result of the demodulation of the demodulator 31.

The tracking controller (control unit) 28E determines and controls the tracking range of the beam weight based on the average SINR obtained by the SINR statistics processor (monitoring unit) 29 and the average TP obtained by the quality statistics processor (monitoring unit) 30.

The tracking controller 28E according to the embodiment controls the tracking range of the beam weight by using a combination of the operations (determination condition) shown in FIG. 7 (or FIG. 8) and the operations (determination condition) shown in FIG. 14 (or FIG. 13).

In the embodiment, the MS2 operates according to a flowchart shown in, for example, FIG. 32.

In the MS2, the SINR statistics processor 29 obtains the average SINR. The quality statistics processor 30 obtains the average TP (Step S111).

The tracking controller 28E compares the average TP obtained by the quality statistics processor 30 with the reference TP + m to check whether or not the average TP is larger (Step S112). If the average TP is larger, the tracking controller 28E compares the average SINR obtained by the SINR statistics processor 29 with the reference SINR + S to check whether or not the average SINR is larger (from route "yes" of Step S112 to Step S113).

As a result of the comparison, if the average SINR is larger, the tracking controller 28E controls the detection process for the beam weight IDs performed by the beam selector 23 to be in a sleep mode and stores the beam weight IDs detected at this time as a result of the detection (from route "yes" of Step S113 to Step S114).

If the average TP is equal to or smaller than the reference TP + m, the tracking controller 28E compares the average TP with the reference TP - m to check whether or not the average TP satisfies the relationship "reference TP-m < average TP ≤ reference TP + m" (from route "no" of Step S112 to Step S115). If the average TP satisfies the relationship, the tracking controller 28E compares the average SINR with the reference SINR - S to check whether or not the average SINR satisfies the relationship "reference SINR - S < average SINR ≤ reference SINR + S" (from route "yes" of Step S115 to Step S116).

If the average SINR is equal to or smaller than the reference SINR + S, the tracking controller 28E compares the average SINR with the reference SINR - S to check whether or not the average SINR satisfies the relationship "reference SINR - S < average SINR ≤ reference SINR + S" (from route "no" of Step S113 to Step S116).

As a result of the comparison, if the average SINR satisfies the relationship, the tracking controller 28E determines the beam weight in the vicinity (±X) of the beam weight ID transmitted (detected) at this time as the beam weight used for the calculation of the beam selector 23 and transmits the beam weight to the beam selector 23 (from route "yes" of Step S116 to Step S117).

If the average TP is equal to or smaller than the reference TP - m ("no" of Step S115) or if the average SINR is equal to or smaller than the reference SINR - S ("no" of Step S116), the tracking controller 28E controls the tracking range to be widened (preferably, the entire range of the code book) (Step S118).

In the 13th embodiment, the SINR etc. of the received signal that is the efficiency index in the third embodiment and the reception quality (TP) of the received signal that is the efficiency index in the fifth embodiment are used as an efficiency index of the beam weight detection process; the tracking range is determined (optimized) based on a result of the statistics process on the two indices; and the beam weight detection process (beam select process) is performed in the range, so that an optimal beam weight can be detected. As a result, according to the embodiment, in comparison with the third and fifth embodiments, the beam weight detection processing time can be further reduced, so that the power consumption of the MS2 can be further reduced. As a result, according to the embodiment, in comparison with the third and fifth embodiments, the beam weight detection processing time can be further reduced, so that the power consumption of the MS2 can be further reduced. According to the embodiment, a feedback information amount (the number of feedback operations) of the beam weight ID can be also reduced, so that a decrease in throughput of the uplink can be prevented. According to the embodiment, usage efficiency of wireless resources of the uplink and, moreover, usage efficiency of wireless resources of the entire system can be further improved.

## Fourteenth Embodiment

In comparison with the aforementioned MS2 shown in FIG. 3, an MS2 shown in FIG. 33 is provided with a demodulator 31 having the same function as that of FIG. 11 at the output side of the complex multiplier 26. In comparison with the aforementioned MS2 shown in FIG. 3, the MS2 shown in FIG. 33 includes an SINR statistics processor 29 having the same function as that of FIG. 5 and a quality statistics processor 30 and a detection process timing controller 34E having the same functions as those of FIG. 11 instead of the beam weight ID history processor 27 and the detection process timing controller 34.

In the 14th embodiment, the SINR statistics processor 29 calculates the SINR of a pilot signal based on the channel estimation value and the beam weight of the pilot signal used for the calculation of the beam selector 23. The SINR statistics processor 29 performs a statistics process on a result of the calculation to obtain the average value (average SINR) of the SINR of the pilot signal. The quality statistics processor 30 can obtain the average TP of the data channel based on a result of the demodulation of the demodulator 31.

The detection process timing controller (control unit) 34E controls the beam weight detection process timing (the beam weight detection process interval) of the beam selector 23 based on the average SINR obtained by the SINR statistics processor (monitoring unit) 29 and the average TP obtained by the quality statistics processor (monitoring unit) 30.

The detection process timing controller 34E according to the embodiment controls the beam weight detection process timing by using a combination of the operations (determination condition) shown in FIG. 19 and the operations (determination condition) shown in FIG. 22.

In the embodiment, the MS2 operates according to a flowchart shown in, for example, FIG. 34. In the MS2, the SINR statistics processor 29 obtains the average SINR. The quality statistics processor 30 obtains the average TP (Step S121).

The detection process timing controller 34E compares the average TP obtained by the quality statistics processor 30 with the reference TP + m to check whether or not the average TP is larger (Step S122). If the average TP is larger, the detection process timing controller 34E compares the average SINR obtained by the SINR statistics processor 29 with the reference SINR + S to check whether or not the average SINR is larger (from route "yes" of Step S122 to Step S123).

As a result of the comparison, if the average SINR is larger, the detection process timing controller 34E controls the detection process for the beam weight IDs performed by the beam selector 23 to be in a sleep mode and stores the beam weight IDs detected at this time as a result of the detection (from route "yes" of Step S123 to Step S124).

If the average TP is equal to or smaller than reference TP + m, the detection process timing controller 34E compares the average TP with the reference TP - m to check whether or not the average TP satisfies the relationship "reference TP - m < average TP ≤ reference TP + m (from route "no" of Step S122 to Step S125). If the average TP satisfies the relationship, the detection process timing controller 34E compares the average SINR with the reference SINR - S to check whether or not the average SINR satisfies the relationship "reference SINR - S < average SINR ≤ reference SINR + S (from route "yes" of Step S125 to Step S126).

If the average SINR is equal to or smaller than the reference SINR + S, the detection process timing controller 34E compares the average SINR with the reference SINR - S to check whether or not the average SINR satisfies the relationship "reference SINR - S < average SINR ≤ reference SINR + S" (from route "no" of Step S123 to Step S126).

As a result of the comparison, if the average SINR satisfies the relationship, the detection process timing controller 34E controls the calculation timing of the beam selector 23 so that the beam weight detection process is performed every Y*TTI (Y > 1) (from route "yes" of Step S126 to Step S127).

If the average TP is equal to or smaller than the reference TP - m ("no" of Step S125) or if the average SINR is equal to or smaller than the reference SINR - S ("no" of Step S126), the detection process timing controller 34E controls the calculation timing of the beam selector 23 so that the beam weight detection process is performed in a shorter process interval (preferably, every TTI) (Step S128).

In the 14th embodiment, the SINR etc. of the received signal that is the efficiency index in the third embodiment and the reception quality (TP) of the received signal that is the efficiency index in the fifth embodiment are used as an efficiency index of the beam weight detection process; and the interval (timing) of the beam weight detection process (beam select process) is determined (controlled) based on a result of the statistics process on the two indices, so that optimization can be implemented.

As a result, according to the embodiment, in comparison with the third and fifth embodiments, the beam weight detection processing time can be further reduced, so that the power consumption of the MS2 can be further reduced. According to the embodiment, a feedback information amount (the number of feedback operations) of the beam weight ID can be also reduced, so that a decrease in throughput of the uplink can be prevented. According to the embodiment, usage efficiency of wireless resources of the uplink and, moreover, usage efficiency of wireless resources of the entire system can be further improved.

## Fifteenth Embodiment

In comparison with the aforementioned MS2 shown in FIG. 1, an MS2 shown in FIG. 35 includes an SINR statistics processor 29 having the same function as that of FIG. 5, a GPS (Global Positioning System) processor 33, a moving speed detector 32, and a tracking controller 28F instead of the beam weight ID history processor 27 and the tracking controller 28.

In this embodiment, the SINR statistics processor 29 calculates the SINR of a pilot signal based on the channel estimation value and the beam weight of the pilot signal used for the calculation of the beam selector 23. The SINR statistics processor 29 performs a statistics process on a result of the calculation to obtain the average value (average SINR) of the SINR of the pilot signal.

The GPS processor 33 obtains current positioning information by receiving radio waves from satellites. The moving speed detector 32 detects moving speed information of the MS2 by using a result of the positioning performed by the GPS processor 33. The moving speed of the MS2 can be detected by using an acceleration sensor as well as the GPS.

The tracking controller (control unit) 28F determines and controls the tracking range of the beam weight based on the average SINR obtained by the SINR statistics processor 29 and the moving speed information of the MS2 detected by the moving speed detector 32.

Hereinafter, the operation of the MS2 having the aforementioned construction, particularly, the operation of controlling the tracking range will be described in detail with reference to a flowchart shown in FIG. 36.

In the MS2, the SINR statistics processor 29 obtains the average SINR. The moving speed detector 32 detects the moving speed information of the MS2 (Step S131).

The tracking controller 28F compares the moving speed information (hereinafter, referred to as a detected speed) detected by the moving speed detector 32 with reference speed information (hereinafter, referred to as a reference speed) A to check whether or not the detected speed is smaller (Step S132). If the detected speed is smaller, the tracking controller 28F compares the average SINR obtained by the SINR statistics processor 29 with the reference SINR + S to check whether or not the average SINR is larger (from route "yes" of Step S132 to Step S133).

As a result of the comparison, if the average SINR is larger, the tracking controller 28F controls the detection process for the beam weight IDs performed by the beam selector 23 to be in a sleep mode and stores the beam weight IDs detected at this time as a result of the detection (from route "yes" of Step S133 to Step S134).

If the detected speed is equal to or larger than the reference speed A, the tracking controller 28F compares the detected speed with a reference speed B (B > A) to check whether or not the detected speed satisfies the relationship "reference speed A ≤ detected speed < reference speed B" (from route "no" of Step S132 to Step S135). If the detected speed satisfies the relationship, the tracking controller 28F compares the average SINR with the reference SINR - S to check whether or not the average SINR satisfies the relationship "reference SINR - S < average SINR ≤ reference SINR + S" (from route "yes" of Step S135 to Step S136).

If the average SINR is equal to or smaller than the reference SINR + S, the tracking controller 28F compares the average SINR with the reference SINR - S to check whether or not the average SINR satisfies the relationship "reference SINR - S < average SINR ≤ reference SINR + S" (from route "no" of Step S133 to Step S136).

As a result of the comparison, if the average SINR satisfies the relationship, the tracking controller 28F determines the beam weight in the vicinity (±X) of the beam weight ID transmitted (detected) at this time as the beam weight used for the calculation of the beam selector 23 and transmits the beam weight to the beam selector 23 (from route "yes" of Step S136 to Step S137).

If the moving speed of the MS2 is slow, it may be estimated that beam switching needs not to be performed frequently. Therefore, the measured value of the SINR is also determined so as for the tracking range to be shortened or so as for the detection process not to be performed.

If the detected speed is equal to or larger than the reference speed B ("no" of Step S135) or if the average SINR is equal to or smaller than the reference SINR - S ("no" of Step S136), the tracking controller 28F controls the tracking range to be widened (preferably, the entire range of the code book) (Step S138).

If the moving speed of the MS2 is high, for example, if the MS2 moves in the vicinity of the BS100 at a high speed in the tangential direction with respect to a cell radius, the average SINR is large, but the beam switching needs to be performed frequently. Therefore, the tracking range needs to be widened.

Instead of the SINR statistics processor 29 (or in addition thereto), any one of the beam weight ID history processor 27 and the quality statistics processor 30 or the combination thereof may be provided, so that the tracking range or the beam weight detection process timing may be controlled based on a combination to a result of the detection of the moving speed detector 32, that is, a combination of the determination conditions.

In this embodiment, the tracking range is determined (controlled) by using the moving speed information of the MS2 as an efficiency index of the beam weight detection process, so that the optimization can be implemented. As a result, according to the embodiment, an actual moving state of the MS2 can be additionally used for optimization of the tracking range or the beam weight detection timing.

According to the embodiment, an accuracy of determination can be further improved in comparison with the aforementioned embodiments, so that an accuracy of determination and control of the tracking range or the beam weight detection process timing can be improved. Accordingly, it is possible to implement low power consumption of a new MS2 and to obtain a high usage efficiency of wireless resources.

**Relationship between Standard Deviation σ and S Value**

The coefficients S with respect to the SINRs according to the determination conditions described in the third, ninth, eleventh, thirteenth, fourteenth, and fifteenth embodiments (FIGS. 7, 24, 28, 32, 34, and 36) can be obtained as S = C, 2C, 3C, 4C, and 5C, in which a normalized constant or variable with respect to a time-varying standard deviation σ (see reference numeral 300), for example, a minimum tracking range is set to ±C as shown in FIG. 37 (see reference numeral 400).

**Statistics**

According to the above-described embodiments of the system, it should be understood that a change in the reception environment is monitored based on a received signal, and the tracking range, that is, a detection range of the beam weight or the interval (timing) of the beam weight detection process can be controlled (optimized) according to a monitoring result. In addition, it should be understood that the a monitoring unit that monitors the change in the reception environment monitors any one of statistics information on history of detected beam weight IDs, statistics information on reception quality information such as SINR or TP, and moving speed information of an MS2.

According to the system, any parameter varying with a change in the reception environment may be adapted to the aforementioned embodiments, and the beam weight detection process can be optimized based on statistics information thereof.

The present invention may be implemented partly or wholly in the form of software executed by a general-purpose processor or DSP of a receiver such as a mobile station (MS) of a wireless communication system. Such software may also be implemented in a base station (BS) of a wireless communication system for the purpose of processing MIMO signals received from MSs served by the BS. The software may be recorded on a storage medium or downloaded from a network such as the Internet.

Although the embodiment has been described with reference to particular embodiments, it will be understood to those skilled in the art that the invention is capable of a variety of alternative embodiments. Features of the different embodiments may be combined as appropriate. Moreover, not all disclosed features need to be included in any single embodiment.

## Claims

**1.** A method of controlling beam weight detection in a wireless communication system including a transmitter that multiplies a plurality of transmission signals with a plurality of beam weights to transmit the transmission signal through a plurality of antennas and a receiver that receives the transmission signals, detects a specific beam weight of which reception state is a specific state among a plurality of to-be-detected beam weights, and notifies the transmitter of the detection of the specific beam weight, the method comprising:
wherein the receiver performs:

monitoring a state of variation in the beam weight by performing a statistics process on history of previously-detected beam weights; and
controlling the number of the-to-be-detected beam weights or a detection timing of the specific beam weight according to a monitoring result.

**2.** The method of controlling beam weight detection according to claim 1, wherein the receiver controls the number of the to-be-detected beam weight to be reduced so as for the monitoring result to represent smaller variation.

**3.** The method of controlling beam weight detection according to claim 1, wherein the receiver controls a detection interval of the specific beam weight to be widened so as for the monitoring result to represent smaller variation.

**4.** A method of controlling beam weight detection in a wireless communication system including a transmitter which multiplies a plurality of transmission signals with a plurality of beam weights to transmit the transmission signal through a plurality of antennas and a receiver which receives the transmission signals, detects a specific beam weight of which reception state is a specific state among a plurality of to-be-detected beam weights, and notifies the transmitter of the detection of the specific beam weight, the method comprising:
wherein the receiver performs:

monitoring a state of variation in the beam weight by performing a statistics process on history of information on reception quality of the transmission signal; and
controlling the number of the-to-be-detected beam weights or a detection timing of the specific beam weight according to a monitoring result.

**5.** The method of controlling beam weight detection according to claim 4, wherein the receiver controls the number of the to-be-detected beam weight to be reduced so as for the monitoring result to represent smaller variation.

6. The method of controlling beam weight detection according to claim 4, wherein the receiver controls a detection interval of the specific beam weight to be widened so as for the monitoring result to represent smaller variation.

7. The method of controlling beam weight detection according to claim 4, wherein the information on reception quality is information on reception SINR or reception throughput.

8. A receiver in a wireless communication system, the system including a transmitter that multiplies a plurality of transmission signals with a plurality of beam weights to transmit the transmission signal through a plurality of antennas, the receiver arranged to receive the transmission signals, detect a specific beam weight of which reception state is a specific state among a plurality of to-be-detected beam weights, and notify the transmitter of the detection of the specific beam weight, the receiver comprising:

   monitoring unit that monitors a state of variation in the beam weight by performing a statistics process on history of previously-detected beam weights; and
   control unit that controls the number of the-to-be-detected beam weights or a detection timing of the specific beam weight according to a monitoring result.

9. The receiver according to claim 8, wherein the control unit controls the number of the to-be-detected beam weight to be reduced so as for the monitoring result to represent smaller variation.

10. The receiver according to claim 8, wherein the control unit controls a detection interval of the specific beam weight to be widened so as for the monitoring result to represent smaller variation.

FIG. 1

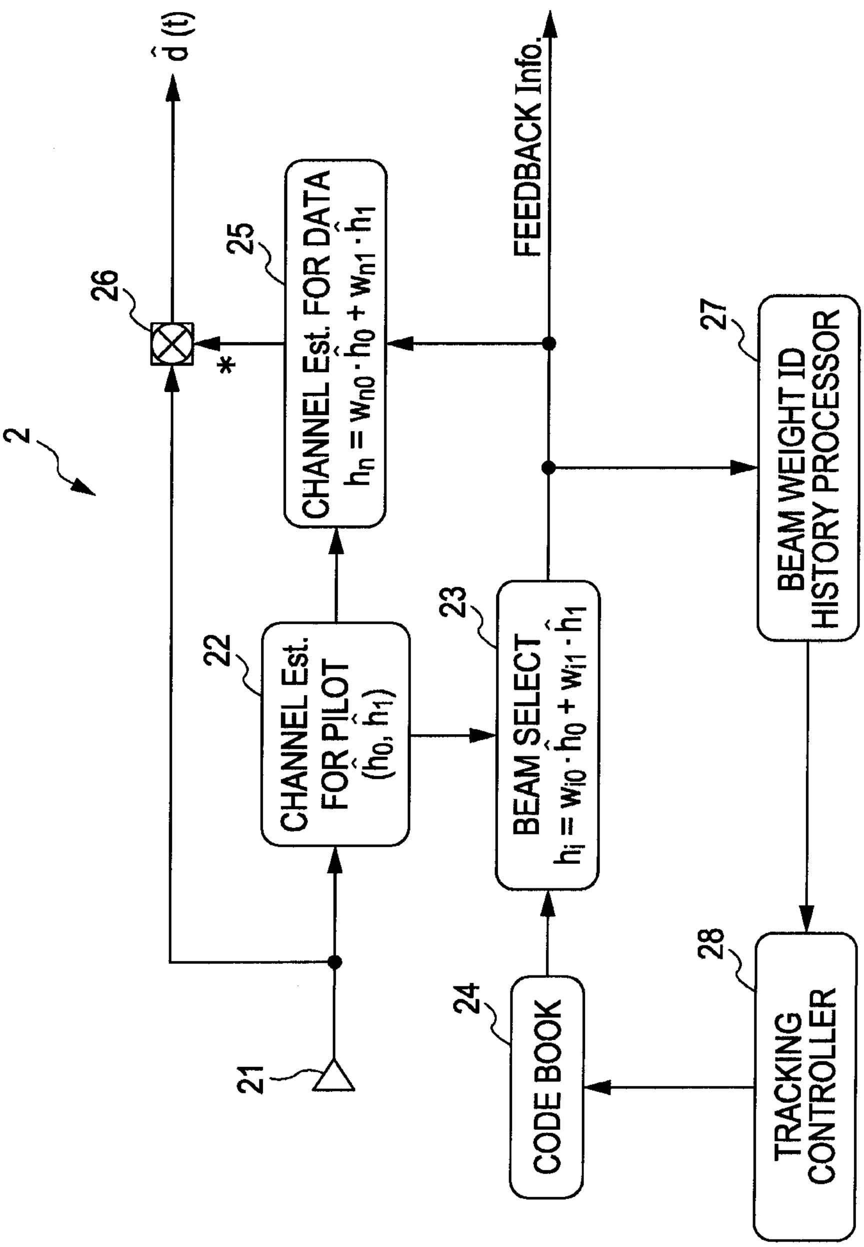
2
21
22
CHANNEL Est.
FOR PILOT
$(\hat{h}_0, \hat{h}_1)$
23
BEAM SELECT
$h_i = w_{i0} \cdot \hat{h}_0 + w_{i1} \cdot \hat{h}_1$
24
CODE BOOK
25
CHANNEL Est. FOR DATA
$h_n = w_{n0} \cdot \hat{h}_0 + w_{n1} \cdot \hat{h}_1$
26
*
$\hat{d}(t)$
FEEDBACK Info.
27
BEAM WEIGHT ID
HISTORY PROCESSOR
28
TRACKING
CONTROLLER

FIG. 2

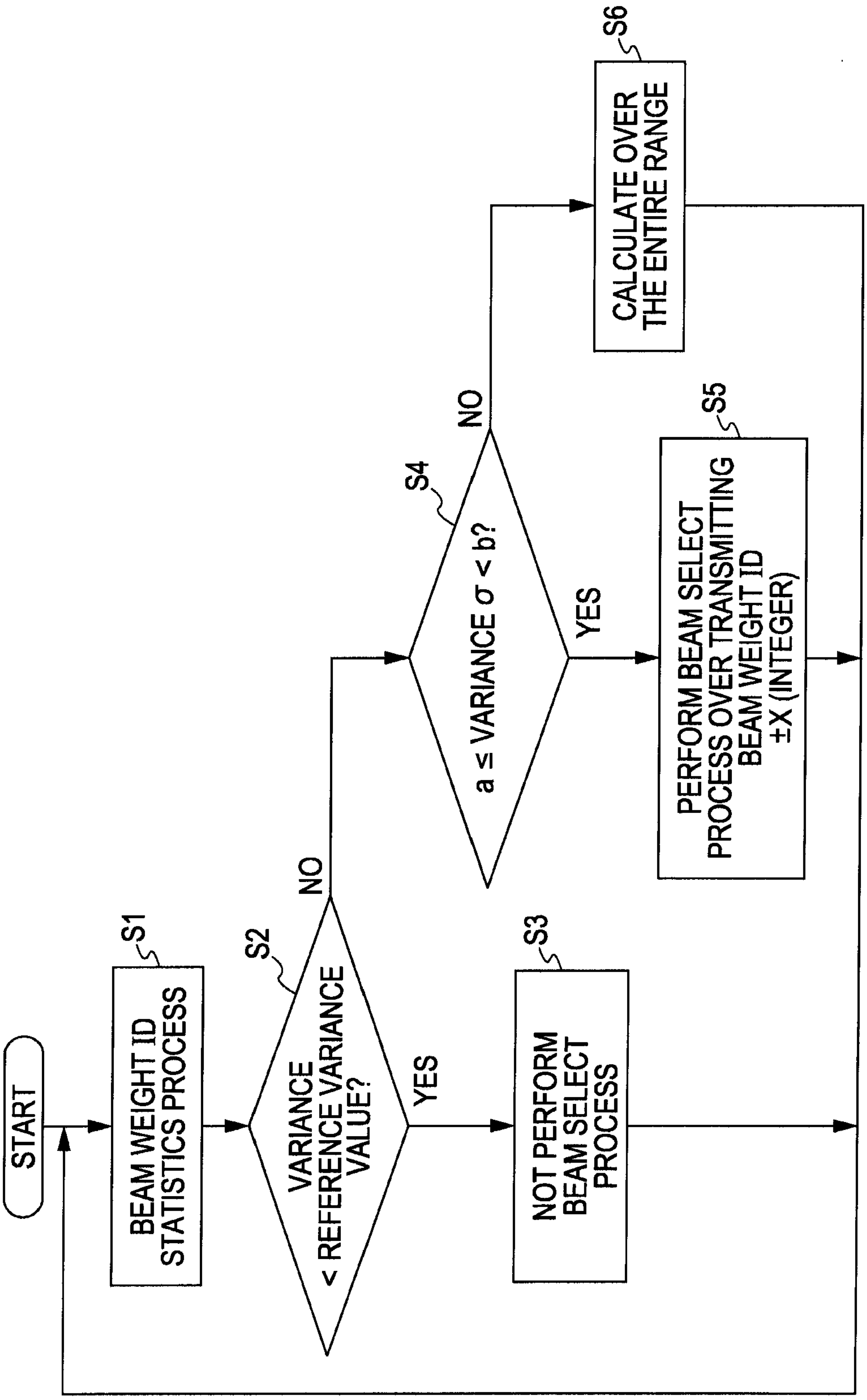
START
BEAM WEIGHT ID STATISTICS PROCESS
S1
VARIANCE < REFERENCE VARIANCE VALUE?
S2
YES
NO
NOT PERFORM BEAM SELECT PROCESS
S3
a ≤ VARIANCE σ < b?
S4
YES
NO
PERFORM BEAM SELECT PROCESS OVER TRANSMITTING BEAM WEIGHT ID ±X (INTEGER)
S5
CALCULATE OVER THE ENTIRE RANGE
S6

FIG. 3

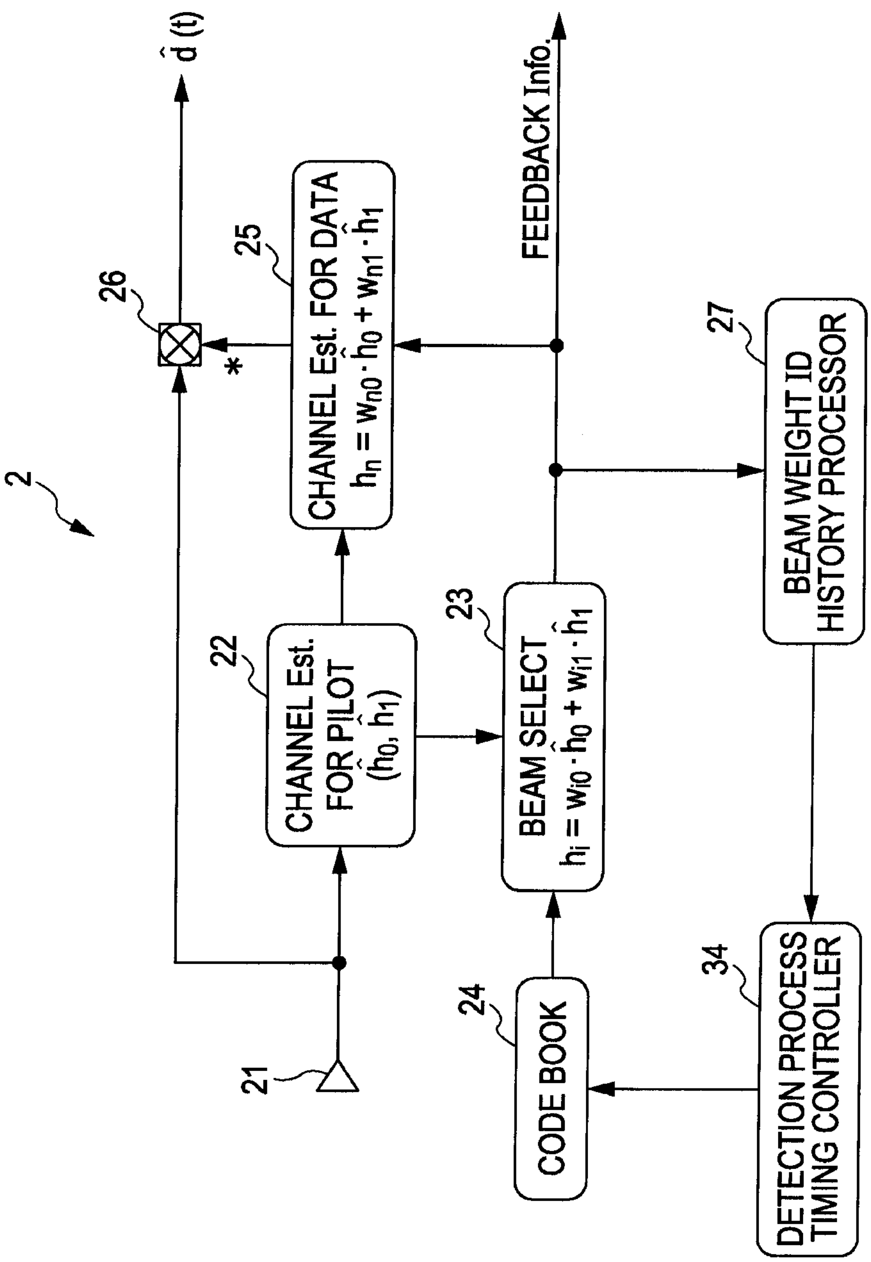
2
21
22
CHANNEL Est. FOR PILOT ($\hat{h}_0$, $\hat{h}_1$)
23
BEAM SELECT $h_i = w_{i0} \cdot \hat{h}_0 + w_{i1} \cdot \hat{h}_1$
24
CODE BOOK
25
CHANNEL Est. FOR DATA $h_n = w_{n0} \cdot \hat{h}_0 + w_{n1} \cdot \hat{h}_1$
26
*
$\hat{d}$ (t)
FEEDBACK Info.
27
BEAM WEIGHT ID HISTORY PROCESSOR
34
DETECTION PROCESS TIMING CONTROLLER

FIG. 4

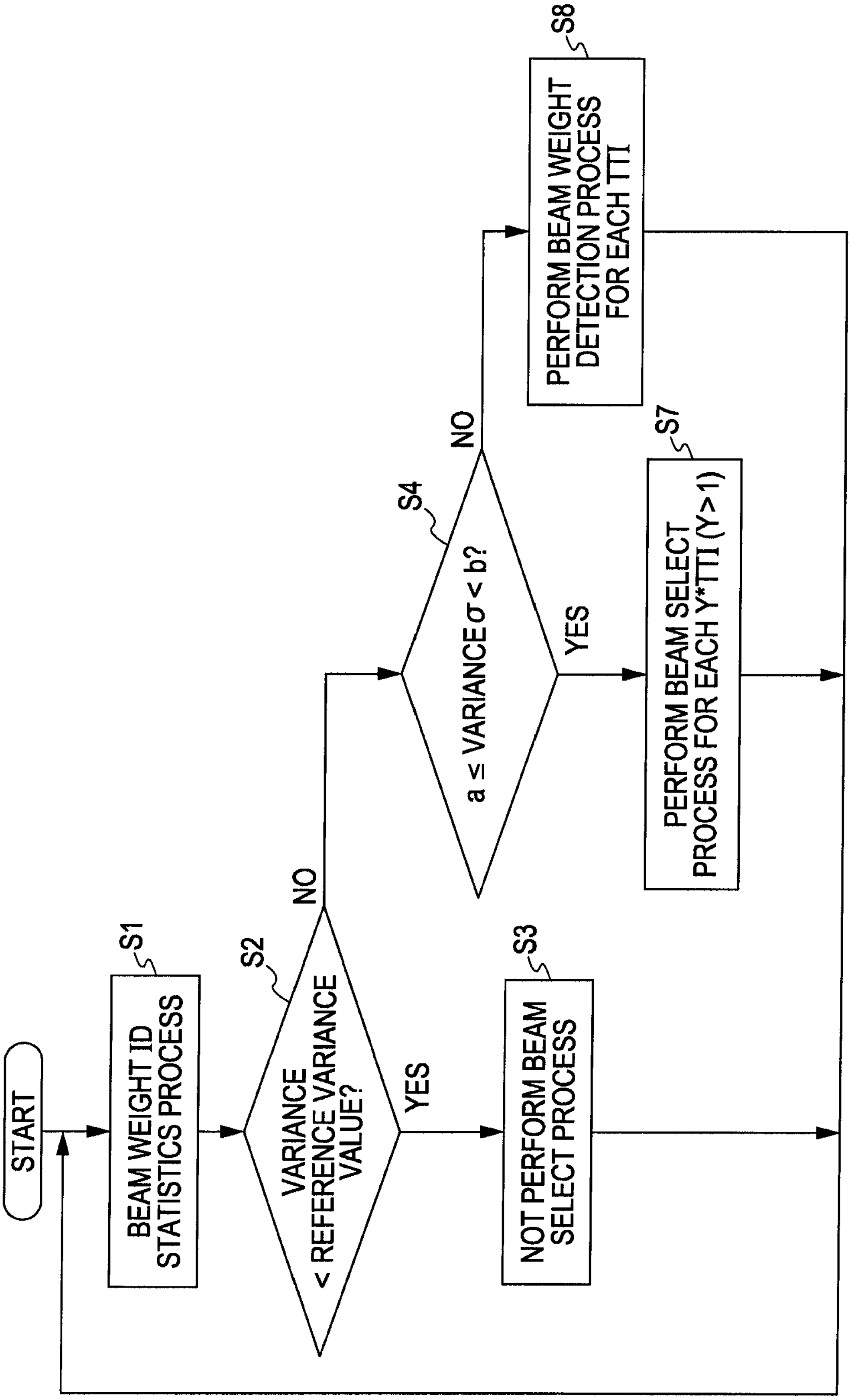
START
BEAM WEIGHT ID STATISTICS PROCESS
S1
VARIANCE < REFERENCE VARIANCE VALUE?
S2
YES
NO
NOT PERFORM BEAM SELECT PROCESS
S3
a ≤ VARIANCE σ < b?
S4
YES
NO
PERFORM BEAM SELECT PROCESS FOR EACH Y*TTI (Y>1)
S7
PERFORM BEAM WEIGHT DETECTION PROCESS FOR EACH TTI
S8

FIG. 5

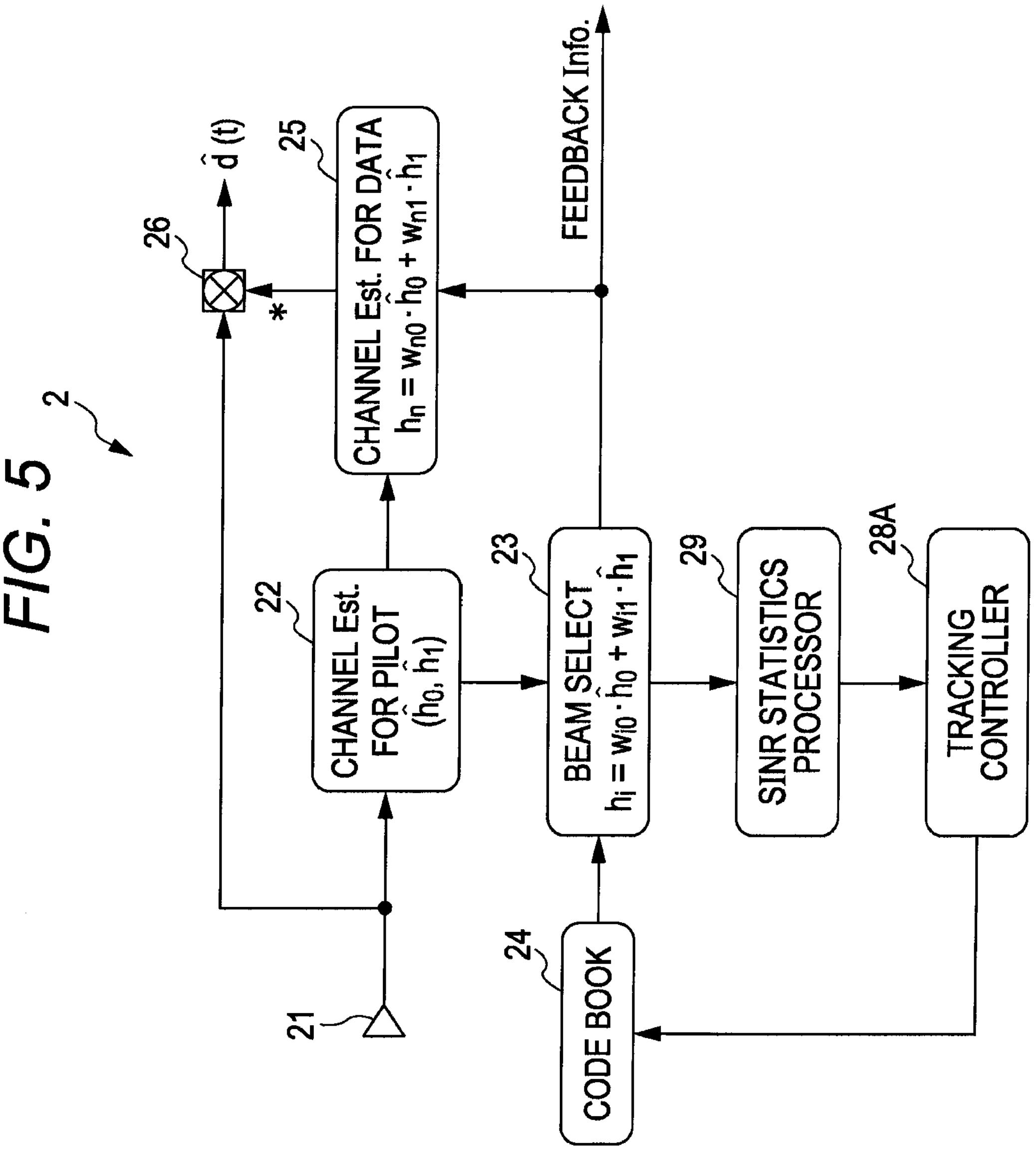
2
21
22
CHANNEL Est.
FOR PILOT
($\hat{h}_0$, $\hat{h}_1$)
23
BEAM SELECT
$h_i = w_{i0} \cdot \hat{h}_0 + w_{i1} \cdot \hat{h}_1$
24
CODE BOOK
25
CHANNEL Est. FOR DATA
$h_n = w_{n0} \cdot \hat{h}_0 + w_{n1} \cdot \hat{h}_1$
26
*
$\hat{d}$ (t)
FEEDBACK Info.
29
SINR STATISTICS
PROCESSOR
28A
TRACKING
CONTROLLER

FIG. 6

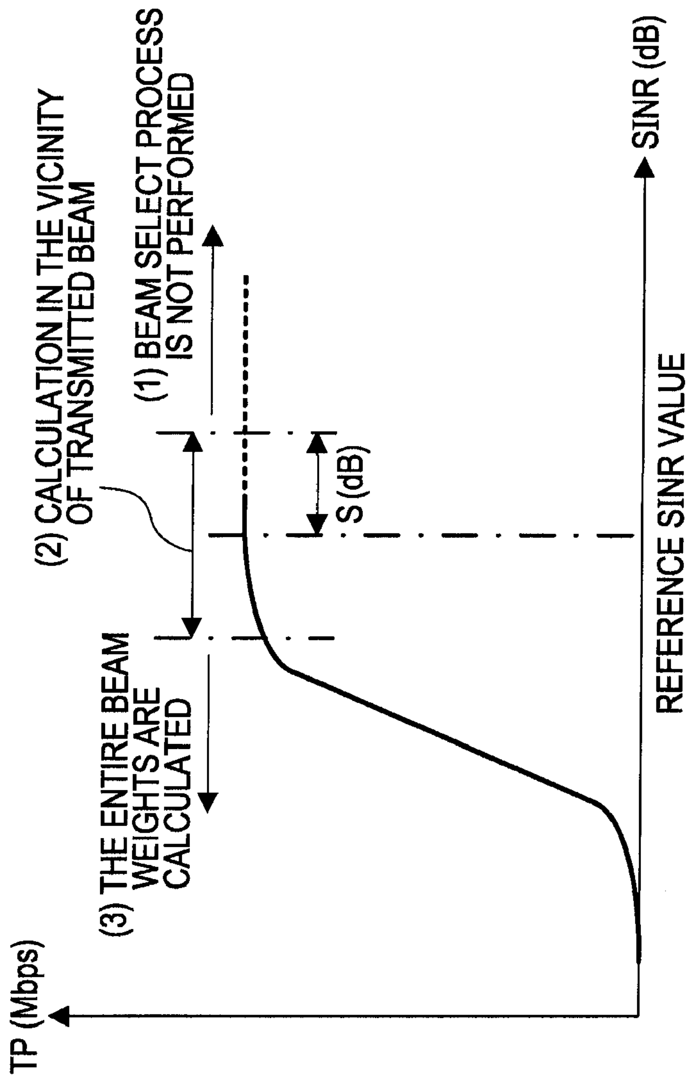
TP (Mbps)
SINR (dB)
(1) BEAM SELECT PROCESS IS NOT PERFORMED
(2) CALCULATION IN THE VICINITY OF TRANSMITTED BEAM
(3) THE ENTIRE BEAM WEIGHTS ARE CALCULATED
S (dB)
REFERENCE SINR VALUE

FIG. 7

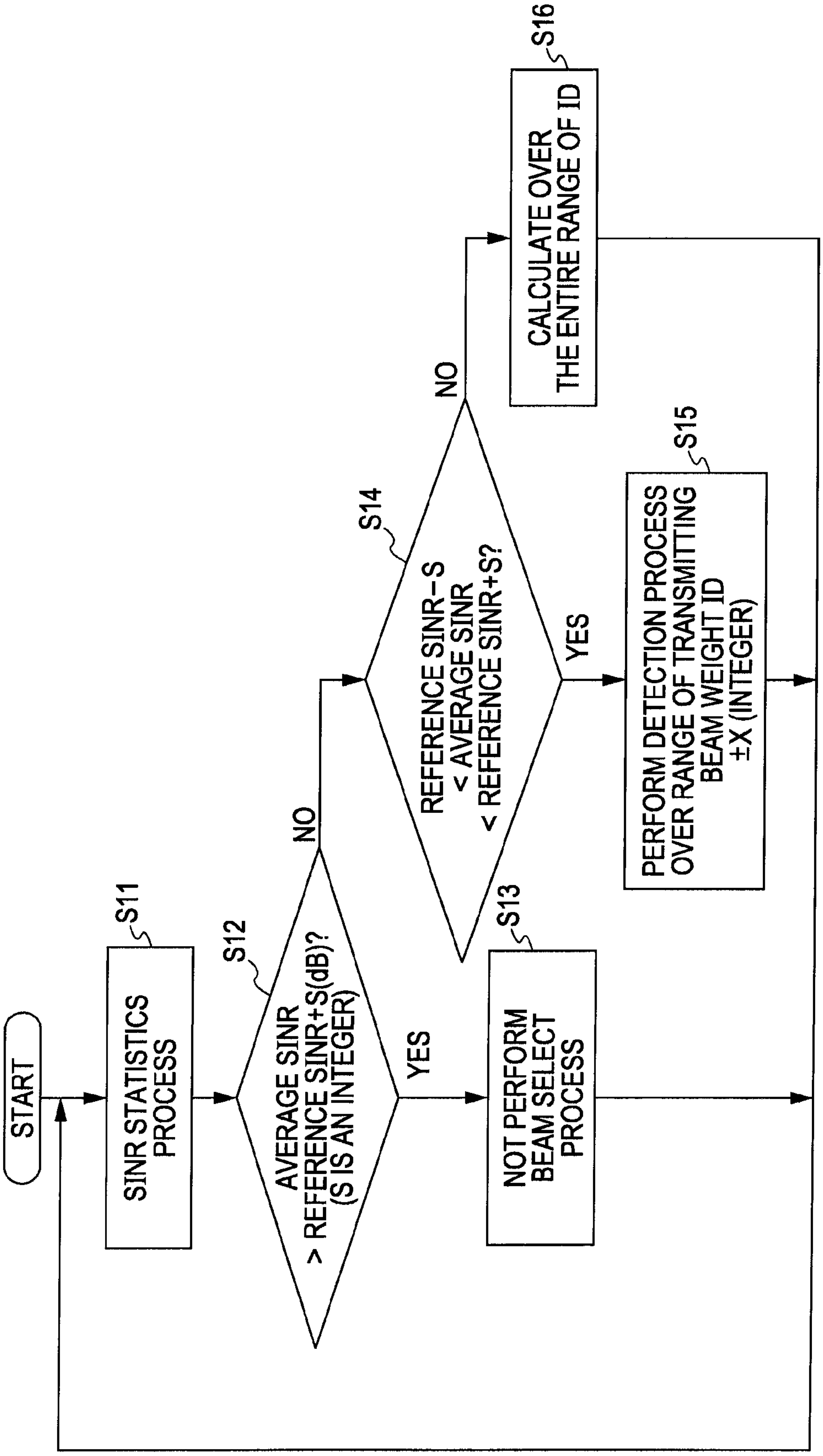
START
SINR STATISTICS PROCESS
S11
AVERAGE SINR > REFERENCE SINR+S(dB)? (S IS AN INTEGER)
S12
YES
NO
NOT PERFORM BEAM SELECT PROCESS
S13
REFERENCE SINR−S < AVERAGE SINR < REFERENCE SINR+S?
S14
YES
NO
PERFORM DETECTION PROCESS OVER RANGE OF TRANSMITTING BEAM WEIGHT ID ±X (INTEGER)
S15
CALCULATE OVER THE ENTIRE RANGE OF ID
S16

FIG. 8

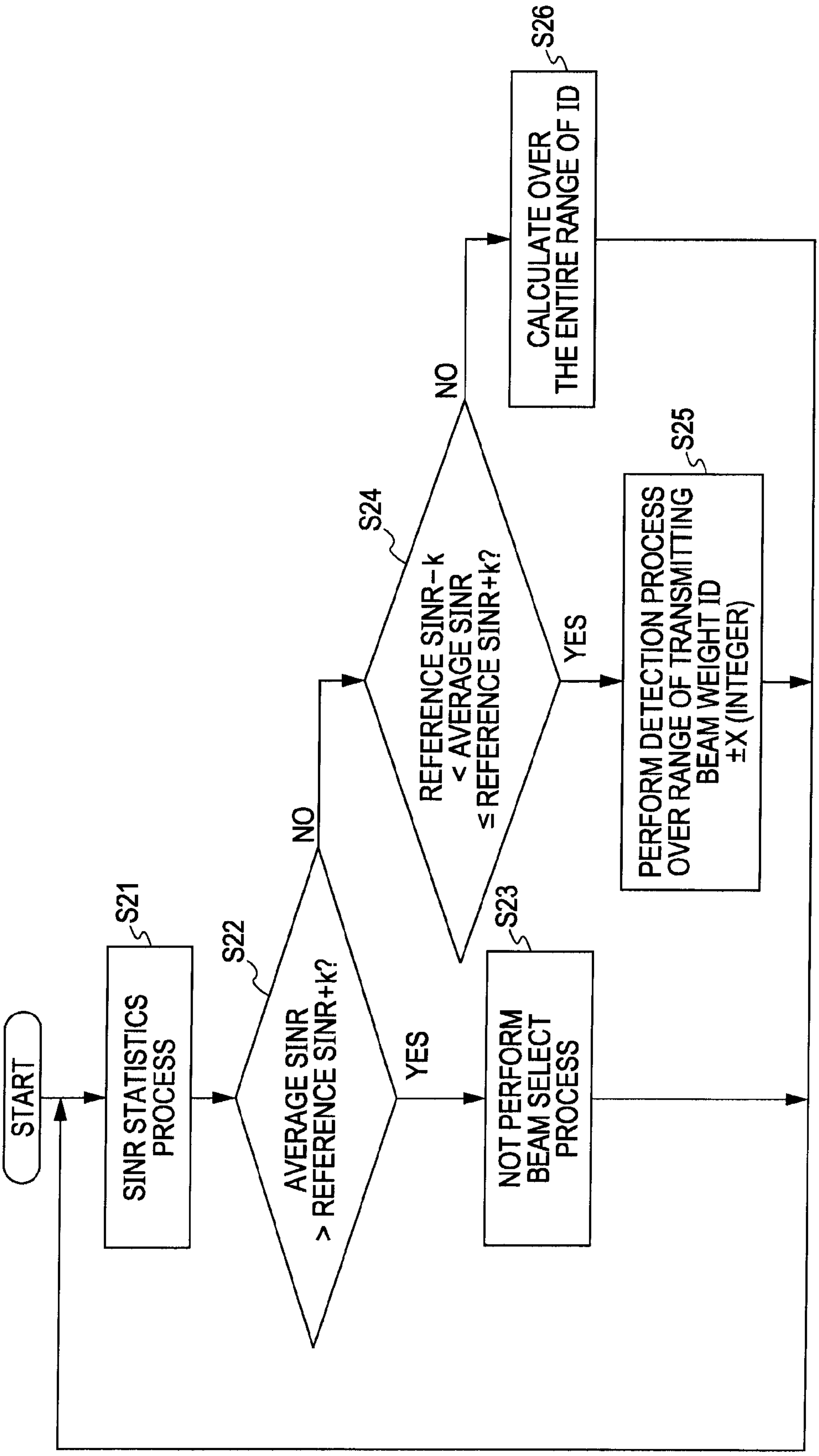
START
SINR STATISTICS PROCESS
S21
AVERAGE SINR > REFERENCE SINR+k?
S22
YES
NO
NOT PERFORM BEAM SELECT PROCESS
S23
REFERENCE SINR−k < AVERAGE SINR ≤ REFERENCE SINR+k?
S24
YES
NO
PERFORM DETECTION PROCESS OVER RANGE OF TRANSMITTING BEAM WEIGHT ID ±X (INTEGER)
S25
CALCULATE OVER THE ENTIRE RANGE OF ID
S26

FIG. 9

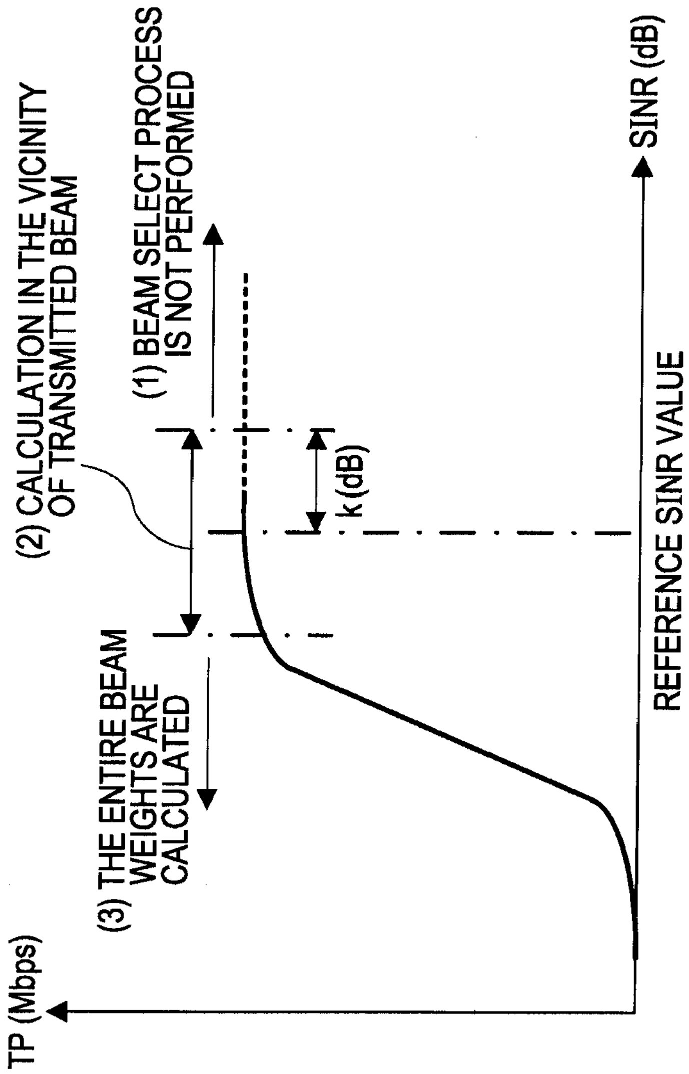
TP (Mbps)
SINR (dB)
(1) BEAM SELECT PROCESS IS NOT PERFORMED
(2) CALCULATION IN THE VICINITY OF TRANSMITTED BEAM
(3) THE ENTIRE BEAM WEIGHTS ARE CALCULATED
k (dB)
REFERENCE SINR VALUE

FIG. 10A

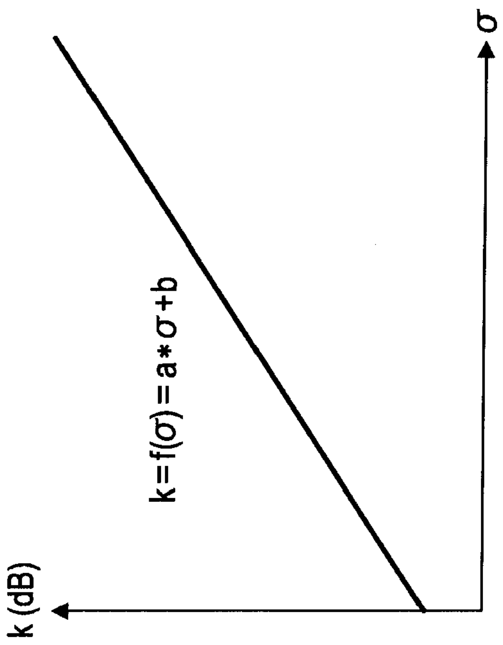


FIG. 10B

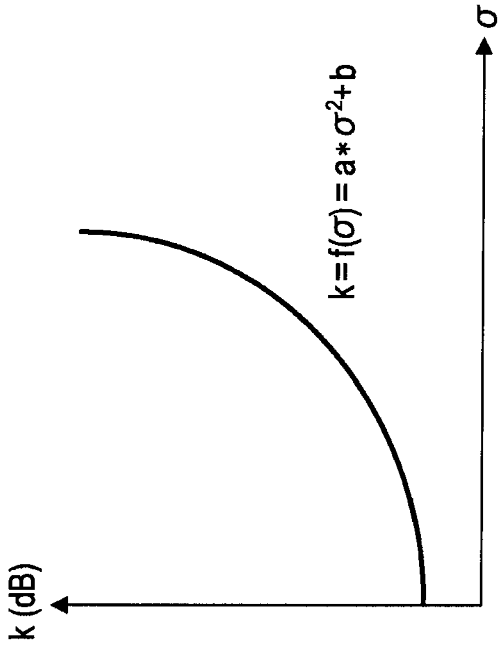

FIG. 11

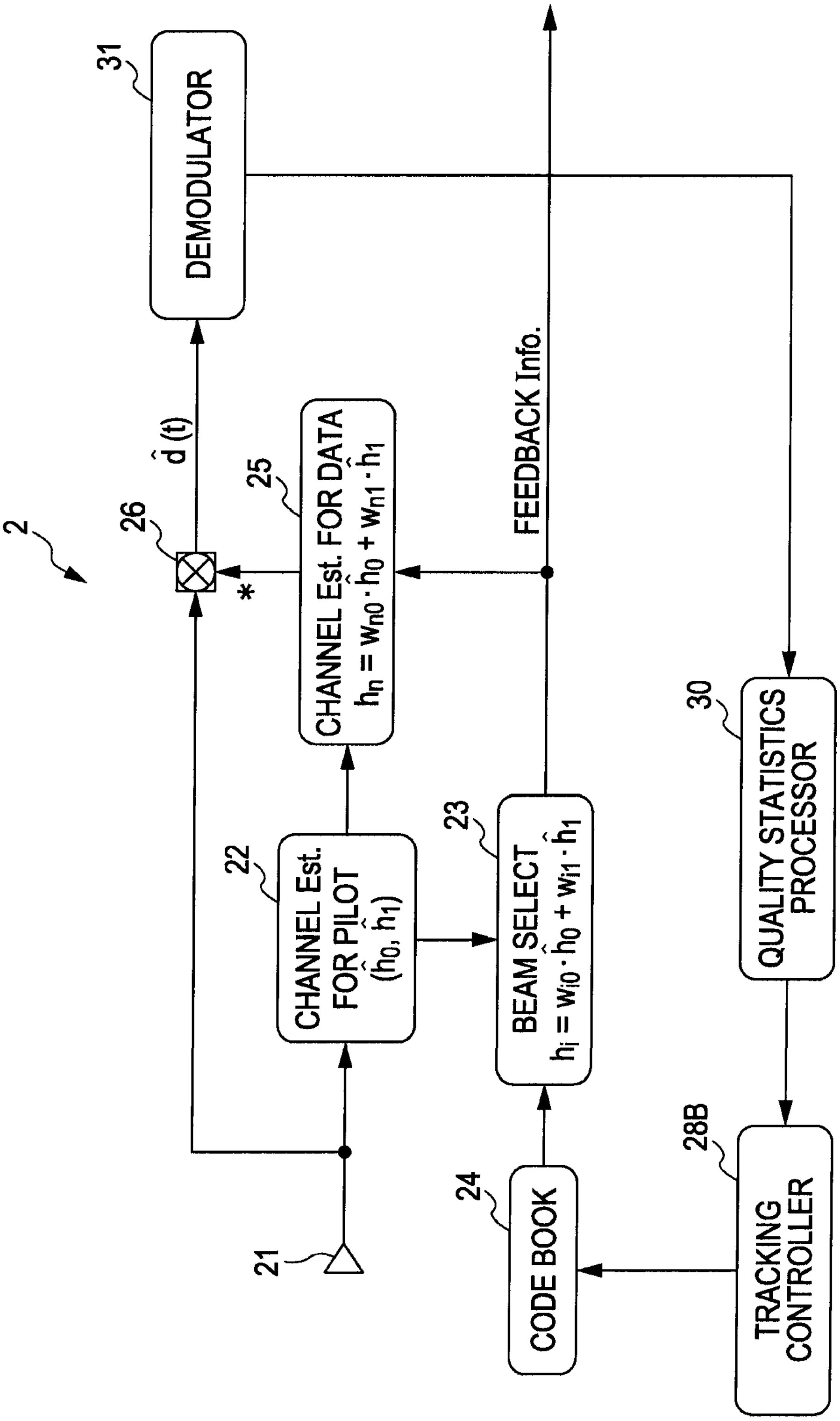
2
21
22
CHANNEL Est. FOR PILOT ($\hat{h}_0$, $\hat{h}_1$)
23
BEAM SELECT $h_i = w_{i0} \cdot \hat{h}_0 + w_{i1} \cdot \hat{h}_1$
24
CODE BOOK
25
CHANNEL Est. FOR DATA $h_n = w_{n0} \cdot \hat{h}_0 + w_{n1} \cdot \hat{h}_1$
26
*
$\hat{d}$ (t)
31
DEMODULATOR
FEEDBACK Info.
30
QUALITY STATISTICS PROCESSOR
28B
TRACKING CONTROLLER

FIG. 12

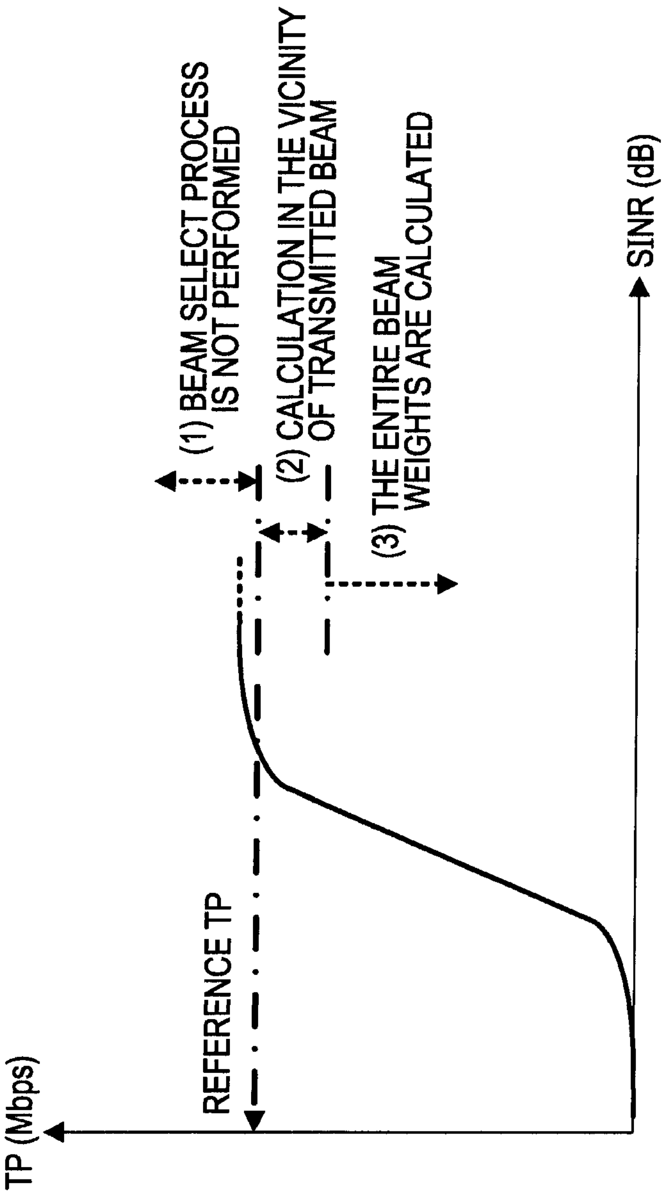
TP (Mbps)
REFERENCE TP
(1) BEAM SELECT PROCESS IS NOT PERFORMED
(2) CALCULATION IN THE VICINITY OF TRANSMITTED BEAM
(3) THE ENTIRE BEAM WEIGHTS ARE CALCULATED
SINR (dB)

FIG. 13

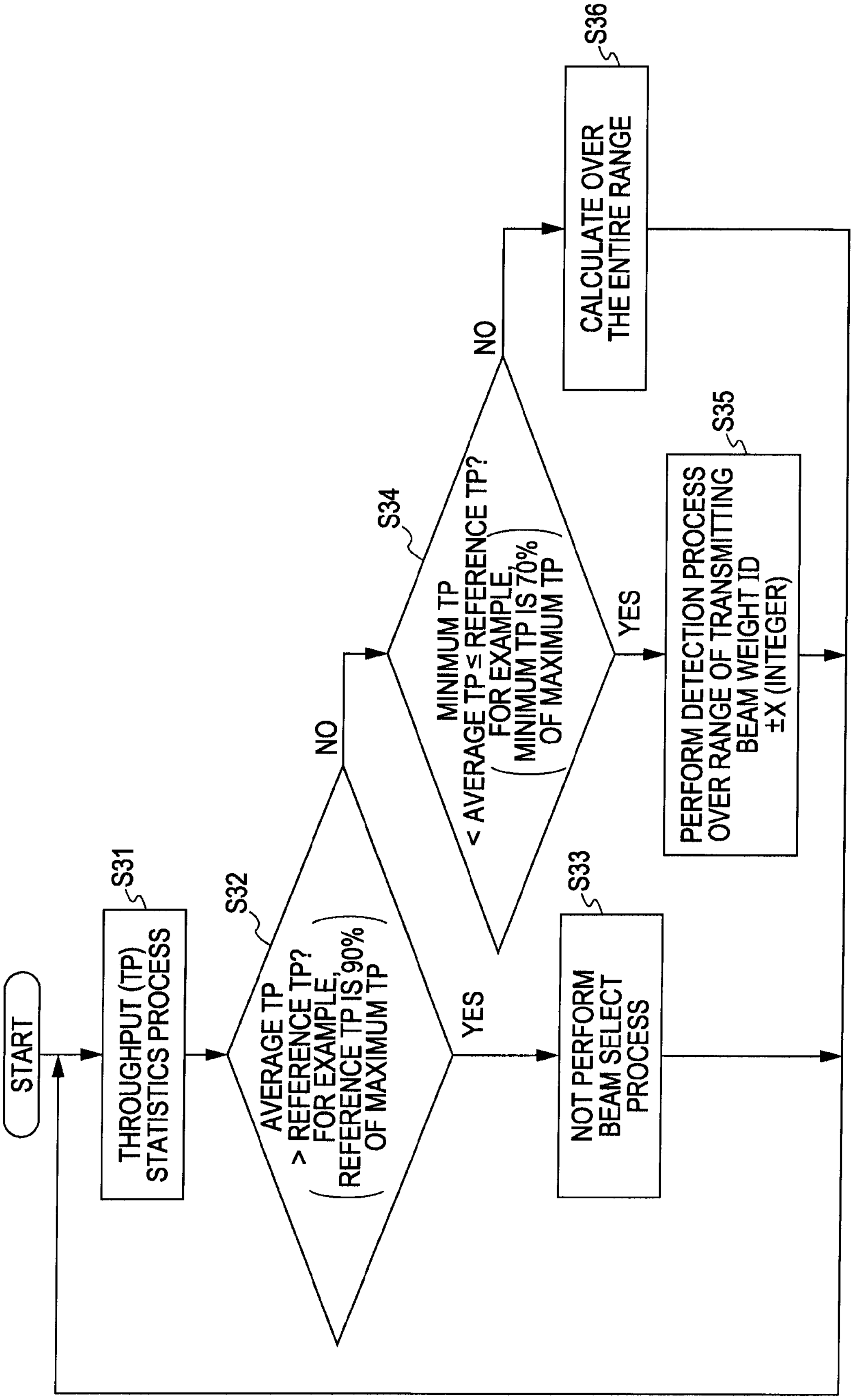
START
S31
THROUGHPUT (TP) STATISTICS PROCESS
S32
AVERAGE TP > REFERENCE TP? (FOR EXAMPLE, REFERENCE TP IS 90% OF MAXIMUM TP)
YES
NO
S33
NOT PERFORM BEAM SELECT PROCESS
S34
MINIMUM TP < AVERAGE TP ≤ REFERENCE TP? (FOR EXAMPLE, MINIMUM TP IS 70% OF MAXIMUM TP)
YES
NO
S35
PERFORM DETECTION PROCESS OVER RANGE OF TRANSMITTING BEAM WEIGHT ID ±X (INTEGER)
S36
CALCULATE OVER THE ENTIRE RANGE

FIG. 14

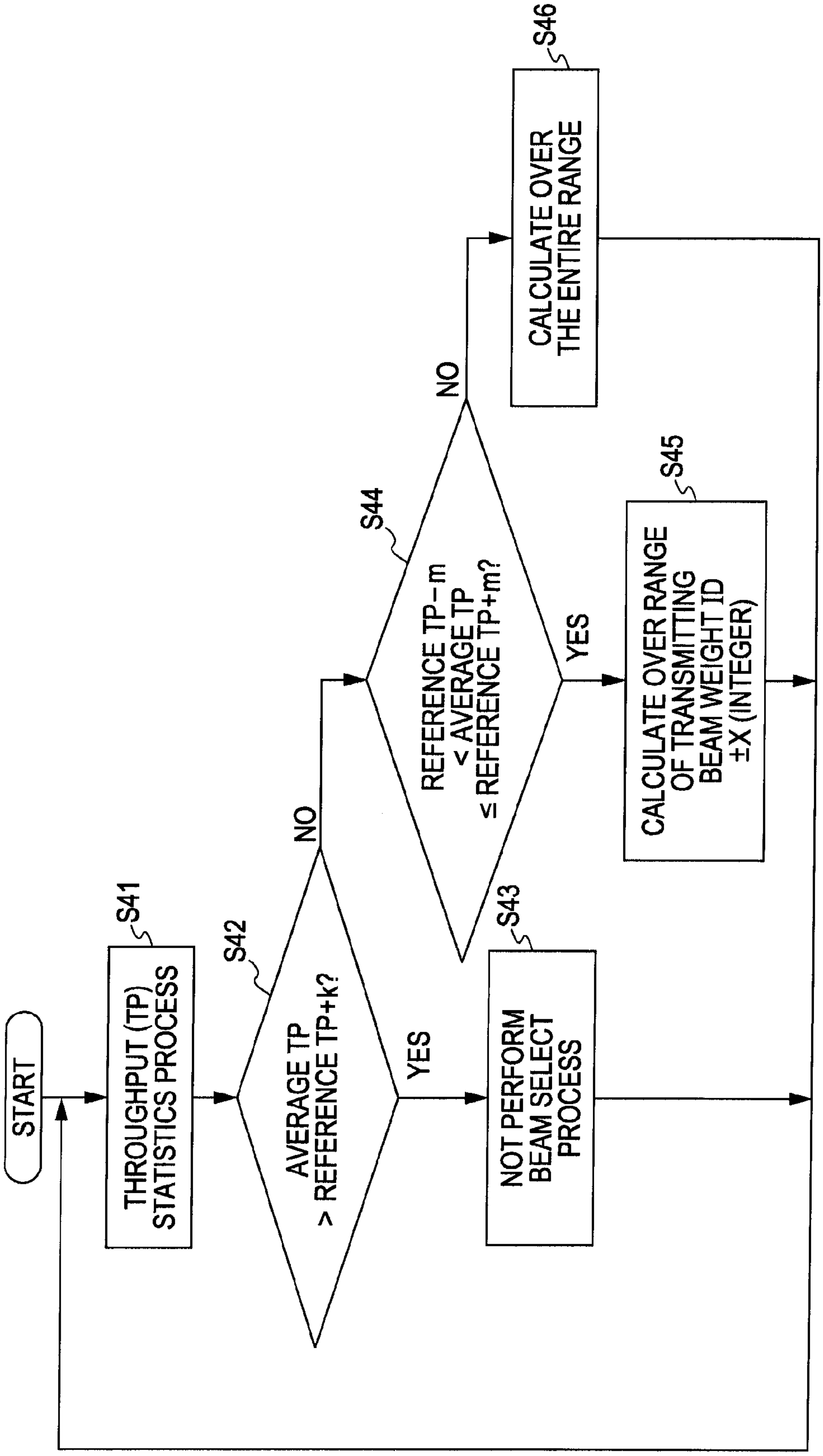
START
THROUGHPUT (TP) STATISTICS PROCESS
S41
AVERAGE TP > REFERENCE TP+k?
S42
YES
NO
NOT PERFORM BEAM SELECT PROCESS
S43
REFERENCE TP−m < AVERAGE TP ≤ REFERENCE TP+m?
S44
YES
NO
CALCULATE OVER RANGE OF TRANSMITTING BEAM WEIGHT ID ±X (INTEGER)
S45
CALCULATE OVER THE ENTIRE RANGE
S46

FIG. 15

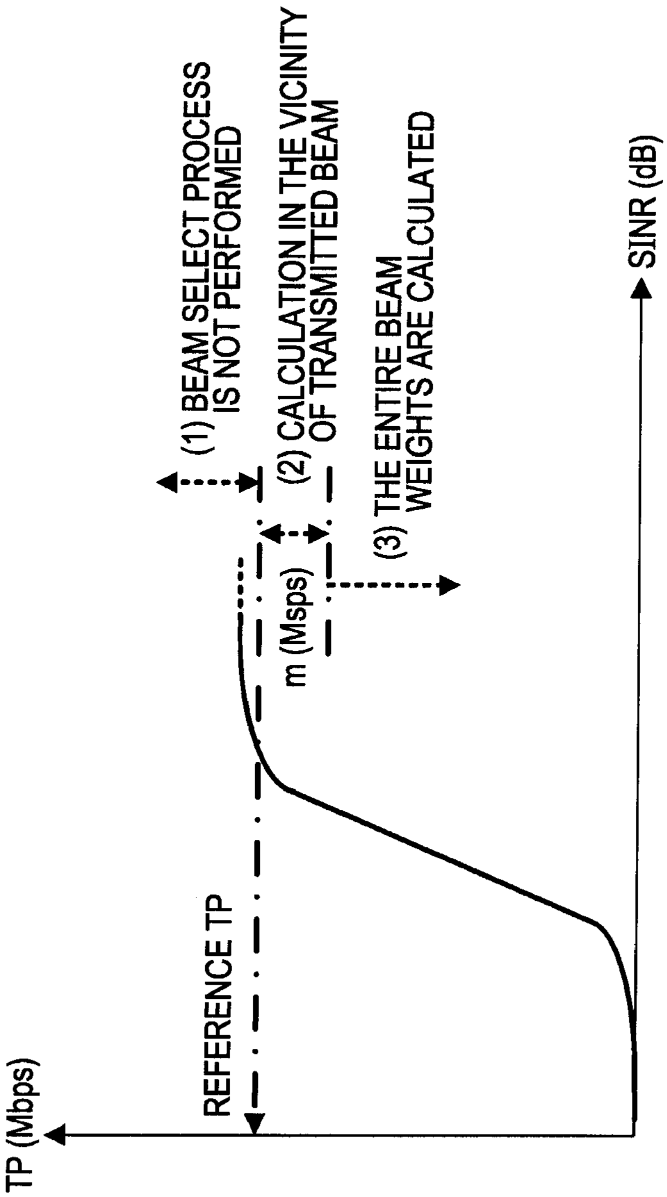
TP (Mbps)
REFERENCE TP
m (Msps)
(1) BEAM SELECT PROCESS
IS NOT PERFORMED
(2) CALCULATION IN THE VICINITY
OF TRANSMITTED BEAM
(3) THE ENTIRE BEAM
WEIGHTS ARE CALCULATED
SINR (dB)

FIG. 16A

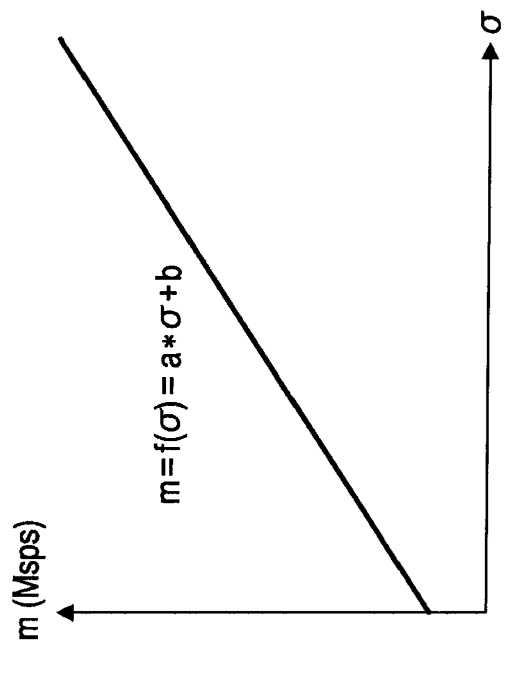


FIG. 16B

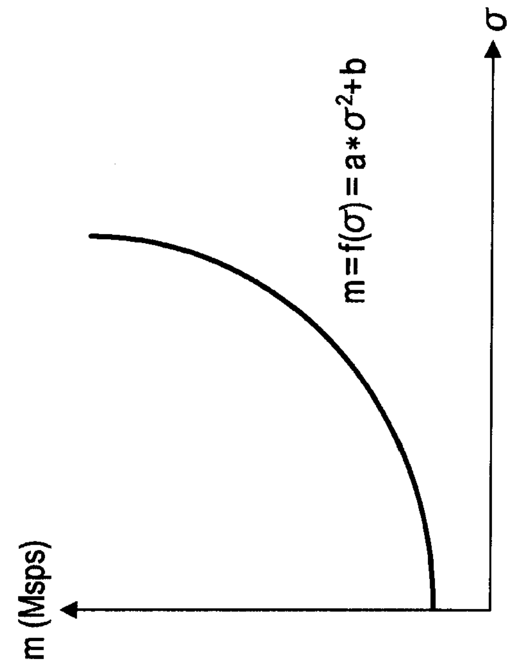

FIG. 17

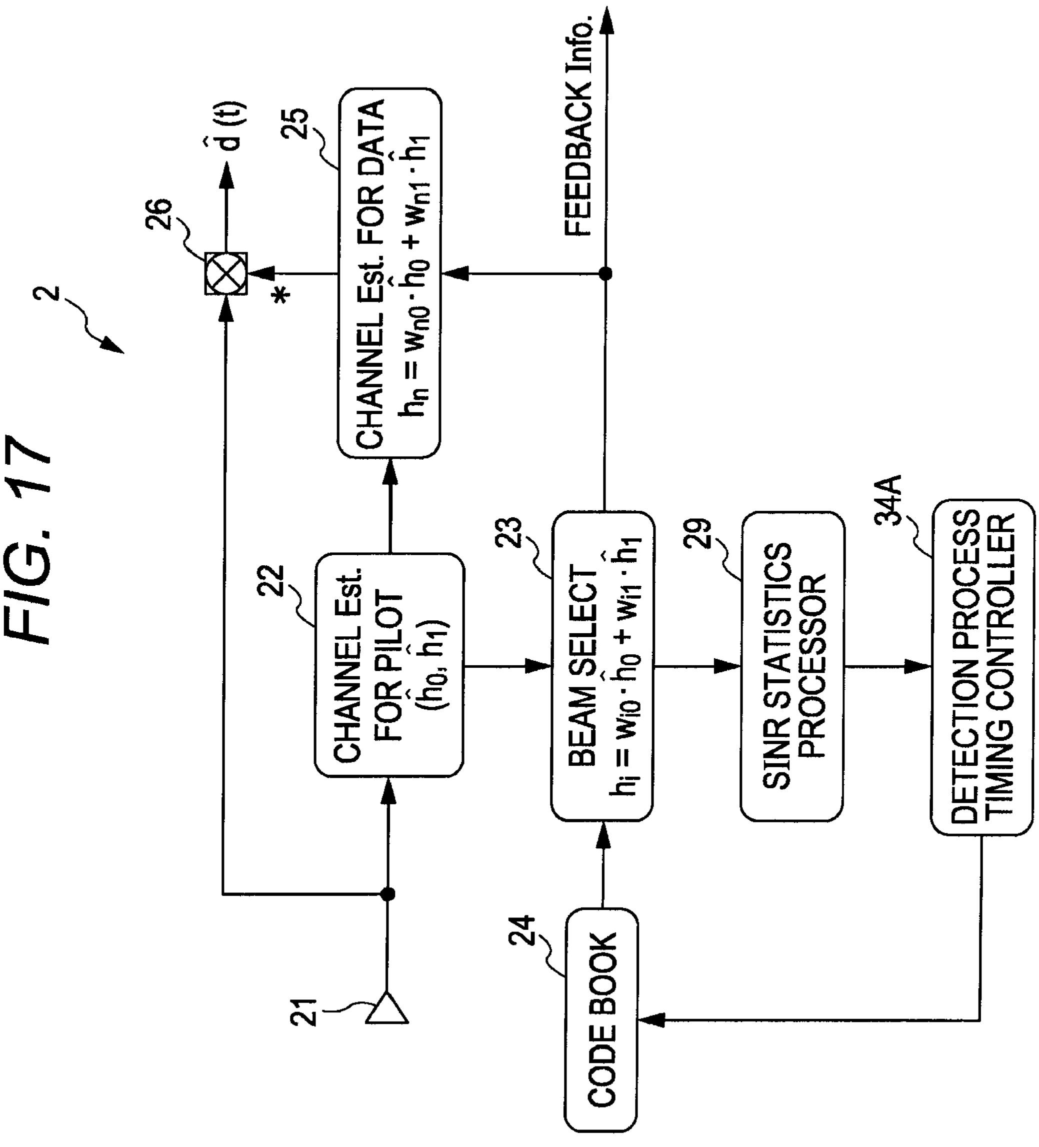
2
21
22
CHANNEL Est.
FOR PILOT
($\hat{h}_0$, $\hat{h}_1$)
23
BEAM SELECT
$h_i = w_{i0} \cdot \hat{h}_0 + w_{i1} \cdot \hat{h}_1$
24
CODE BOOK
25
CHANNEL Est. FOR DATA
$h_n = w_{n0} \cdot \hat{h}_0 + w_{n1} \cdot \hat{h}_1$
26
*
$\hat{d}(t)$
FEEDBACK Info.
29
SINR STATISTICS
PROCESSOR
34A
DETECTION PROCESS
TIMING CONTROLLER

FIG. 18

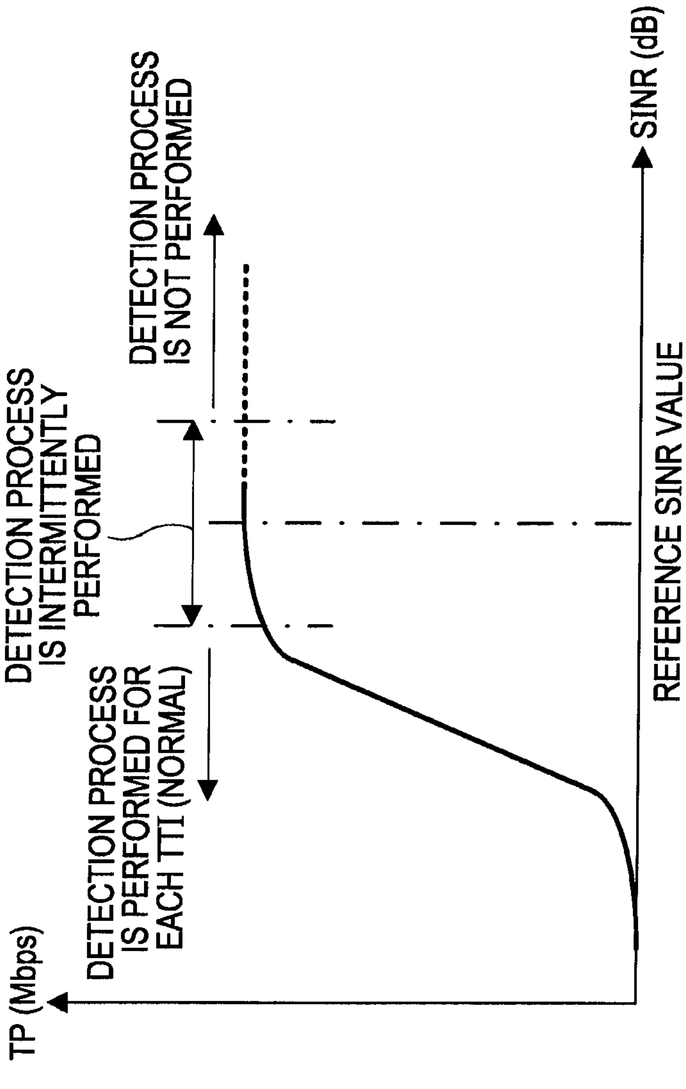
TP (Mbps)
SINR (dB)
DETECTION PROCESS IS PERFORMED FOR EACH TTI (NORMAL)
DETECTION PROCESS IS INTERMITTENTLY PERFORMED
DETECTION PROCESS IS NOT PERFORMED
REFERENCE SINR VALUE

FIG. 19

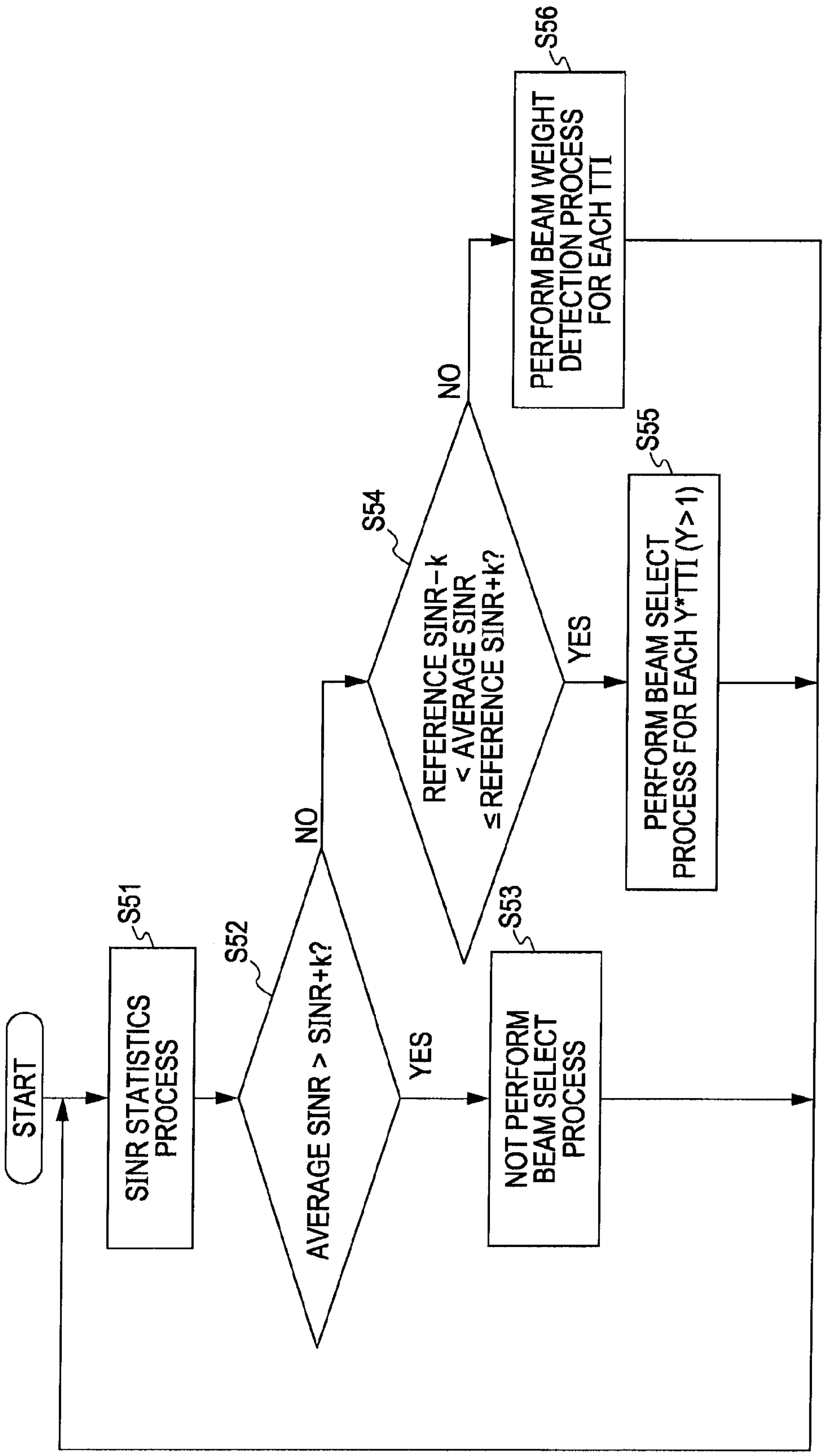
START
SINR STATISTICS PROCESS
S51
AVERAGE SINR > SINR+k?
S52
YES
NO
NOT PERFORM BEAM SELECT PROCESS
S53
REFERENCE SINR−k < AVERAGE SINR ≤ REFERENCE SINR+k?
S54
YES
NO
PERFORM BEAM SELECT PROCESS FOR EACH Y*TTI (Y>1)
S55
PERFORM BEAM WEIGHT DETECTION PROCESS FOR EACH TTI
S56

FIG. 20

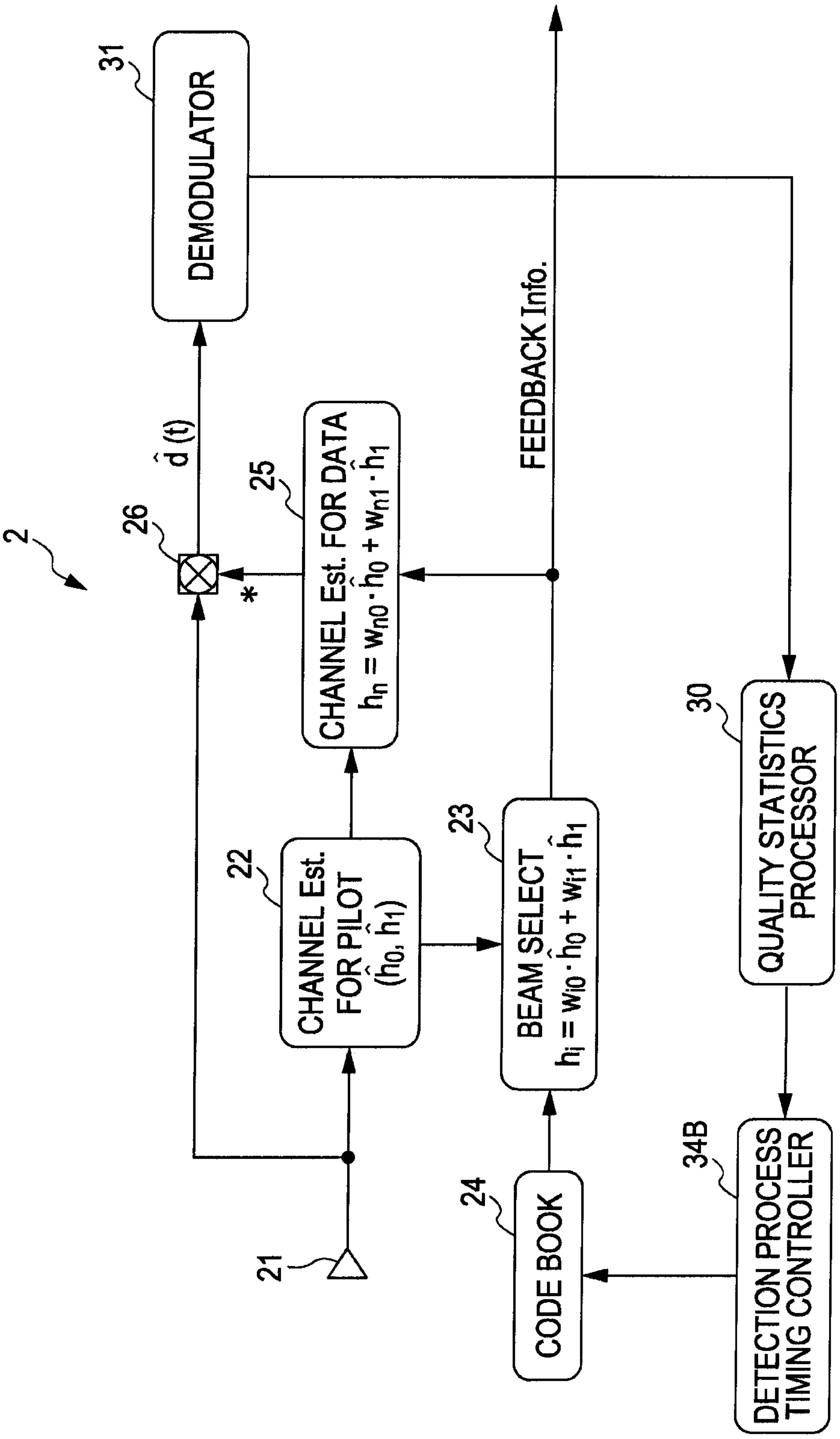
2
21
22
CHANNEL Est.
FOR PILOT
$(\hat{h}_0, \hat{h}_1)$
23
BEAM SELECT
$h_i = w_{i0} \cdot \hat{h}_0 + w_{i1} \cdot \hat{h}_1$
24
CODE BOOK
25
CHANNEL Est. FOR DATA
$h_n = w_{n0} \cdot \hat{h}_0 + w_{n1} \cdot \hat{h}_1$
26
*
$\hat{d}(t)$
31
DEMODULATOR
FEEDBACK Info.
30
QUALITY STATISTICS
PROCESSOR
34B
DETECTION PROCESS
TIMING CONTROLLER

FIG. 21

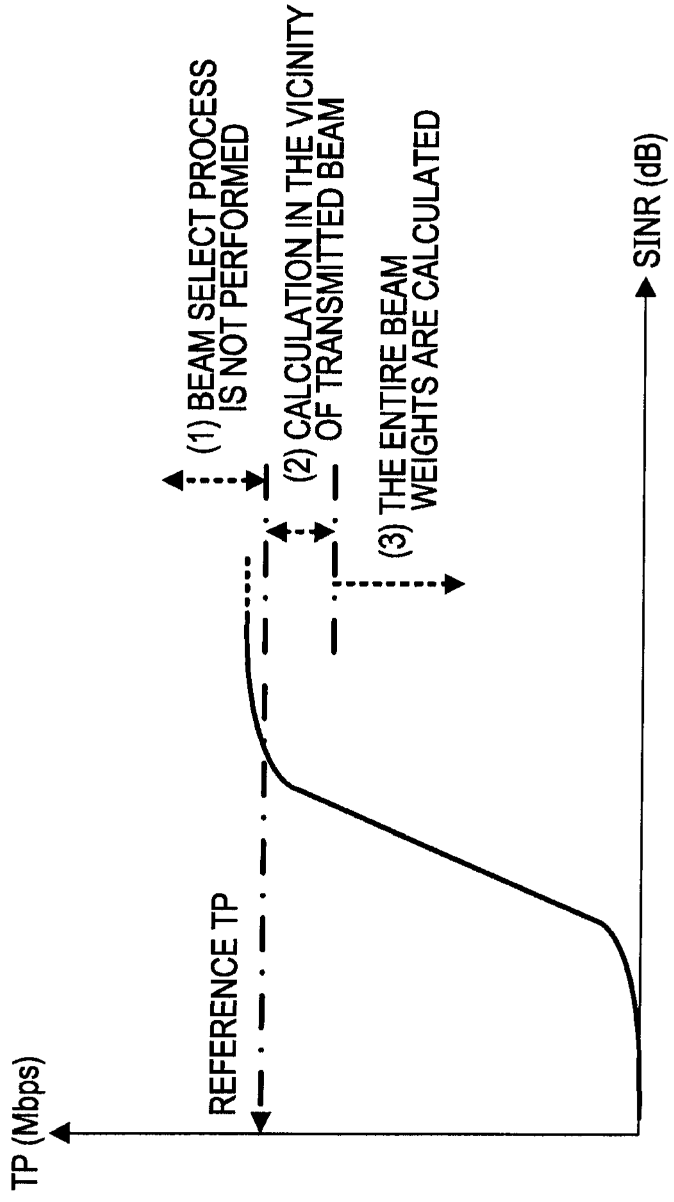
TP (Mbps)
REFERENCE TP
(1) BEAM SELECT PROCESS IS NOT PERFORMED
(2) CALCULATION IN THE VICINITY OF TRANSMITTED BEAM
(3) THE ENTIRE BEAM WEIGHTS ARE CALCULATED
SINR (dB)

FIG. 22

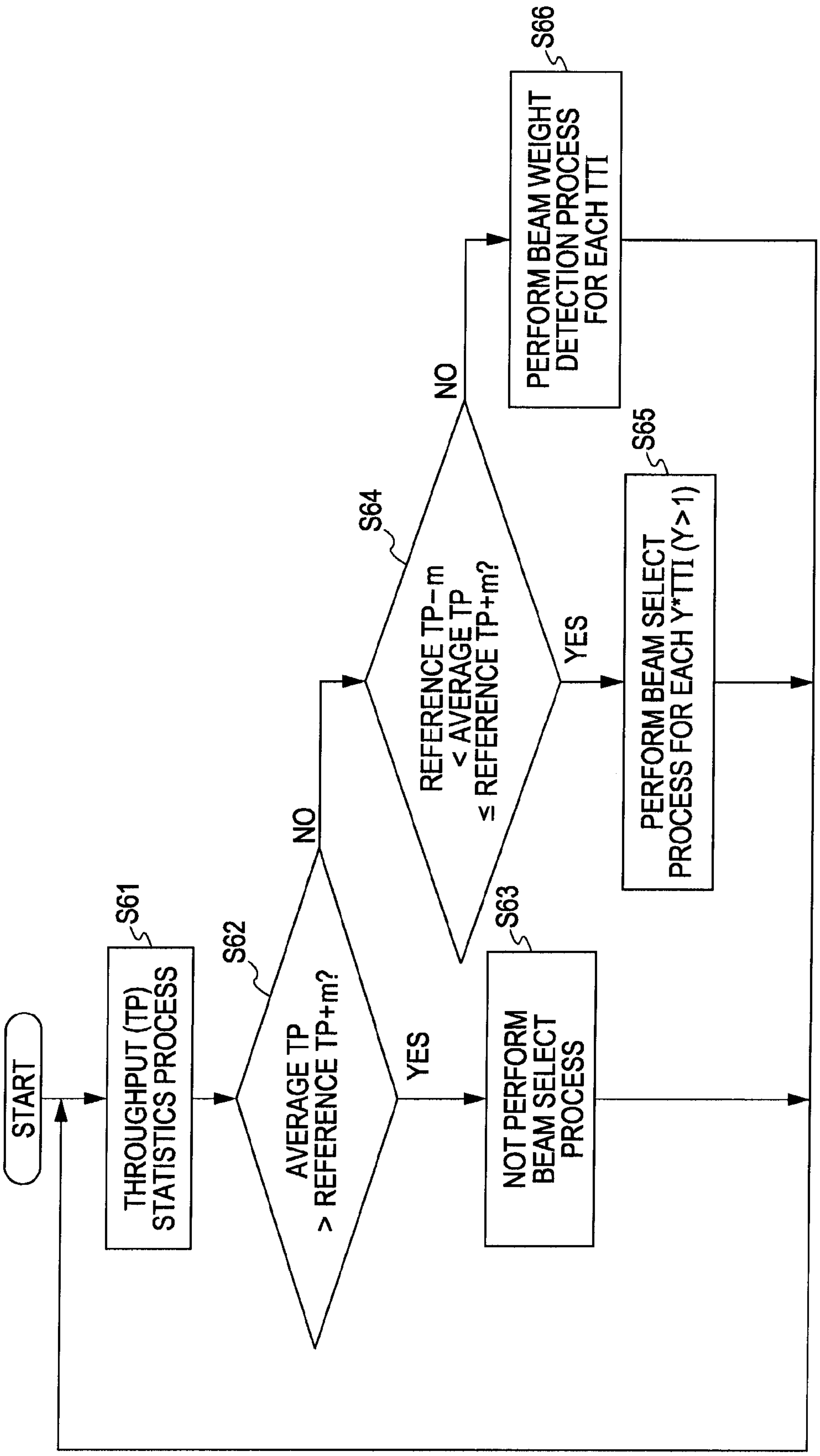
START
THROUGHPUT (TP) STATISTICS PROCESS
S61
AVERAGE TP > REFERENCE TP+m?
S62
YES
NO
NOT PERFORM BEAM SELECT PROCESS
S63
REFERENCE TP−m < AVERAGE TP ≤ REFERENCE TP+m?
S64
YES
NO
PERFORM BEAM SELECT PROCESS FOR EACH Y*TTI (Y>1)
S65
PERFORM BEAM WEIGHT DETECTION PROCESS FOR EACH TTI
S66

FIG. 23

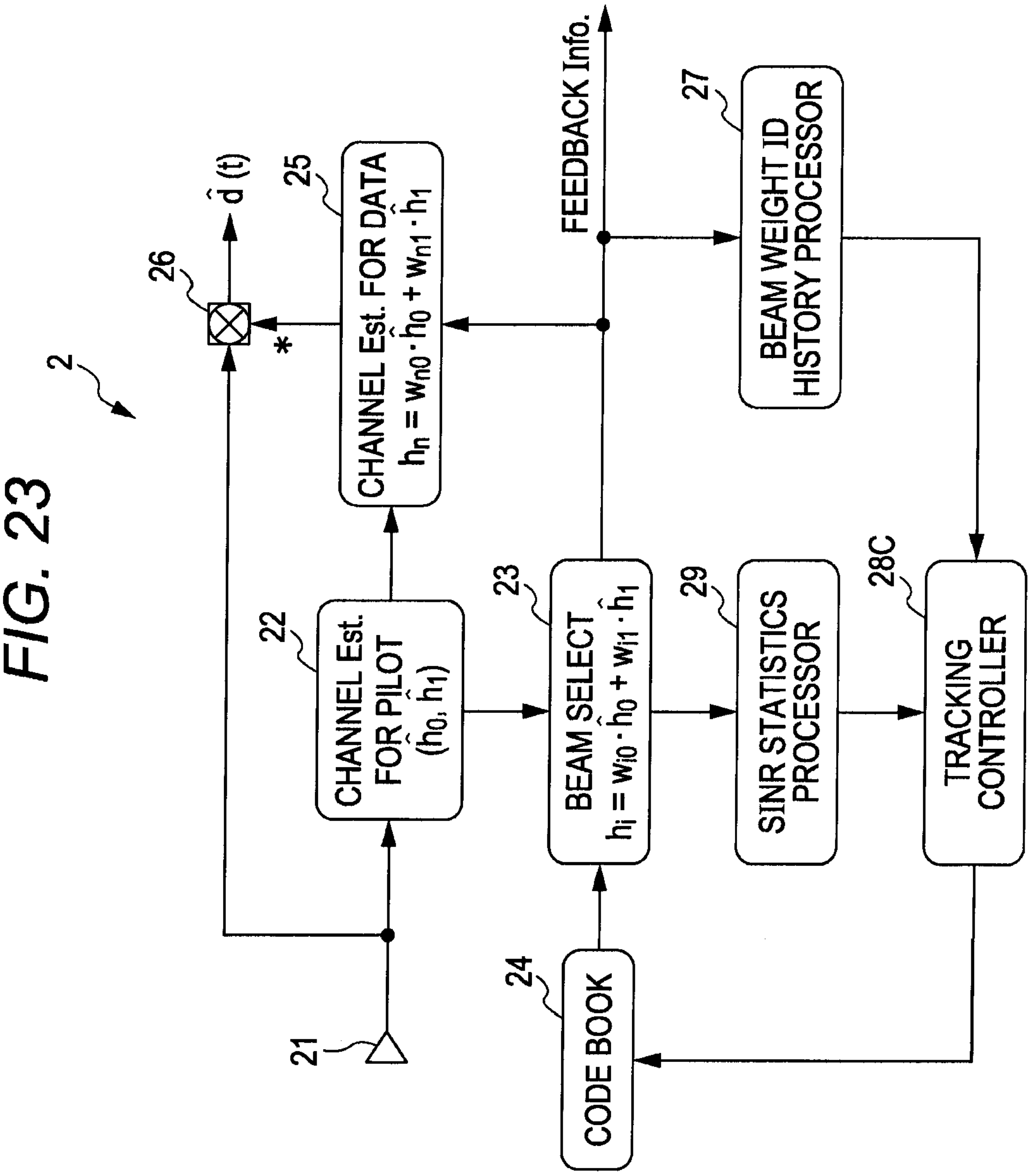
2
21
22
CHANNEL Est.
FOR PILOT
($\hat{h}_0$, $\hat{h}_1$)
23
BEAM SELECT
$h_i = w_{i0} \cdot \hat{h}_0 + w_{i1} \cdot \hat{h}_1$
24
CODE BOOK
25
CHANNEL Est. FOR DATA
$h_n = w_{n0} \cdot \hat{h}_0 + w_{n1} \cdot \hat{h}_1$
26
*
$\hat{d}$ (t)
FEEDBACK Info.
27
BEAM WEIGHT ID
HISTORY PROCESSOR
29
SINR STATISTICS
PROCESSOR
28C
TRACKING
CONTROLLER

FIG. 24

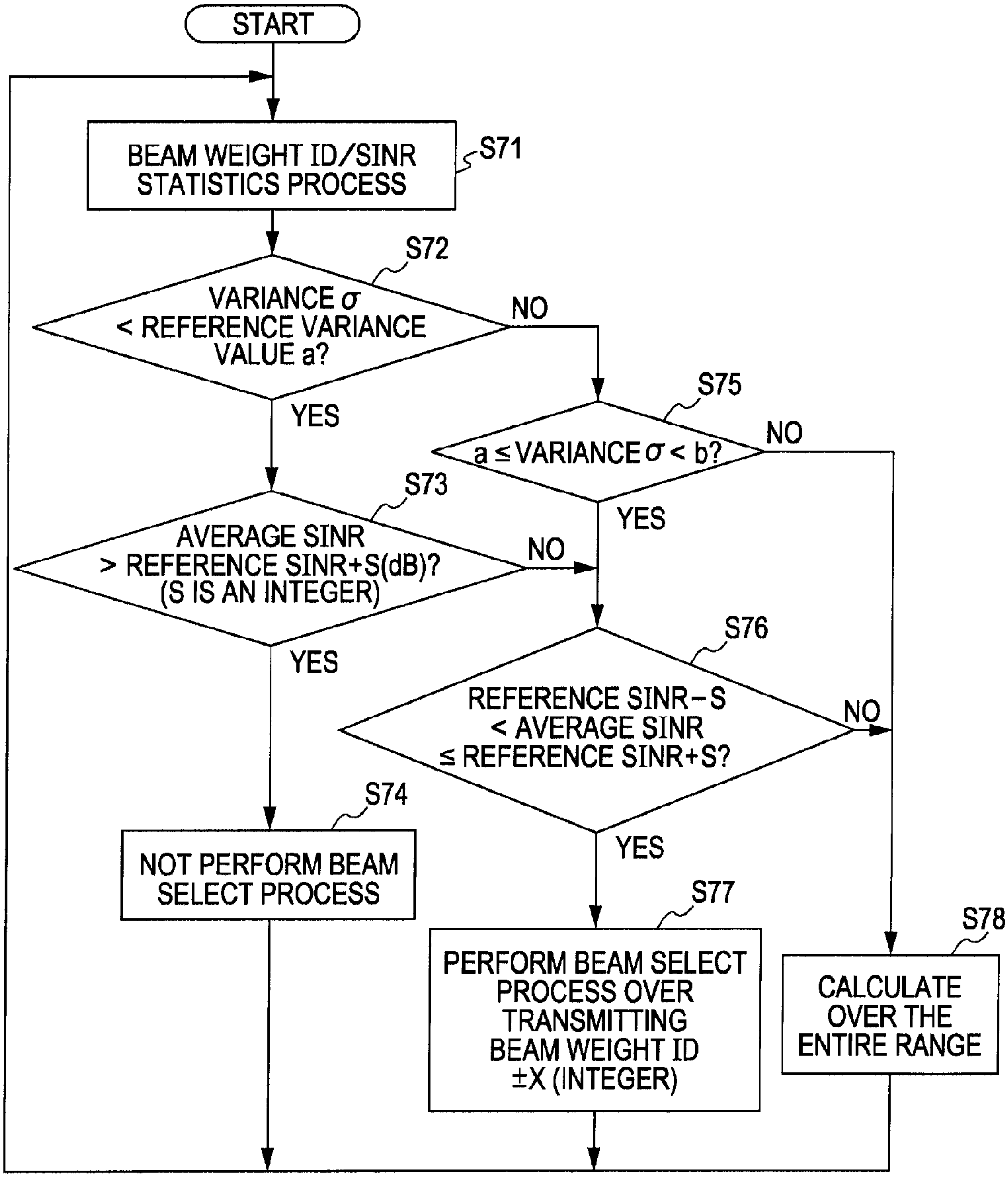
START
BEAM WEIGHT ID/SINR STATISTICS PROCESS
S71
S72
VARIANCE σ < REFERENCE VARIANCE VALUE a?
NO
YES
S75
a ≤ VARIANCE σ < b?
NO
YES
S73
AVERAGE SINR > REFERENCE SINR+S(dB)? (S IS AN INTEGER)
NO
YES
S76
REFERENCE SINR−S < AVERAGE SINR ≤ REFERENCE SINR+S?
NO
YES
S74
NOT PERFORM BEAM SELECT PROCESS
S77
PERFORM BEAM SELECT PROCESS OVER TRANSMITTING BEAM WEIGHT ID ±X (INTEGER)
S78
CALCULATE OVER THE ENTIRE RANGE

FIG. 25

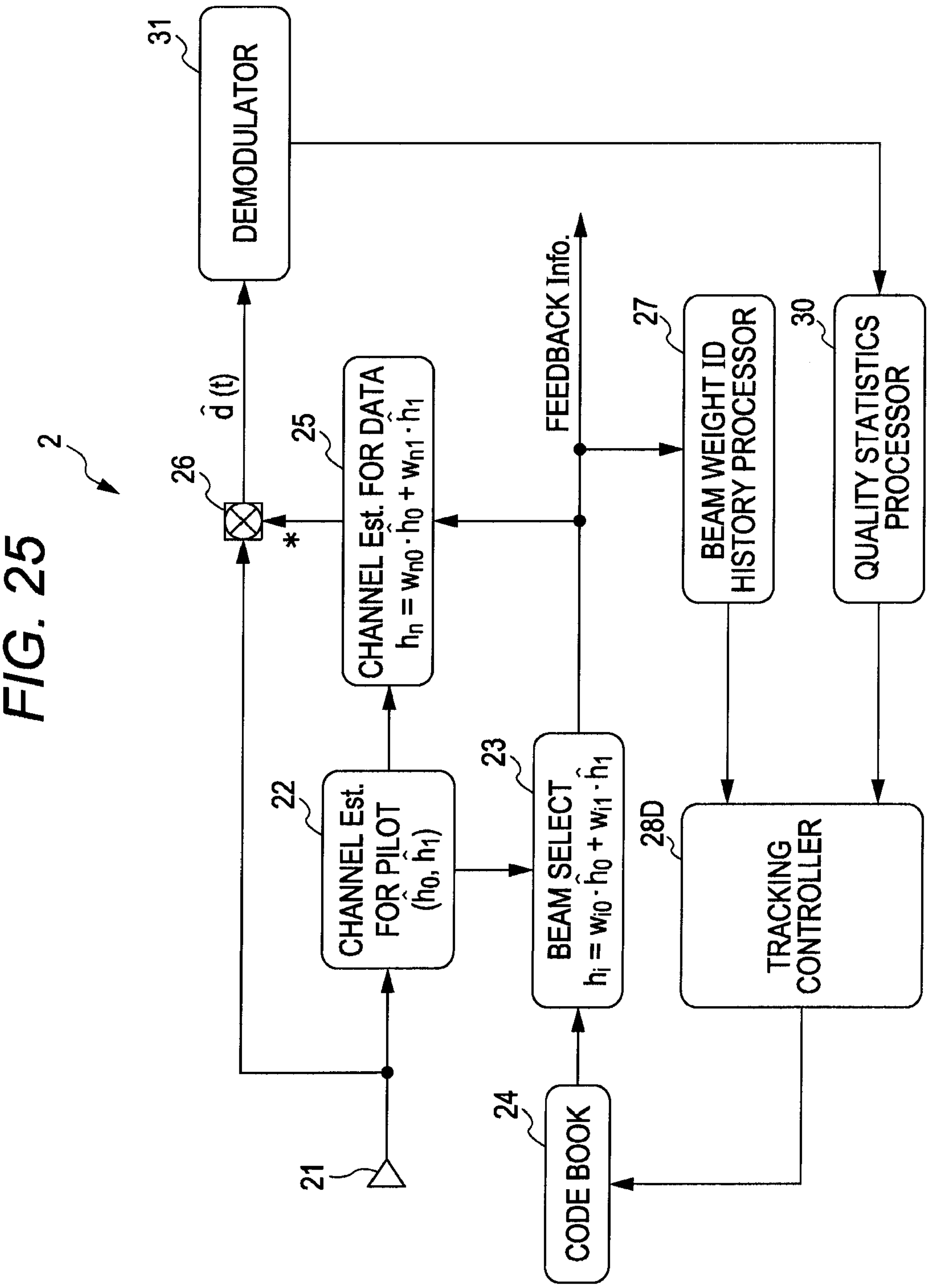
2
21
22
CHANNEL Est.
FOR PILOT
$(\hat{h}_0, \hat{h}_1)$
23
BEAM SELECT
$h_i = w_{i0} \cdot \hat{h}_0 + w_{i1} \cdot \hat{h}_1$
24
CODE BOOK
25
CHANNEL Est. FOR DATA
$h_n = w_{n0} \cdot \hat{h}_0 + w_{n1} \cdot \hat{h}_1$
26
*
$\hat{d}(t)$
27
BEAM WEIGHT ID
HISTORY PROCESSOR
28D
TRACKING
CONTROLLER
30
QUALITY STATISTICS
PROCESSOR
31
DEMODULATOR
FEEDBACK Info.

FIG. 26

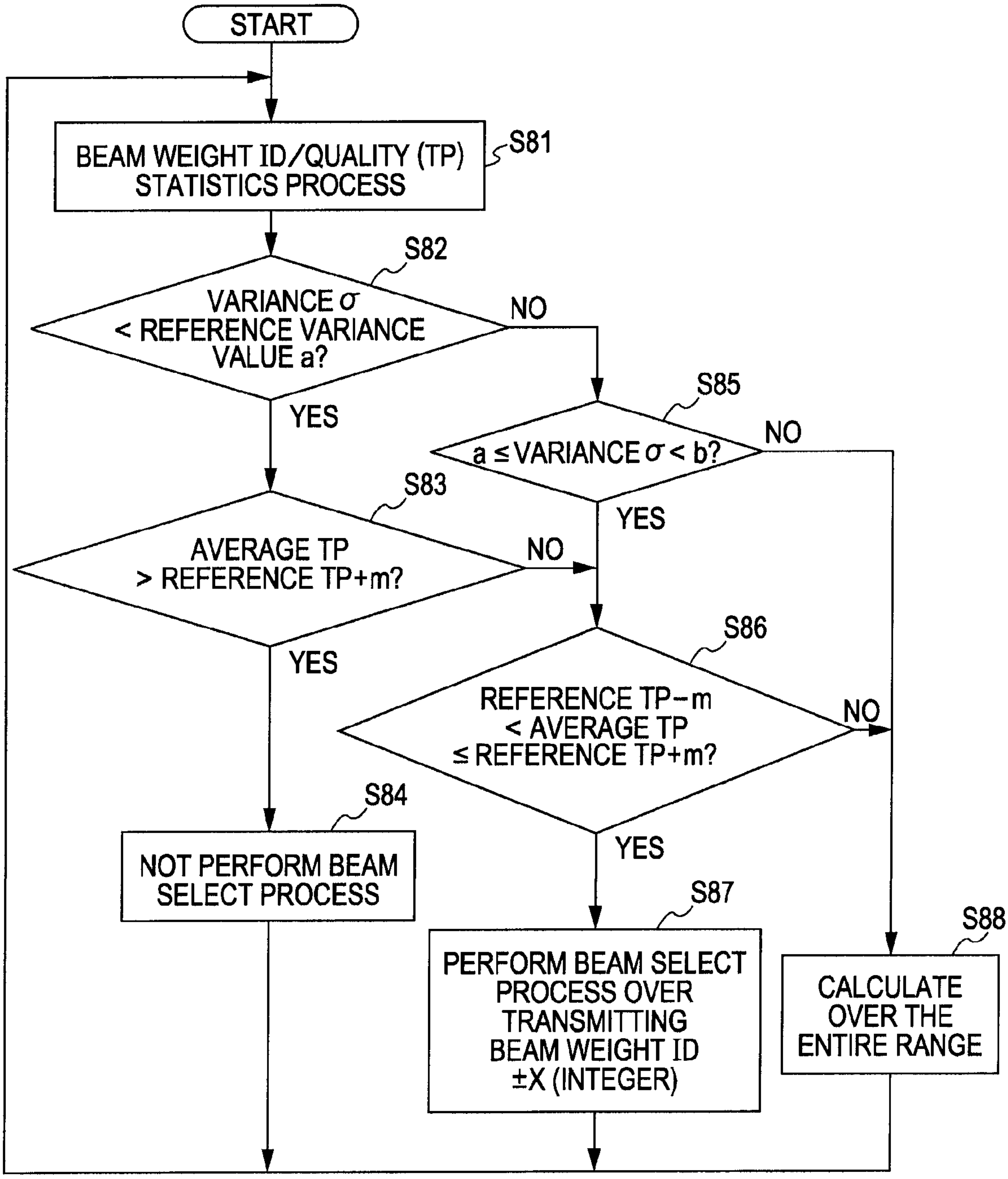
START
BEAM WEIGHT ID/QUALITY (TP) STATISTICS PROCESS
S81
S82
VARIANCE σ < REFERENCE VARIANCE VALUE a?
NO
YES
S85
a ≤ VARIANCE σ < b?
NO
YES
S83
AVERAGE TP > REFERENCE TP+m?
NO
YES
S86
REFERENCE TP−m < AVERAGE TP ≤ REFERENCE TP+m?
NO
YES
S84
NOT PERFORM BEAM SELECT PROCESS
S87
PERFORM BEAM SELECT PROCESS OVER TRANSMITTING BEAM WEIGHT ID ±X (INTEGER)
S88
CALCULATE OVER THE ENTIRE RANGE

FIG. 27

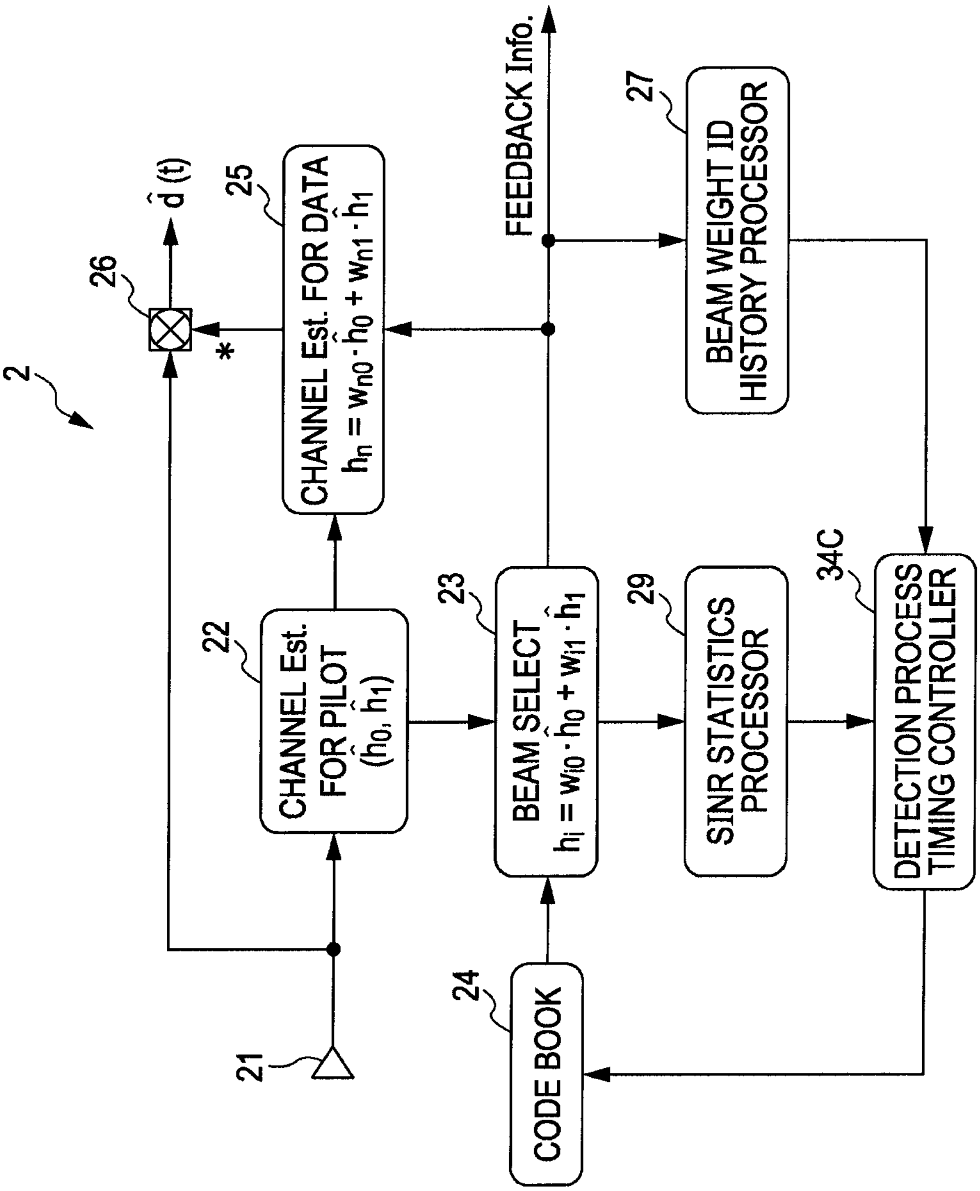
2
21
22
CHANNEL Est. FOR PILOT ($\hat{h}_0$, $\hat{h}_1$)
23
BEAM SELECT $h_i = w_{i0} \cdot \hat{h}_0 + w_{i1} \cdot \hat{h}_1$
24
CODE BOOK
25
CHANNEL Est. FOR DATA $h_n = w_{n0} \cdot \hat{h}_0 + w_{n1} \cdot \hat{h}_1$
*
26
$\hat{d}$ (t)
FEEDBACK Info.
27
BEAM WEIGHT ID HISTORY PROCESSOR
29
SINR STATISTICS PROCESSOR
34C
DETECTION PROCESS TIMING CONTROLLER

*FIG. 28*

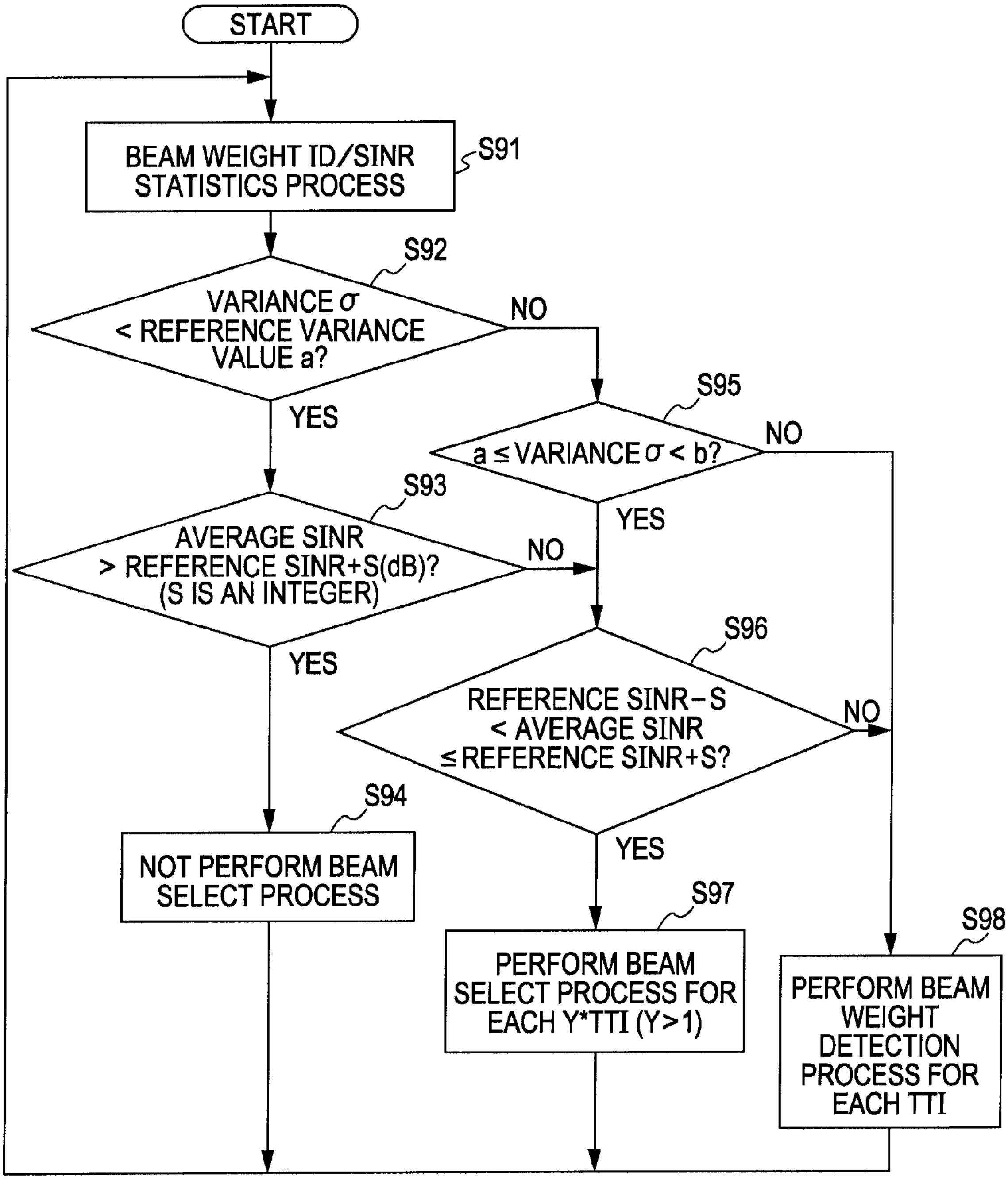
START
BEAM WEIGHT ID/SINR STATISTICS PROCESS
S91
S92
VARIANCE σ < REFERENCE VARIANCE VALUE a?
NO
YES
S95
a ≤ VARIANCE σ < b?
NO
YES
S93
AVERAGE SINR > REFERENCE SINR+S(dB)? (S IS AN INTEGER)
NO
YES
S96
REFERENCE SINR−S < AVERAGE SINR ≤ REFERENCE SINR+S?
NO
YES
S94
NOT PERFORM BEAM SELECT PROCESS
S97
PERFORM BEAM SELECT PROCESS FOR EACH Y*TTI (Y>1)
S98
PERFORM BEAM WEIGHT DETECTION PROCESS FOR EACH TTI

FIG. 29

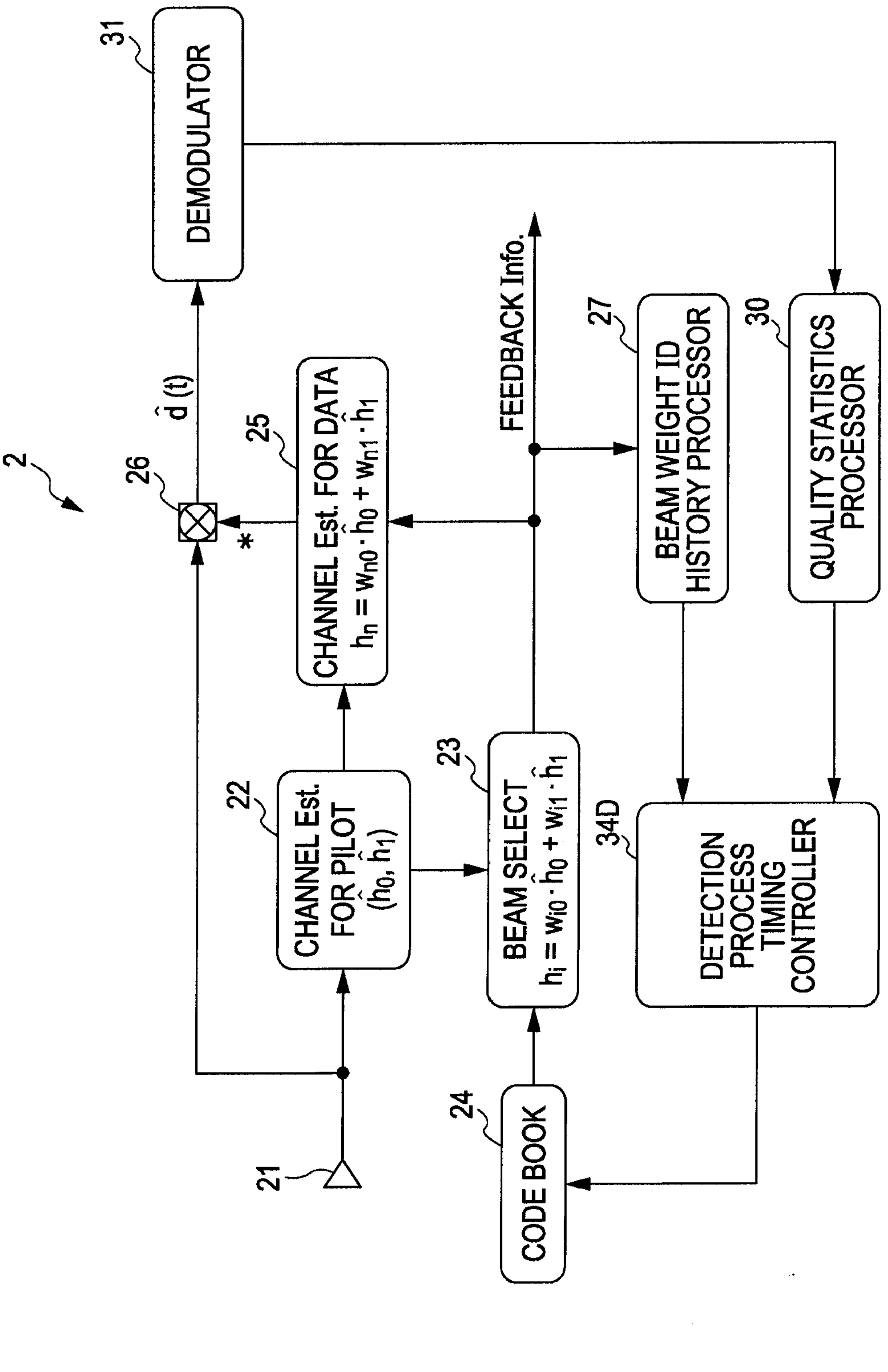
2
21
22
CHANNEL Est.
FOR PILOT
$(\hat{h}_0, \hat{h}_1)$
23
BEAM SELECT
$h_i = w_{i0} \cdot \hat{h}_0 + w_{i1} \cdot \hat{h}_1$
24
CODE BOOK
25
CHANNEL Est. FOR DATA
$h_n = w_{n0} \cdot \hat{h}_0 + w_{n1} \cdot \hat{h}_1$
26
*
$\hat{d}(t)$
31
DEMODULATOR
FEEDBACK Info.
27
BEAM WEIGHT ID
HISTORY PROCESSOR
30
QUALITY STATISTICS
PROCESSOR
34D
DETECTION
PROCESS
TIMING
CONTROLLER

FIG. 30

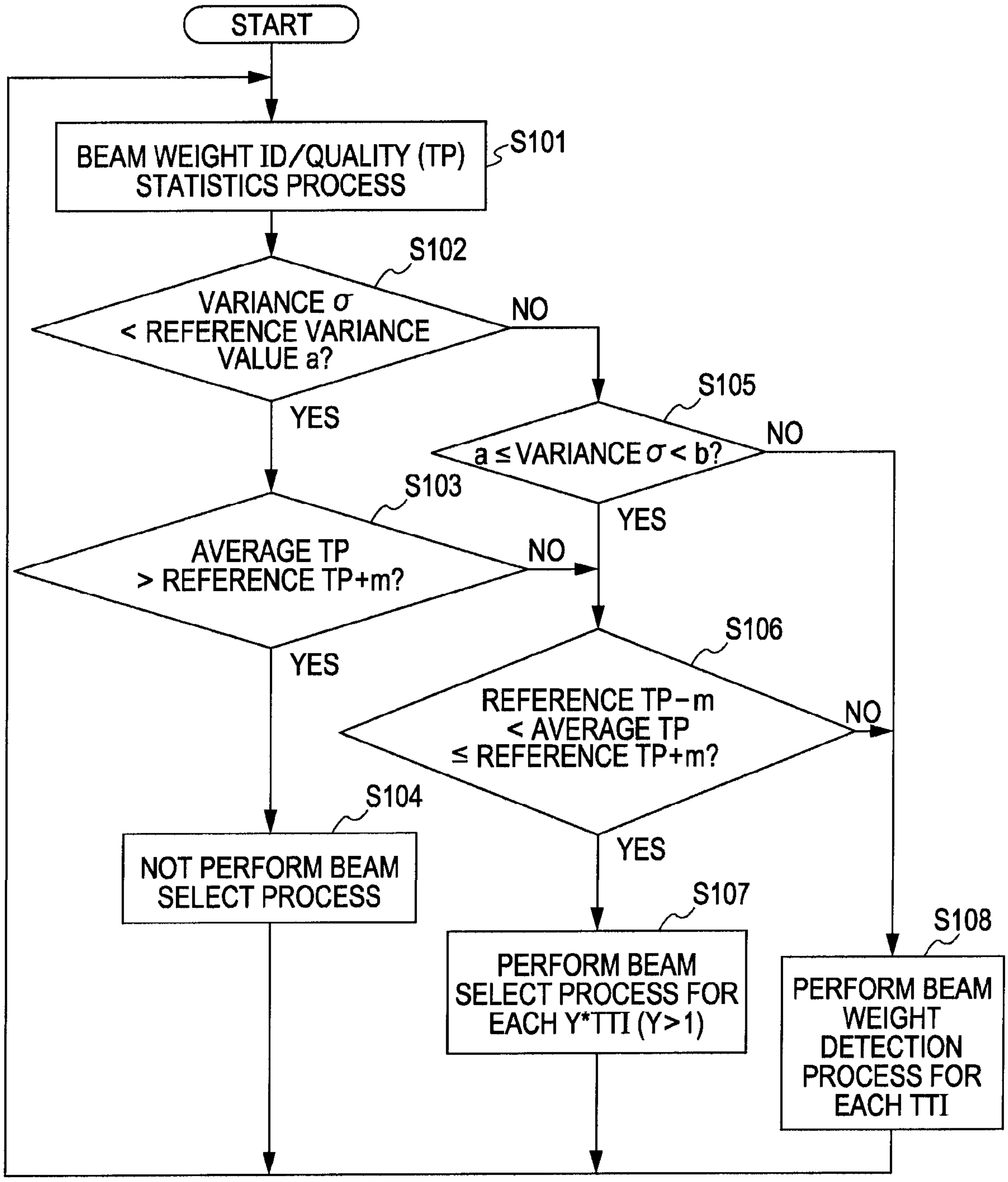
START
BEAM WEIGHT ID/QUALITY (TP) STATISTICS PROCESS
S101
VARIANCE σ < REFERENCE VARIANCE VALUE a?
S102
NO
YES
a ≤ VARIANCE σ < b?
S105
NO
YES
AVERAGE TP > REFERENCE TP+m?
S103
NO
YES
REFERENCE TP−m < AVERAGE TP ≤ REFERENCE TP+m?
S106
NO
YES
NOT PERFORM BEAM SELECT PROCESS
S104
PERFORM BEAM SELECT PROCESS FOR EACH Y*TTI (Y>1)
S107
PERFORM BEAM WEIGHT DETECTION PROCESS FOR EACH TTI
S108

FIG. 31

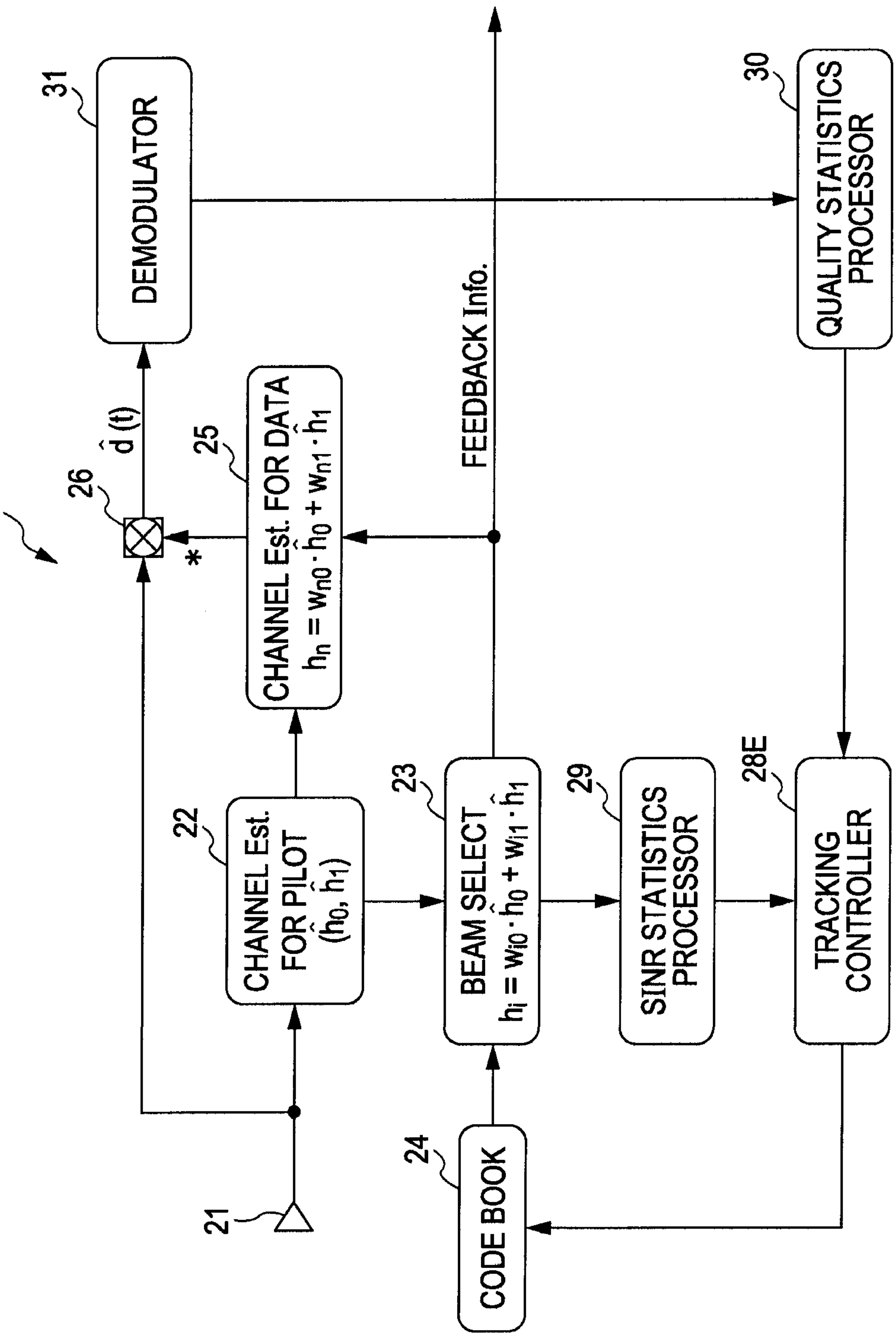
2
21
22
CHANNEL Est. FOR PILOT ($\hat{h}_0$, $\hat{h}_1$)
23
BEAM SELECT $h_i = w_{i0} \cdot \hat{h}_0 + w_{i1} \cdot \hat{h}_1$
24
CODE BOOK
25
CHANNEL Est. FOR DATA $h_n = w_{n0} \cdot \hat{h}_0 + w_{n1} \cdot \hat{h}_1$
26
*
$\hat{d}$ (t)
29
SINR STATISTICS PROCESSOR
28E
TRACKING CONTROLLER
30
QUALITY STATISTICS PROCESSOR
31
DEMODULATOR
FEEDBACK Info.

# FIG. 32

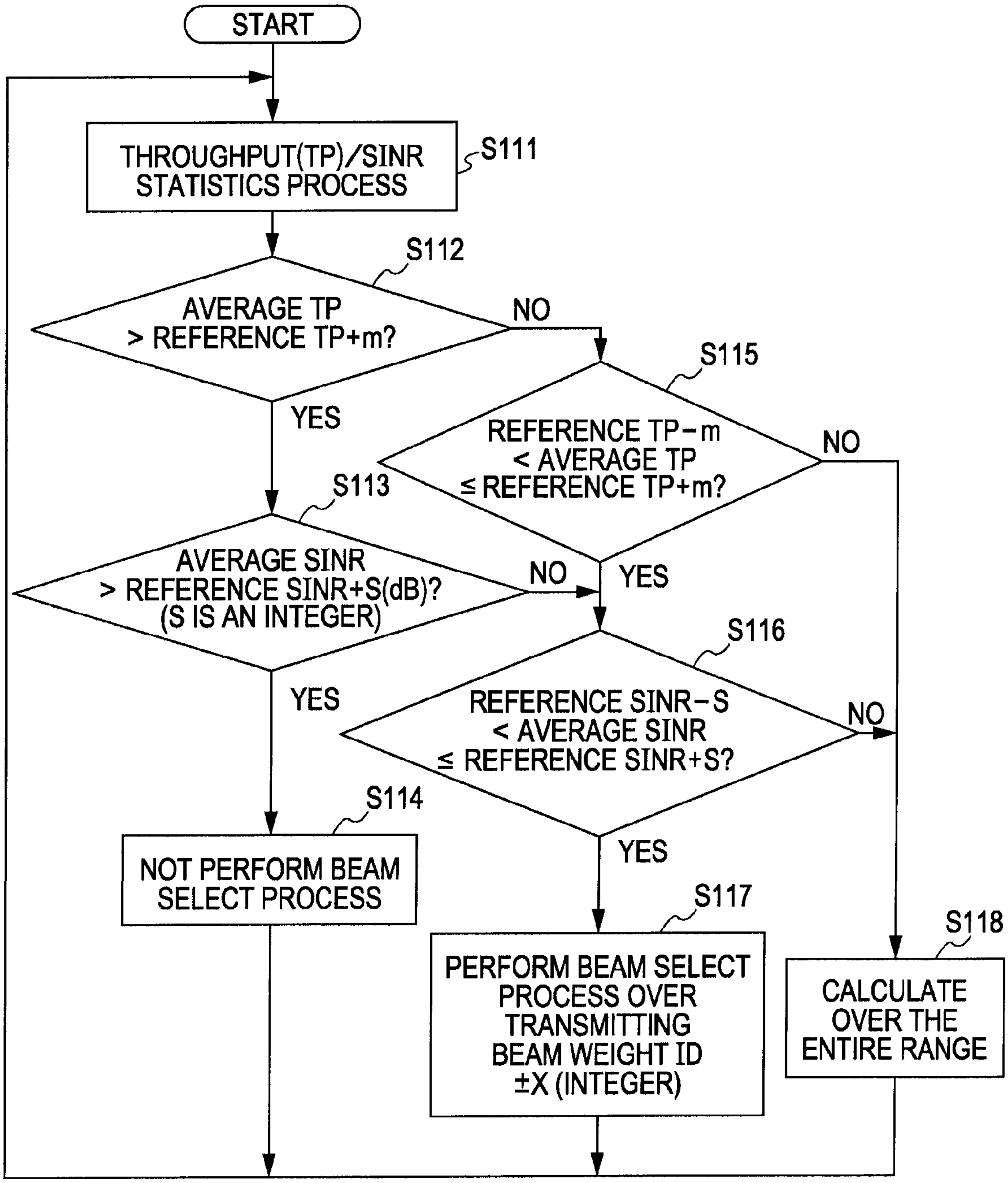
START
THROUGHPUT(TP)/SINR STATISTICS PROCESS
S111
S112
AVERAGE TP > REFERENCE TP+m?
NO
YES
S115
REFERENCE TP−m < AVERAGE TP ≤ REFERENCE TP+m?
NO
YES
S113
AVERAGE SINR > REFERENCE SINR+S(dB)? (S IS AN INTEGER)
NO
YES
S116
REFERENCE SINR−S < AVERAGE SINR ≤ REFERENCE SINR+S?
NO
YES
S114
NOT PERFORM BEAM SELECT PROCESS
S117
PERFORM BEAM SELECT PROCESS OVER TRANSMITTING BEAM WEIGHT ID ±X (INTEGER)
S118
CALCULATE OVER THE ENTIRE RANGE

FIG. 33

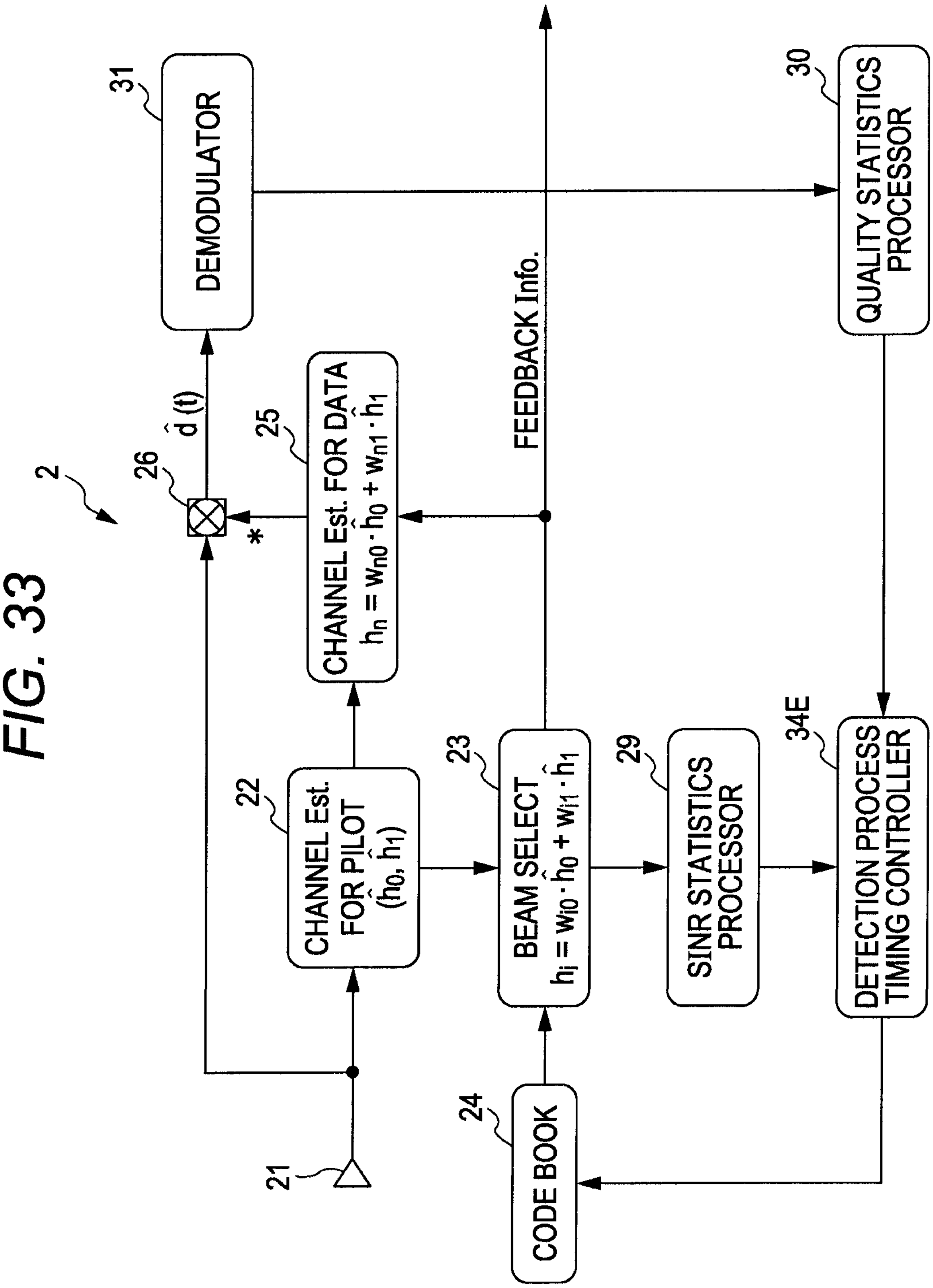
2
21
22
CHANNEL Est. FOR PILOT ($\hat{h}_0$, $\hat{h}_1$)
23
BEAM SELECT $h_i = w_{i0} \cdot \hat{h}_0 + w_{i1} \cdot \hat{h}_1$
24
CODE BOOK
25
CHANNEL Est. FOR DATA $h_n = w_{n0} \cdot \hat{h}_0 + w_{n1} \cdot \hat{h}_1$
26
*
$\hat{d}$ (t)
29
SINR STATISTICS PROCESSOR
30
QUALITY STATISTICS PROCESSOR
31
DEMODULATOR
34E
DETECTION PROCESS TIMING CONTROLLER
FEEDBACK Info.

FIG. 34

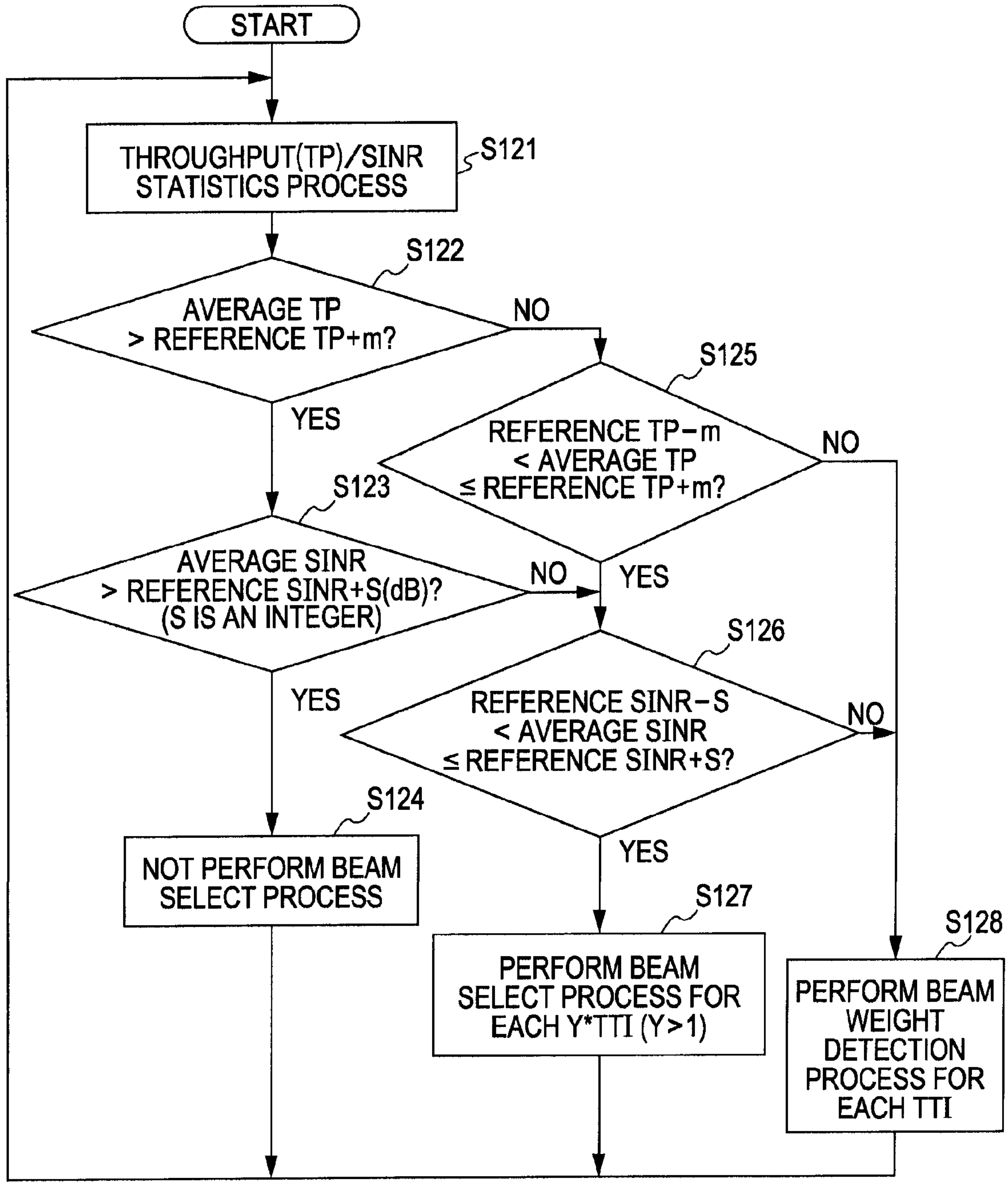
START
THROUGHPUT(TP)/SINR STATISTICS PROCESS
S121
S122
AVERAGE TP > REFERENCE TP+m?
NO
YES
S125
REFERENCE TP−m < AVERAGE TP ≤ REFERENCE TP+m?
NO
YES
S123
AVERAGE SINR > REFERENCE SINR+S(dB)? (S IS AN INTEGER)
NO
YES
S126
REFERENCE SINR−S < AVERAGE SINR ≤ REFERENCE SINR+S?
NO
YES
S124
NOT PERFORM BEAM SELECT PROCESS
S127
PERFORM BEAM SELECT PROCESS FOR EACH Y*TTI (Y>1)
S128
PERFORM BEAM WEIGHT DETECTION PROCESS FOR EACH TTI

FIG. 35

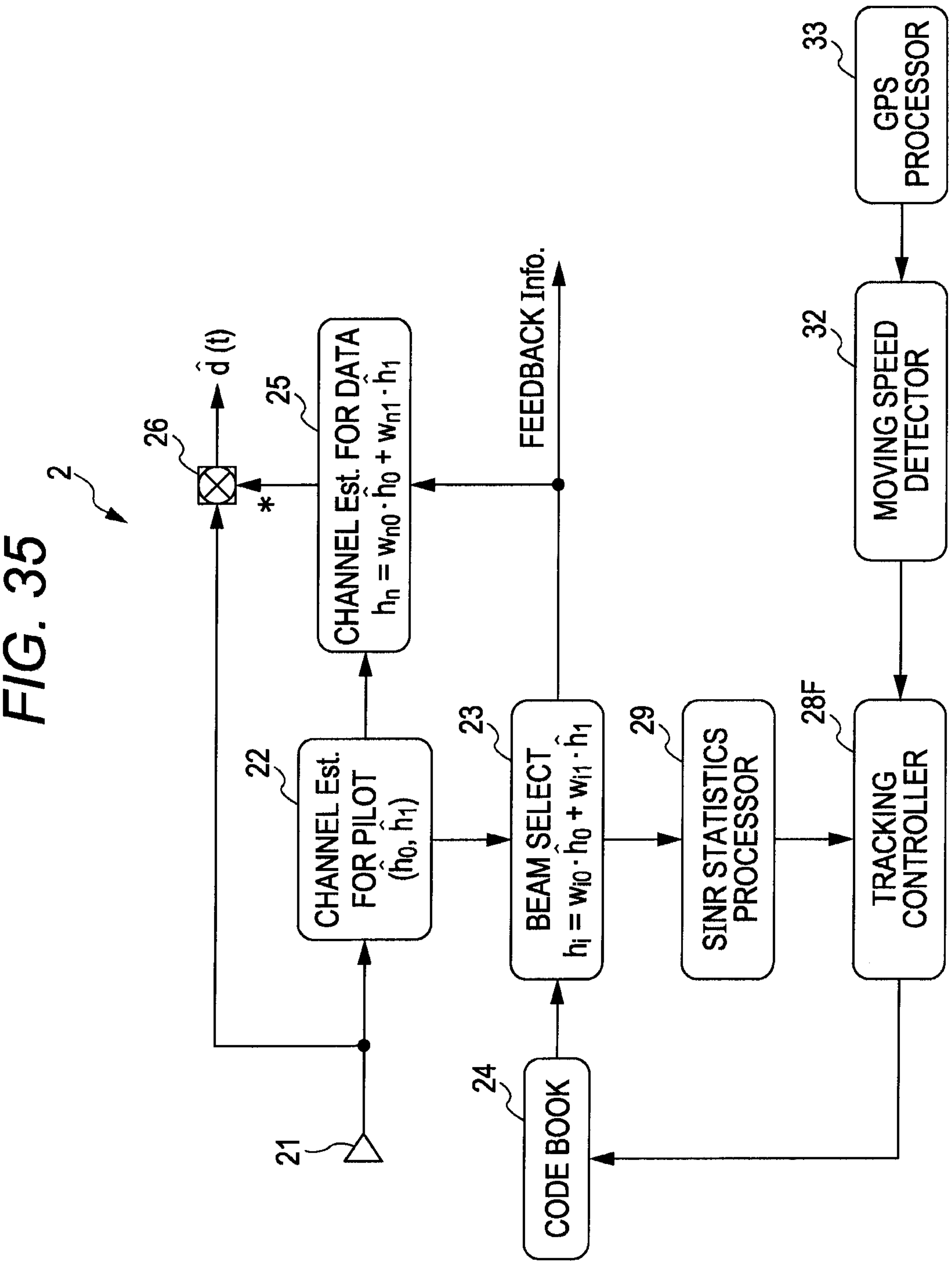
2
21
22
CHANNEL Est.
FOR PILOT
($\hat{h}_0$, $\hat{h}_1$)
23
BEAM SELECT
$h_i = w_{i0} \cdot \hat{h}_0 + w_{i1} \cdot \hat{h}_1$
24
CODE BOOK
25
CHANNEL Est. FOR DATA
$h_n = w_{n0} \cdot \hat{h}_0 + w_{n1} \cdot \hat{h}_1$
26
*
$\hat{d}$ (t)
FEEDBACK Info.
29
SINR STATISTICS
PROCESSOR
28F
TRACKING
CONTROLLER
32
MOVING SPEED
DETECTOR
33
GPS
PROCESSOR

FIG. 36

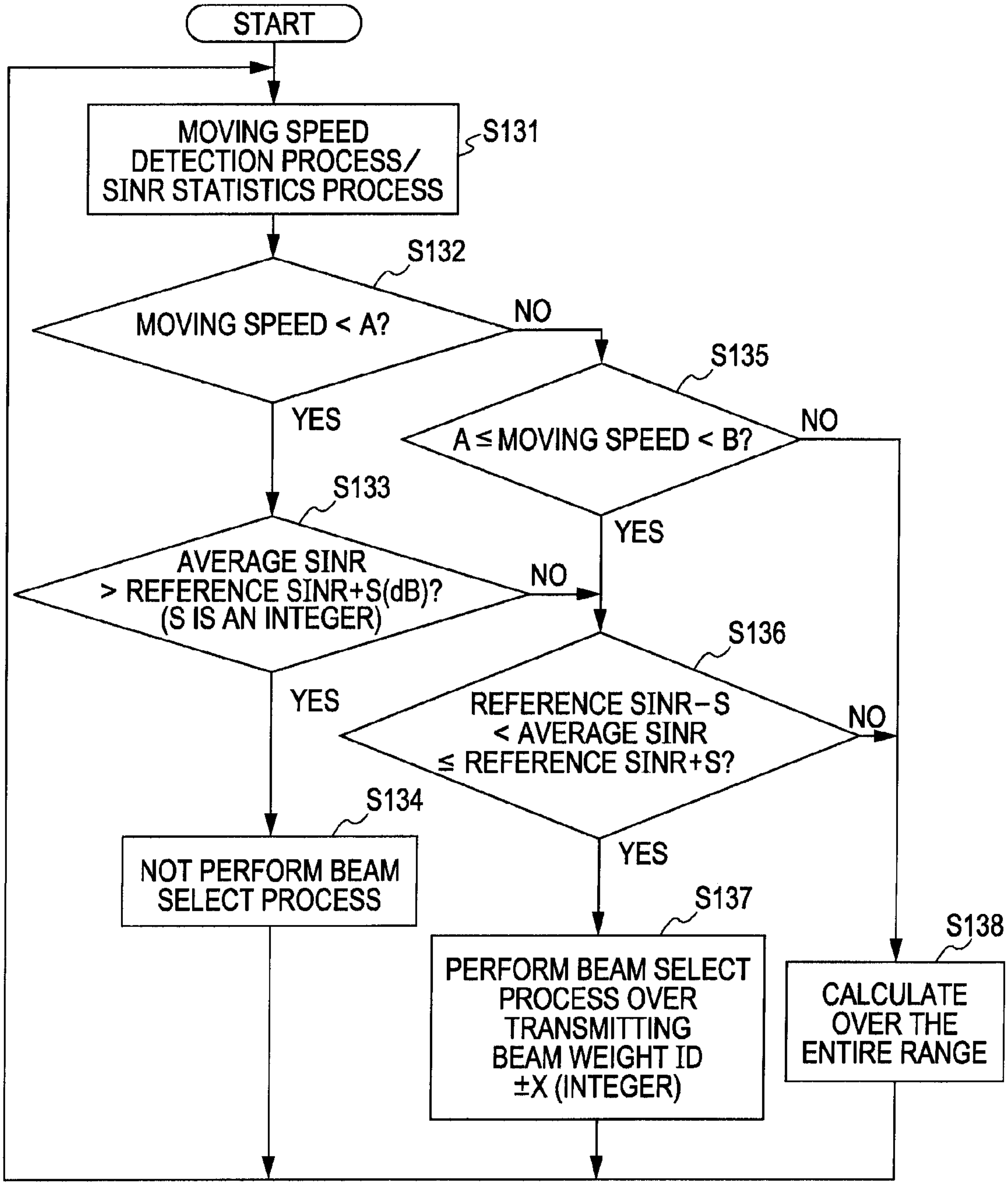
START
MOVING SPEED DETECTION PROCESS/ SINR STATISTICS PROCESS
S131
S132
MOVING SPEED < A?
NO
YES
S135
A ≤ MOVING SPEED < B?
NO
YES
S133
AVERAGE SINR > REFERENCE SINR+S(dB)? (S IS AN INTEGER)
NO
YES
S136
REFERENCE SINR−S < AVERAGE SINR ≤ REFERENCE SINR+S?
NO
YES
S134
NOT PERFORM BEAM SELECT PROCESS
S137
PERFORM BEAM SELECT PROCESS OVER TRANSMITTING BEAM WEIGHT ID ±X (INTEGER)
S138
CALCULATE OVER THE ENTIRE RANGE

FIG. 37

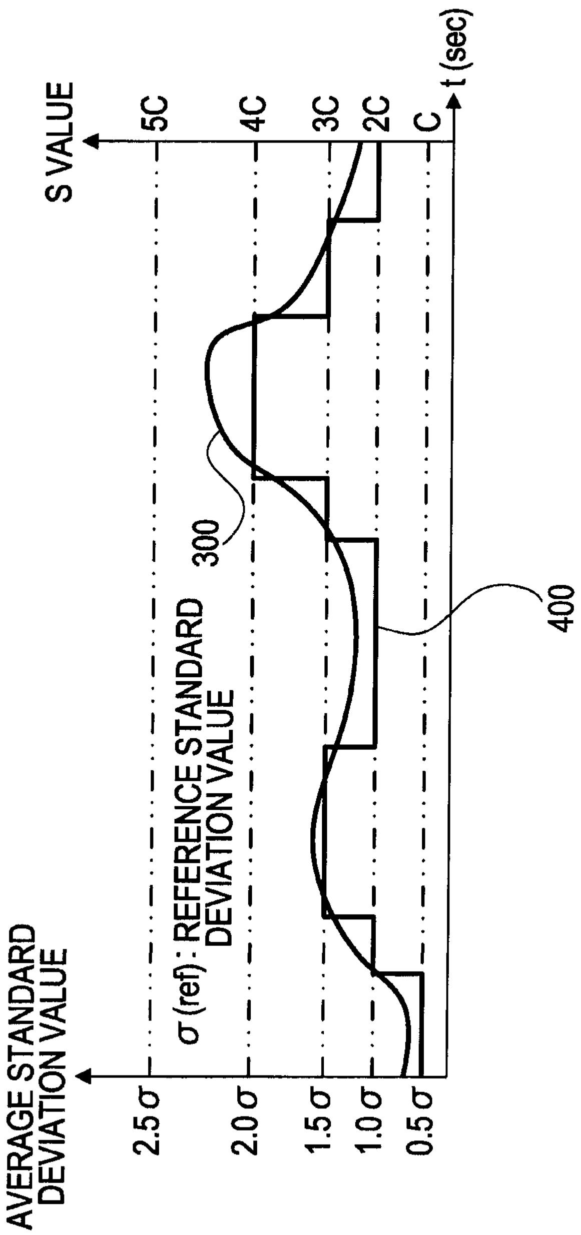
AVERAGE STANDARD DEVIATION VALUE
S VALUE
2.5σ
2.0σ
1.5σ
1.0σ
0.5σ
5C
4C
3C
2C
C
t (sec)
σ (ref) : REFERENCE STANDARD DEVIATION VALUE
300
400

FIG. 38

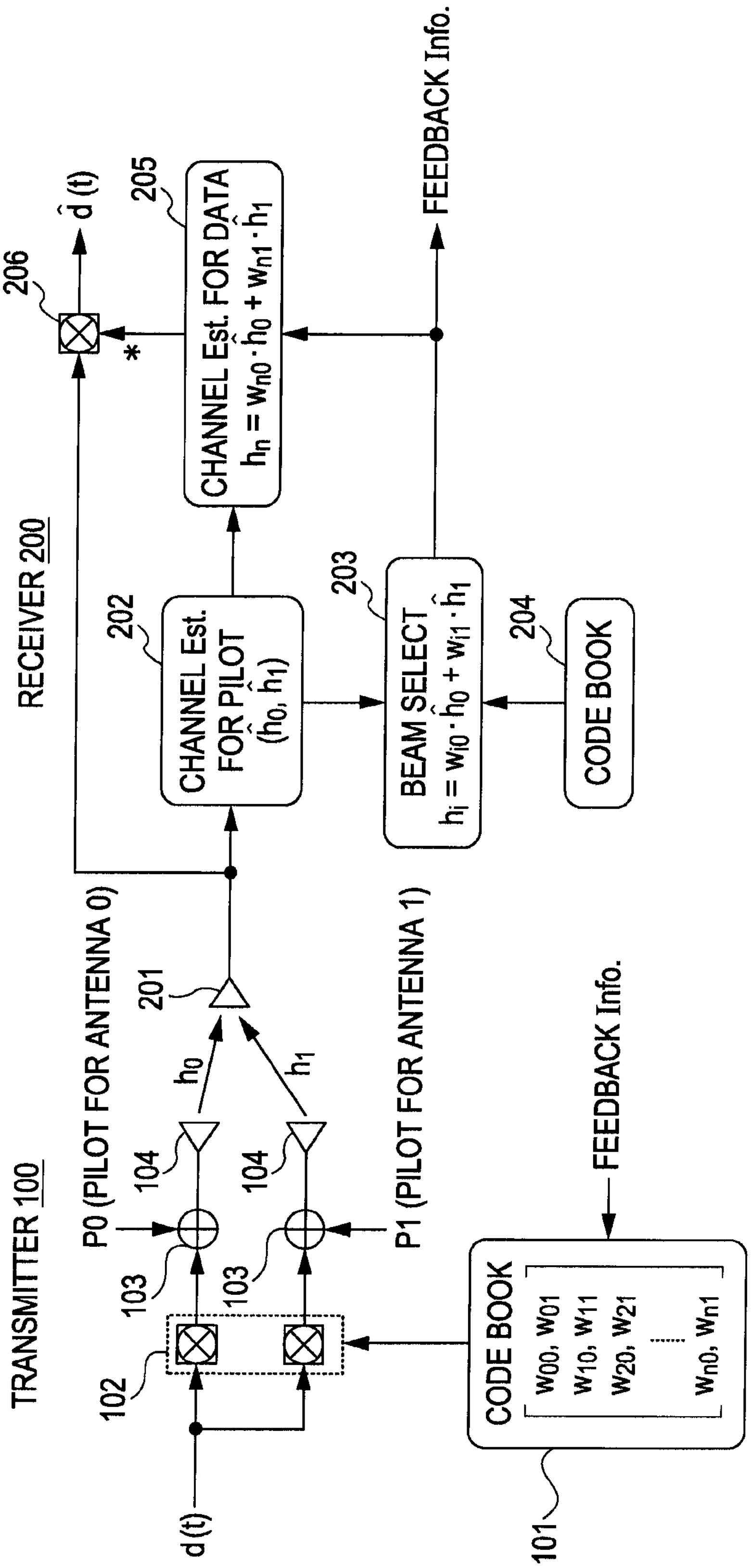
TRANSMITTER 100
RECEIVER 200
d(t)
102
103
104
P0 (PILOT FOR ANTENNA 0)
P1 (PILOT FOR ANTENNA 1)
h0
h1
201
101
CODE BOOK
w00, w01
w10, w11
w20, w21
wn0, wn1
FEEDBACK Info.
202
CHANNEL Est. FOR PILOT (ĥ0, ĥ1)
203
BEAM SELECT
hi = wi0 · ĥ0 + wi1 · ĥ1
204
CODE BOOK
205
CHANNEL Est. FOR DATA
hn = wn0 · ĥ0 + wn1 · ĥ1
206
*
d̂ (t)
FEEDBACK Info.

European Patent Office

# EUROPEAN SEARCH REPORT

Application Number
EP 08 10 1949

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2006/070478 A (FUJITSU LTD [JP]; SEKI HIROYUKI [JP]) 6 July 2006 (2006-07-06)<br>* abstract * | 1,4,8 | INV.<br>H04B7/06<br>H01Q3/26 |
| Y | & EP 1 833 186 A (FUJITSU LTD [JP]) 12 September 2007 (2007-09-12)<br>* paragraph [0065] - paragraph [0075]; figures 7,9,11 *<br>----- | 1,4,8 | |
| Y | EP 1 732 245 A (SAMSUNG ELECTRONICS CO LTD [KR]) 13 December 2006 (2006-12-13)<br>* paragraph [0017] - paragraph [0025]; figures 2,3 *<br>* paragraph [0033] - paragraph [0046]; claims 1-9 *<br>----- | 1,4,8 | |
| Y | US 7 180 956 B1 (BANISTER BRIAN C [US]) 20 February 2007 (2007-02-20)<br>* abstract *<br>* column 4, line 26 - column 6, line 3 *<br>* column 8, line 36 - column 9, line 25 *<br>----- | 1,4,8 | |
| | | | TECHNICAL FIELDS SEARCHED (IPC) |
| A | EP 1 206 051 A (MATSUSHITA ELECTRIC IND CO LTD [JP]) 15 May 2002 (2002-05-15)<br>* paragraph [0087] *<br>----- | 1-10 | H04B<br>H04L<br>H01Q |
| A | EP 1 207 645 A (LUCENT TECHNOLOGIES INC [US]) 22 May 2002 (2002-05-22)<br>* paragraph [0002] - paragraph [0003] *<br>----- | 1-10 | |
| A | US 7 155 177 B2 (JOOTAR JITTRA [US] ET AL) 26 December 2006 (2006-12-26)<br>* abstract; figures 1-6 *<br>----- | 1-10 | |
| A | EP 0 948 145 A (MATSUSHITA ELECTRIC IND CO LTD [JP]) 6 October 1999 (1999-10-06)<br>* abstract *<br>* paragraph [0140] - paragraph [0157]; figures 19,20 *<br>-----<br>-/-- | 1-10 | |

1

The present search report has been drawn up for all claims

| Place of search | Date of completion of the search | Examiner |
|---|---|---|
| The Hague | 27 June 2008 | Angrabeit, Frank |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................
& : member of the same patent family, corresponding document

EPO FORM 1503 03.82 (P04C01)

European Patent Office

# EUROPEAN SEARCH REPORT

Application Number
EP 08 10 1949

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | EP 1 909 406 A (FUJITSU LTD [JP]) 9 April 2008 (2008-04-09) * figures 1,5,6 * ----- | 1,4,8 | |
| E | EP 1 892 850 A (FUJITSU LTD [JP]) 27 February 2008 (2008-02-27) * figures 1-3 * ----- | 1,4,8 | |
| | | | TECHNICAL FIELDS SEARCHED (IPC) |

The present search report has been drawn up for all claims

1

| Place of search | Date of completion of the search | Examiner |
|---|---|---|
| The Hague | 27 June 2008 | Angrabeit, Frank |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 08 10 1949

This annex lists the patent family members relating to the patent documents cited in the above-mentioned European search report.
The members are as contained in the European Patent Office EDP file on
The European Patent Office is in no way liable for these particulars which are merely given for the purpose of information.

27-06-2008

| Patent document cited in search report | | Publication date | Patent family member(s) | | | Publication date |
|---|---|---|---|---|---|---|
| WO 2006070478 | A | 06-07-2006 | CN | 101091344 | A | 19-12-2007 |
| | | | EP | 1833186 | A1 | 12-09-2007 |
| | | | US | 2007243831 | A1 | 18-10-2007 |
| EP 1833186 | A | 12-09-2007 | CN | 101091344 | A | 19-12-2007 |
| | | | WO | 2006070478 | A1 | 06-07-2006 |
| | | | US | 2007243831 | A1 | 18-10-2007 |
| EP 1732245 | A | 13-12-2006 | CN | 1878025 | A | 13-12-2006 |
| | | | JP | 2006345531 | A | 21-12-2006 |
| | | | KR | 20060130806 | A | 20-12-2006 |
| | | | US | 2006279460 | A1 | 14-12-2006 |
| US 7180956 | B1 | 20-02-2007 | NONE | | | |
| EP 1206051 | A | 15-05-2002 | AU | 6789301 | A | 14-01-2002 |
| | | | CN | 1383631 | A | 04-12-2002 |
| | | | WO | 0203571 | A1 | 10-01-2002 |
| | | | JP | 2002026790 | A | 25-01-2002 |
| | | | US | 2002168946 | A1 | 14-11-2002 |
| EP 1207645 | A | 22-05-2002 | CA | 2361886 | A1 | 16-05-2002 |
| | | | CN | 1354610 | A | 19-06-2002 |
| | | | JP | 2002217752 | A | 02-08-2002 |
| US 7155177 | B2 | 26-12-2006 | CN | 1762108 | A | 19-04-2006 |
| | | | MX | PA05008484 | A | 26-10-2005 |
| | | | US | 2004157567 | A1 | 12-08-2004 |
| | | | WO | 2004073207 | A1 | 26-08-2004 |
| EP 0948145 | A | 06-10-1999 | CN | 1235498 | A | 17-11-1999 |
| | | | JP | 3464606 | B2 | 10-11-2003 |
| | | | JP | 11289293 | A | 19-10-1999 |
| | | | US | 6470194 | B1 | 22-10-2002 |
| EP 1909406 | A | 09-04-2008 | CN | 101159464 | A | 09-04-2008 |
| | | | JP | 2008092433 | A | 17-04-2008 |
| | | | KR | 20080031615 | A | 10-04-2008 |
| | | | US | 2007281746 | A1 | 06-12-2007 |
| EP 1892850 | A | 27-02-2008 | CN | 101162930 | A | 16-04-2008 |
| | | | JP | 2008053933 | A | 06-03-2008 |
| | | | KR | 20080019174 | A | 03-03-2008 |
| | | | US | 2008051150 | A1 | 28-02-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007045516 A
- JP 2005522086 A